(19) Europäisches Patentamt
European Patent Office
Office européen des brevets

(11) **EP 4 613 783 A1**

(12) **EUROPEAN PATENT APPLICATION**
published in accordance with Art. 153(4) EPC

(43) Date of publication:
**10.09.2025 Bulletin 2025/37**

(21) Application number: **23885609.0**

(22) Date of filing: **25.10.2023**

(51) International Patent Classification (IPC):
**C08F 2/18** (2006.01)      **C08F 6/24** (2006.01)

(52) Cooperative Patent Classification (CPC):
**C08F 2/18; C08F 6/24**

(86) International application number:
**PCT/JP2023/038459**

(87) International publication number:
**WO 2024/095851 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.10.2022   JP 2022174055**

(71) Applicant: **Zeon Corporation**
**Tokyo 100-8246 (JP)**

(72) Inventors:
• **HATA, Seitaro**
  **Tokyo 100-8246 (JP)**
• **TSUMURA, Ryo**
  **Tokyo 100-8246 (JP)**

(74) Representative: **Kraus & Lederer PartGmbB**
**Thomas-Wimmer-Ring 15**
**80539 München (DE)**

(54) **HOLLOW PARTICLES, MANUFACTURING METHOD OF HOLLOW PARTICLES, RESIN COMPOSITION AND RESIN STRUCTURE**

(57)      To provide hollow particles having a low dielectric dissipation factor. Hollow particles comprising a shell, which contains a resin, and a hollow portion surrounded by the shell, wherein a percentage of particles having a circularity of 0.85 or less is 10% by mass or less; wherein a void ratio is 50% or more; wherein a content of an unreacted polymerizable monomer is 100 ppm or less; and wherein an electric conductivity of an aqueous dispersion of the hollow particles, in which the hollow particles in a volumetric amount of 0.35 cm$^3$ are dispersed in 100 mL of deionized water, is 30 µS/cm or less.

FIG. 1

EP 4 613 783 A1

## Description

Technical Field

The present disclosure relates to hollow particles, a method for producing the hollow particles, a resin composition comprising the hollow particles, and a resin structure comprising the hollow particles.

Background Art

Hollow particles (hollow resin particles) have a hollow in their interior. Accordingly, they are added and used in resins, coating materials, various kinds of molded products and so on, for the purpose of weight reduction, heat insulation, a decrease in permittivity, etc. Their application covers a wide range of fields, such as automobiles, bicycles, aviation, electric, electronics, architecture, household appliances, containers, stationery products, tools and footwear.

Hollow particles can be produced by, for example, a bulk polymerization method, a solution polymerization method, a dispersion polymerization method, a suspension polymerization method, an emulsion polymerization method or the like. In a suspension polymerization method, hollow particles are obtained by dispersing the droplets of a monomer composition containing a polymerizable monomer and a hydrophobic solvent in an aqueous medium containing a dispersion stabilizer and polymerizing the composition.

As the method for producing the hollow particles by suspension polymerization, for example, Patent Document 1 discloses a method in which the polymerization of the first polymerizable monomer containing a crosslinkable monomer and the polymerization of the second polymerizable monomer having a solubility of 0.3 g/L or more in distilled water at 20°C, are carried out in two stages at certain times. Patent Document 1 describes that the content of an unreacted polymerizable monomer in the obtained hollow particles was from 10 ppm to 731 ppm.

Patent Document 2 discloses a method in which a polar resin is incorporated in a monomer composition and a sparingly water-soluble inorganic metal salt is used as a dispersion stabilizer. Patent Document 2 describes that the amount of residual volatile compounds such as a non-reactive hydrocarbon solvent and an unreacted monomer used in the production process and remaining in the obtained hollow particles, was from 0.03% by mass to 0.12% by mass.

Citation List

[Patent Documents]

Patent Document 1: International Publication No. WO2022/071276
Patent Document 2: International Publication No. WO2021/112117

Summary

Technical Problem

For example, in the electric or electronics field, hollow particles are sometimes added to an insulation material for the purpose of decreasing the permittivity and dielectric dissipation factor of the insulation material. Hollow particles which are added to decrease the dielectric dissipation factor of various kinds of materials are preferred to have a lower dielectric dissipation factor.

An object of the present disclosure is to provide hollow particles having a low dielectric dissipation factor, a method for producing the hollow particles, a resin composition comprising the hollow particles, and a resin structure comprising the hollow particles.

Solution to Problem

The inventors of the present disclosure found that in hollow particles having the shell formed from a polymer, a residual unreacted polymerizable monomer, and a metal or surfactant, which is contained in a manner that it can be easily eluted into water, are likely to increase the dielectric dissipation factor of the hollow particles. Finally, they achieved the present disclosure, based on this finding.

According to the present disclosure, there are provided hollow particles comprising a shell, which contains a resin, and a hollow portion surrounded by the shell,

wherein a percentage of particles having a circularity of 0.85 or less is 10% by mass or less;
wherein a void ratio is 50% or more;
wherein a content of an unreacted polymerizable monomer is 100 ppm or less; and
wherein an electric conductivity of an aqueous dispersion of the hollow particles, in which the hollow particles in a volumetric amount of 0.35 cm$^3$ are dispersed in 100 mL of deionized water, is 30 $\mu$S/cm or less.

According to the present disclosure, there is provided a method for producing the hollow particles of the present disclosure,
the method comprising:

preparing a mixture liquid containing a polymerizable monomer, a hydrophobic solvent, a polymerization initiator, a dispersion stabilizer and an aqueous medium,
suspending the mixture liquid to prepare a suspension in which droplets of a monomer composition containing the polymerizable monomer, the hydrophobic solvent and the polymerization initiator are dispersed in the aqueous medium,
subjecting the suspension to a polymerization reaction to prepare a precursor composition in which precursor particles comprising a shell, which contains a resin, and a hollow portion surrounded by the shell and filled with the hydrophobic solvent, are dispersed in the aqueous medium,
removing the hydrophobic solvent from the precursor particles to obtain an aqueous dispersion of the hollow particles, by bubbling a gas into the precursor composition while stirring the precursor composition in a stirring tank, and
washing the hollow particles for removal of the dispersion stabilizer remaining therein.

According to the present disclosure, there is provided a resin composition comprising a matrix resin and the hollow particles of the present disclosure.
According to the present disclosure, there is provided a resin structure comprising a matrix resin and the hollow particles of the present disclosure.

Advantageous Effects of Invention

According to the present disclosure as described above, hollow particles having a low dielectric dissipation factor are provided. In addition, according to the present disclosure, the method for producing the hollow particles, the resin composition comprising the hollow particles, and the resin structure comprising the hollow particles are provided.

Brief Description of Drawings

[FIG. 1] FIG. 1 is a diagram illustrating an example of the method for producing the hollow particles of the present disclosure.
[FIG. 2] FIG. 2 is a diagram illustrating an example of the stirring apparatus used in the solvent removal step.

Description of Embodiments

Hereinafter, the hollow particle of the present disclosure, the method for producing the hollow particles of the present disclosure, the resin composition of the present disclosure, and the resin structure of the present disclosure will be described in detail.
In the present disclosure, "to" which shows a numerical range is used to describe a range in which the numerical values described before and after "to" indicate the lower limit value and the upper limit value.

1. Hollow particles

The hollow particles of the present disclosure are hollow particles comprising a shell, which contains a resin, and a hollow portion surrounded by the shell,

wherein the percentage of particles having a circularity of 0.85 or less is 10% by mass or less;
wherein the void ratio is 50% or more;
wherein the content of an unreacted polymerizable monomer is 100 ppm or less; and
wherein the electric conductivity of an aqueous dispersion of the hollow particles, in which the hollow particles in a volumetric amount of 0.35 cm$^3$ are dispersed in 100 mL of deionized water, is 30 $\mu$S/cm or less.

In the aqueous dispersion obtained by dispersing the hollow particles in the deionized water, the electric conductivity tends to increase as the amount of the metal or ionic surfactant eluted from the hollow particles increases. It is estimated that the metal and ionic surfactant eluted from the hollow particles into the aqueous dispersion are attached to the particle surface while being in a state where they can be easily released from the hollow particles, and the metal and ionic surfactant are attached to the particle surface when the particles are in a dry state. Accordingly, the electric conductivity of the aqueous dispersion can be used as the index of the amount of the metal and ionic surfactant attached to the surface of the hollow particles in a dry state.

The dielectric dissipation factor of the hollow particles of the present disclosure is low. The dielectric dissipation factor is the degree of energy loss when a part of the energy is turned into heat and lost when an electric field is applied. In the hollow particles, the dielectric dissipation factor can be decreased by suppressing the molecular motion of the shell, thereby reducing energy loss. In the shell formed with the resin (the polymer), the molecular motion of the residual unreacted polymerizable monomer is relatively active. It is estimated that the dielectric dissipation factor of the hollow particles of the present disclosure is decreased since the amount of the residual unreacted polymerizable monomer is small and, as a result, the molecular motion of the shell is suppressed. If the metal is attached to the particle surface, the particles are subjected to polarization when an electric field is applied; therefore, the dielectric dissipation factor of the particles is increased. If the surfactant is attached to the particle surface, water in the air is likely to be absorbed, and the dielectric dissipation factor of the particles is increased by the water attached to the particle surface. It is estimated that the dielectric dissipation factor of the hollow particles of the present disclosure is decreased since the amount of the metal and surfactant attached to the particle surface is small. It is also estimated that the dielectric dissipation factor of the hollow particles of the present disclosure is further decreased by the synergy between the fact that the amount of the residual unreacted polymerizable monomer is small and the fact that the amount of the metal and surfactant attached to the particle surface is small.

The hollow particles of the present disclosure have excellent dielectric property since the percentage of particles having a circularity of 0.85 or less is small. The particles having a circularity of 0.85 or less are typically cracked particles or deformed particles such as dented particles. In the present disclosure, such particles may be referred to as "irregular-shaped particles". Such irregular-shaped hollow particles have a low void ratio compared to spherical hollow particles; therefore, they are poor in dielectric property. Accordingly, the dielectric property of the hollow particles can be improved by decreasing the percentage of the irregular-shaped particles included in the hollow particles. In the present disclosure, as the relative permittivity and dielectric dissipation factor decrease, the dielectric property improves.

Also, the irregular-shaped particles have the following problem: compared to spherical particles, the irregular-shaped particles are poor in dispersibility since they are likely to aggregate when dispersed in the matrix resin. In addition, such irregular-shaped particles have the following problem: they are poor in pressure resistance compared to spherical particles, since external pressure is likely to be locally applied thereto. When the irregular-shaped particles are dispersed in the matrix resin, aggregates are likely to be formed; external pressure is likely to be applied to the aggregates; and the pressure resistance further deteriorates, accordingly. Therefore, the dispersibility and pressure resistance of the hollow particles can be improved by decreasing the percentage of the irregular-shaped particles included in the hollow particles.

There is another problem that an abnormality such as ion migration is likely to occur in an electronic circuit board containing hollow particles. Accordingly, there is a demand for hollow particles excellent in performance stability.

The inventors of the present disclosure found the following: when the contents of the metal and ionic surfactant eluted from the hollow particles into the aqueous dispersion increase, ion migration is likely to occur on the electronic circuit board containing the hollow particles. It is also estimated that when the metal or surfactant is attached to the surface of the hollow particles, on an electronic circuit board in which the hollow particles are contained in an insulating resin layer, the metal or surfactant absorbs water and is likely to be ionized in high-humidity environment; a dendrite is likely to be generated; and ion migration is likely to occur, accordingly. When, among surfactants, the ionic surfactant is attached to the surface of the hollow particles, due to the large content of the ionic component of the surfactant around the surface of the hollow particles, metal ionization is further promoted, and ion migration is more likely to occur, accordingly.

The hollow particles of the present disclosure are hollow particles in which the contents of a metal and a surfactant, which are contained in a manner that they can be easily eluted into water, are sufficiently small. Accordingly, a reduction in the performance stability of the hollow particles, which is due to the metal and the surfactant, are suppressed. In the present disclosure, the performance stability of the hollow particles improves, as a change in the properties of materials containing the hollow particles, which is induced by the hollow particles, is less likely to occur. In the hollow particles of the present disclosure, both the content of the metal and that of the surfactant are sufficiently small. Accordingly, compared to the case of decreasing the content of only one of them, the effect of improving the performance stability is significantly excellent. Also, the hollow particles of the present disclosure are highly effective in suppressing the occurrence of ion migration on electronic circuit boards containing the hollow particles since the content of, among surfactants, the ionic surfactant present on the particle surface is decreased.

In the present disclosure, the aqueous dispersion of the hollow particles subjected to electric conductivity measurement may further contain a dispersant, as long as the electric conductivity is 2 μS/cm or less in the absence of the hollow particles. The type and content of the dispersant is appropriately adjusted so that the hollow particles are uniformly dispersed. The aqueous dispersion of the hollow particles subjected to electric conductivity measurement is found to be in such a state by visual confirmation, that powder (the hollow particles) is not present in the upper part and is entirely dispersed in the water.

As the dispersant that can be used in the aqueous dispersion of the hollow particles for electric conductivity measurement, such a dispersant can be appropriately selected and used, that when added to deionized water, it does not cause a change in the pH or electric conductivity of the deionized water. For example, a non-ionic surfactant can be used.

The non-ionic surfactant is not particularly limited, and it can be selected from known non-ionic surfactants and used. As the non-ionic surfactant, examples include, but are not limited to, a polyoxyalkylene-type non-ionic surfactant such as a higher alcohol alkylene oxide adduct, an alkylphenol alkylene oxide adduct, a fatty acid alkylene oxide adduct, a higher alkylamine alkylene oxide adduct, a polyhydric alcohol aliphatic ester alkylene oxide adduct, a polypropylene glycol ethylene oxide adduct, a fatty acid amide alkylene oxide adduct, and a polyoxyalkylene styrenated phenyl ether; a polyhydric alcohol-type non-ionic surfactant such as a polyethylene oxide, a fatty acid ester of glycerin, an alkyl glycoxide, a fatty acid ester of pentaerythritol, a fatty acid ester of sorbit or sorbitan, a sucrose fatty acid ester, an alkyl ether of polyhydric alcohol, and an aliphatic amide of alkanolamine; and a non-ionic polymer compound containing both a hydrophilic group and a hydrophobic group, such as polyvinyl alcohol and polyvinylpyrrolidone. Of them, polyoxyalkylene-type non-ionic surfactant is preferably used.

In the aqueous dispersion of the hollow particles, the concentration of the non-ionic surfactant is not particularly limited. For example, it can be from 0.05% by mass to 1% by mass.

Also in the present disclosure, the hollow particles added to the aqueous dispersion used for electric conductivity measurement, are hollow particles just before use. The hollow particles just before use are, in the case where they are hollow particles that are mixed and used with different materials, those just before being mixed with the different materials. The hollow particles just before use are, in the case where they are hollow particles that are used alone as a coating material or the like, those just before being used for that purpose. In the case of measuring the electric conductivity of the aqueous dispersion of hollow particles produced in the form of a dispersant, the measurement is carried out as follows: after separating the hollow particles from the dispersant, they are dried by the same method as the drying step of the below-described hollow particle production method; an aqueous dispersion is prepared by dispersing the dried hollow particles with a volume of 0.35 cm$^3$ in 100 mL of deionized water; and the electric conductivity of the aqueous dispersion is measured.

In the present disclosure, as the hollow particles with a volume of 0.35 cm$^3$, hollow particles having the weight (g) obtained by the following formula (1) are weighed out, collected and used. In the following formula (1), the apparent density $D_1$ of the hollow particles is the same as the apparent density $D_1$ of the hollow particles measured to obtain the void ratio described below.

$$\text{Weight (g) of the hollow particles with a volume of 0.35 cm}^3 = \text{Apparent density } D_1 \text{ (g/cm}^3) \text{ of the hollow particles} \times 0.35 \text{ (cm}^3) \qquad \text{Formula (1)}$$

The aqueous dispersion of the hollow particles is only required to have an electric conductivity of 30 μS/cm or less. Since the dielectric property and performance stability of the hollow particles tend to improve as the electric conductivity decreases, the electric conductivity is preferably 25 μS/cm or less, more preferably 20 μS/cm or less, still more preferably 15 μS/cm or less, even more preferably 10 μS/cm or less, and particularly preferably 9 μS/cm or less. The lower limit of the electric conductivity is not particularly limited. For example, it may be 0.5 μS/cm or more.

The pH of the aqueous dispersion of the hollow particles, which is subjected to the above-described electric conductivity measurement, is preferably 6.5 or more and 7.5 or less. The pH of the aqueous dispersion tends to increase as the amount of the metal eluted from the hollow particles into water increases, and the pH tends to be basic (more than 7.5) when the ionic surfactant content is equal to or more than a certain value. When the pH of the aqueous dispersion of the hollow particles is within the above range, the dielectric property and performance stability of the hollow particles tend to improve. The pH of the aqueous dispersion of the hollow particles is more preferably 6.6 or more and 7.4 or less, and still more preferably 6.7 or more and 7.3 or less.

In the hollow particles of the present disclosure, when the hollow particles having a mass M1 are refluxed for 6 hours in a Soxhlet extractor using tetrahydrofuran as a solvent to obtain an extract and when a residue obtained by removal of the tetrahydrofuran from the extract has a mass M2, the post THF extraction residue percentage which is obtained as the percentage of M2 relative to M1, is preferably 80% or more, more preferably 85% or more, and still more preferably 90% or more. The post THF extraction residue percentage can be used as the index of the crosslinking density of the resin-forming shell. When the post THF extraction residue percentage is equal to or more than the lower limit value, the hollow particles tend to have excellent strength and dielectric property.

The upper limit of the post THF extraction residue percentage is not particularly limited. From the viewpoint of ease of production, for example, it may be 98% or less, or it may be 96% or less.

As the method for obtaining the residue by removing the tetrahydrofuran from the extract, examples include, but are not limited to, the following method: the THF is removed from the extract by evaporation to obtain a nonvolatile component, and the obtained nonvolatile component is subjected to vacuum drying at 50°C for one hour, thereby obtaining the residue.

The hollow particles of the present disclosure are hollow particles comprising a shell (outer shell), which contains a resin, and a hollow portion surrounded by the shell.

The resin contained in the shell is typically the polymer of the polymerizable monomer used in the below-described hollow particle production method of the present disclosure. Conventional hollow particles which the shell is formed from the polymer, generally contain a small amount of residual unreacted polymerizable monomer. In the hollow particles of the present disclosure, the amount of the residual unreacted polymerizable monomer is decreased.

In the hollow particles of the present disclosure, the content of the unreacted polymerizable monomer is 100 ppm or less. From the viewpoint of decreasing the dielectric dissipation factor of the hollow particles, it is preferably 80 ppm or less, more preferably 70 ppm or less, still more preferably 60 ppm or less, and even more preferably 50 ppm or less.

The content of the unreacted polymerizable monomer is the ratio of the mass of the residual unreacted polymerizable monomer contained in the hollow particles to the mass of the hollow particles.

The unreacted polymerizable monomer can be extracted from the hollow particles by dissolving the unreacted polymerizable monomer in the solvent. Accordingly, the content of the unreacted polymerizable monomer can be obtained by, for example, gas chromatography measurement of the extract obtained by extracting the unreacted polymerizable monomer from the hollow particles.

To the extent that does not impair the effects of the present disclosure, the shell may further contain an additive which is different from the resin. In the case of containing the additive, the content of the resin in the shell is preferably 96% by mass or more, more preferably 97% by mass or more, still more preferably 98% by mass or more, and even more preferably 99% by mass or more.

In the hollow particles of the present disclosure, the content of the metal is preferably 100 ppm or less, more preferably 80 ppm or less, still more preferably 60 ppm or less, even more preferably 35 ppm or less, and particularly preferably 30 ppm or less. The metal content is the ratio of the total mass of the metal components contained in the hollow particles to the mass of the hollow particles. Since the metal contained in the hollow particles of the present disclosure is generally derived from the dispersion stabilizer, the metal content can be adjusted to the upper limit value or less by sufficiently removing the dispersion stabilizer from the hollow particles.

When the metal content in the hollow particles is equal to or less than the upper limit value, the dielectric property and performance stability of the hollow particles can be improved; moreover, the drying time can be shortened in the below-described drying step.

The metal content in the hollow particles can be measured by ICP atomic emission spectroscopy. The metal species can be specified by X-ray fluorescence spectrometry (XRF). In this method, the measurement limit of the metal content in the hollow particles is generally 5 ppm.

Among the hollow particles of the present disclosure, those having the following properties have a particularly low dielectric dissipation factor and excellent performance stability: the content of the unreacted polymerizable monomer is 25 ppm or less; the electric conductivity of the aqueous dispersion of the hollow particles, in which the hollow particles in a volumetric amount of 0.35 $cm^3$ are dispersed in 100 mL of deionized water, is 3.5 $\mu$S/cm or less; and the content of the metal is 15 ppm or less.

In the hollow particles of the present disclosure, the total content of the surfactant and organic or inorganic water-soluble polymer stabilizer (hereinafter, they are simply referred to as "surfactant and so on") present on the particle surface is preferably 200 ppm or less, more preferably 100 ppm or less, and still more preferably 50 ppm or less. When the content of the surfactant and so on present on the surface of the hollow particles, is equal to or less than the upper limit value, the dielectric property and the performance stability tend to improve. By using only the inorganic dispersion stabilizer as the dispersion stabilizer in the below-described process of producing the hollow particles, the content of the surfactant and so on present on the surface of the hollow particles can be adjusted to less than the measurement limit value.

In the present disclosure, the content of the surfactant and so on present on the surface of the hollow particles is the ratio of the mass of the surfactant and so on present on the surface of the hollow particles to the mass of the hollow particles. The surfactant and so on present on the surface of the hollow particles can be extracted by, for example, ultrasonic treatment of the hollow particles in water. The type and mass of the surfactant and so on extracted into water can be identified by the peak position and peak intensity of a $^1$H-NMR spectrum. In this method, the measuring limit of the amount of the surfactant and so on present on the surface of the hollow particles, is generally 0.05 ppm.

In the hollow particles of the present disclosure, the hollow portion is a hollow space clearly distinguished from the shell. The shell of the hollow particles may have a porous structure. In this case, the hollow portion has a size that is clearly distinguishable from many minute spaces uniformly dispersed in the porous structure. From the viewpoint of dielectric property and so on, the hollow particles of the present disclosure preferably have a solid shell.

From the viewpoint of exerting excellent dielectric property, the hollow portion of the hollow particles of the present disclosure is preferably filled with gas such as air.

The hollow particles of the present disclosure may have one or two or more hollow portions. From the viewpoint of maintaining good balance between the high void ratio and the mechanical strength and from the viewpoint of improving the dielectric property, the hollow particles preferably have only one hollow portion.

When the hollow particles of the present disclosure are particles having only one hollow portion, the hollow particles of the present disclosure may contain, as impurities, a small amount of hollow particles having two or more hollow portions or a small amount of particles not having a hollow portion. In the hollow particles of the present disclosure, the percentage of the number of the particles having only one hollow portion is preferably 90% or more, and more preferably 95% or more.

The shell of the hollow particles of the present disclosure and, when the hollow particles have two or more hollow portions, a partition separating the adjacent hollow portions from each other may be porous. From the viewpoint of improving the dielectric property, the shell and the partition are preferably solid.

The shape of the hollow particles of the present disclosure may be a spherical shape, an ellipsoidal shape or an irregular shape, for example. From the viewpoint of the dielectric property, dispersibility and pressure resistance of the hollow particles, the shape is preferably a spherical shape.

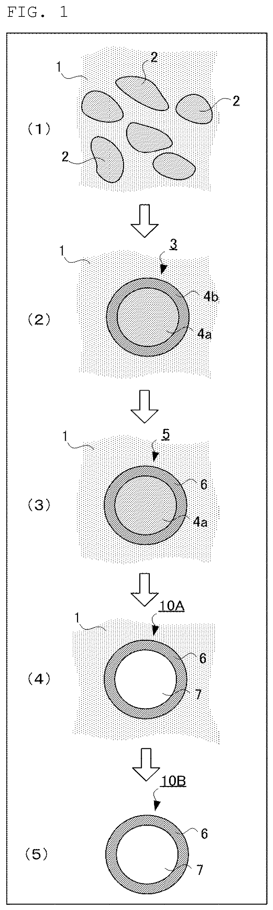

An example of the image of the shape of the hollow particles of the present disclosure, is a bag made of a thin film and inflated with gas. A cross-section of the bag is like the hollow particle 10B shown in the diagram (5) of FIG. 1. In this example, one thin film is provided on the outside, and the interior is filled with gas.

The hollow portion of the hollow particles can be determined by, for example, SEM observation of a cross section of the particles or TEM observation of the particles as they are. The shape of the particles can be determined by SEM or TEM observation of the hollow particles, for example.

The hollow particles of the present disclosure may contain, as impurities, small amounts of particles having a low circularity, such as cracked or deformed particles. In 100% by mass of the hollow particles of the present disclosure, the percentage of the particles having a circularity of 0.85 or less is preferably 10% by mass or less, more preferably 7% by mass or less, still more preferably 5% by mass or less, even more preferably 4% by mass or less, and particularly preferably 3% by mass or less. By controlling the stirring condition of the suspension step, polymerization step and solvent removal step described later, the percentage of the particles having a circularity of 0.85 or less can be adjusted to the upper limit value or less.

The term "circularity" is defined as a value obtained by dividing the equivalent circular area diameter which is the diameter of a circle having the same area as the projected image of a particle, by the equivalent circular perimeter diameter which is the diameter of a circle having the same perimeter as the projected image of the particle. The circularity is 1 when the hollow particles are perfectly spherical, and it gets smaller as the surface shape of the hollow particles is more complex.

The average circularity of the hollow particles of the present disclosure may be from 0.950 to 0.995.

In the present disclosure, the circularity is measured by use of a flow particle image analyzer at an image resolution of 0.185 um/pixel.

As the flow particle image analyzer, for example, IF-3200 (product name, manufactured by JASCO International Co., Ltd.) is preferably used. The measurement sample is prepared by, for example, performing a dispersion treatment of a mixture liquid, which is obtained by adding 0.10 g to 0.12 g of the hollow particles to an aqueous solution of linear alkylbenzene sulfonate (concentration 0.3%), in an ultrasonic cleaner for 5 minutes.

The average circularity is the average of the circularities of randomly selected 1000 to 3000 particles.

The void ratio of the hollow particles of the present disclosure is 50% or more. When the void ratio is 50% or more, the hollow particles are excellent in dielectric property, and they are also excellent in lightness in weight, heat insulation, and so on. The void ratio of the hollow particles of the present disclosure is preferably 55% or more, more preferably 60% or more, and still more preferably 70% or more. An air layer has a dielectric dissipation factor of 0, and the dielectric dissipation factor decreases as the percentage of the air layer in the hollow particles increases. Accordingly, the hollow particles with a higher void ratio achieve a lower dielectric dissipation factor.

The upper limit of the void ratio of the hollow particles is not particularly limited. From the viewpoint of suppressing a decrease in the strength of the hollow particles and improving the collapse-resistance of the hollow particles, the void ratio is preferably 90% or less, more preferably 85% or less, and still more preferably 80% or less.

The void ratio of the hollow particles can be calculated from the apparent density $D_1$ and true density $D_0$ of the hollow particles.

A method for measuring the apparent density $D_1$ of the hollow particles is as follows. First, approximately 30 cm$^3$ of the hollow particles are introduced into a measuring flask with a volume of 100 cm$^3$, and the mass of the introduced hollow particles is precisely weighed. Next, the measuring flask in which the hollow particles are introduced, is precisely filled with isopropanol up to the marked line while care is taken so that air bubbles do not get in. The mass of the isopropanol added to the measuring flask is precisely weighed, and the apparent density $D_1$ (g/cm$^3$) of the hollow particles is calculated by the following formula (I).

```
    Apparent density D₁
    = [Mass of the hollow particles] / (100 - [Mass of the
isopropanol] / [Specific gravity of the isopropanol at the
measuring temperature])   Formula (I)
```

The apparent density $D_1$ is equivalent to the specific gravity of the whole hollow particle in the case where the hollow portion is regarded as a part of the hollow particle.

A method for measuring the true density $D_0$ of the hollow particles is as follows. The hollow particles are pulverized in advance; approximately 10 g of the pulverized hollow particles are introduced into a measuring flask with a volume of 100 cm$^3$; and the mass of the introduced pulverized particles is precisely weighed. After that, similarly to the measurement of the apparent density mentioned above, isopropanol is added to the measuring flask; the mass of the isopropanol is precisely weighed; and the true density $D_0$ (g/cm$^3$) of the hollow particles is calculated by the following formula (II).

True density $D_0$ = [Mass of the pulverized hollow particles] / (100 - [Mass of the isopropanol] / [Specific gravity of the isopropanol at the measuring temperature])     Formula (II)

The true density $D_0$ is equivalent to the specific gravity of the shell portion alone of the hollow particle. As is clear from the measurement method mentioned above, when calculating the true density $D_0$, the hollow portion is not regarded as a part of the hollow particle.

The void ratio (%) of the hollow particles is calculated by the following formula (III) from the apparent density $D_1$ and the true density $D_0$.

Void ratio (%) = 100 - (Apparent density $D_1$ / True density $D_0$) $\times$ 100     Formula (III)

When the particle diameter at 50% cumulative volume of the hollow particles of the present disclosure is expressed as D50 and the particle diameter at 95% cumulative volume of the hollow particles is expressed as D95, the ratio of D95 to D50 (D95/D50) is preferably 4.0 or less, more preferably 3.5 or less, still more preferably 3.0 or less, and even more preferably less than 2.0. When the ratio (D95/D50) is equal to or less than the upper limit value, the hollow particles tend to obtain excellent dielectric property. Also when the ratio (D95/D50) is equal to or less than the upper limit value, hollow particles with small variations in performance can be obtained. Also when the ratio (D95/D50) is equal to or less than the upper limit value, a product having uniform thickness can be produced in the case of producing, for example, a sheet-shaped resin structure comprising the hollow particles of the present disclosure. The lower limit of the ratio (D95/D50) is not particularly limited. From the viewpoint of ease of production, the ratio (D95/D50) may be 1.1 or more.

The D50 and D95 of the hollow particles can be obtained by, for example, measuring the particle diameter of the hollow particles with a particle size distribution measuring device by the Coulter counter method and from a volume-based particle size distribution thereof. The Coulter counter method is a method for measuring the diameter of particles by the electric resistance method called the Coulter Principle.

The particle diameter at 50% cumulative volume (D50) of the hollow particles of the present disclosure is preferably 1.0 μm or more, more preferably 1.5 μm or more, and still more preferably 2.0 μm or more as the lower limit. On the other hand, it is preferably 10.0 μm or less, more preferably 7.0 μm or less, still more preferably 5.0 μm or less, and even more preferably 4.0 μm or less as the upper limit.

When the D50 of the hollow particles is equal to or more than the lower limit value, the dispersibility of the hollow particles improves; a uniform shell is easily formed; and shell thickness non-uniformity is suppressed, and the pressure resistance of the hollow particles tends to improve, accordingly. On the other hand, when the D50 of the hollow particles is equal to or less than the upper limit value, since the particle diameter is sufficiently small, the hollow particles are preferably used as a material of a substrate such as an electronic circuit board, and they can be added to thin small substrates.

The dielectric dissipation factor of the hollow particles of the present disclosure at a frequency of 10 GHz, is preferably $1.00 \times 10^{-3}$ or less, more preferably $9.00 \times 10^{-4}$ or less, still more preferably $8.00 \times 10^{-4}$ or less, even more preferably $6.00 \times 10^{-4}$ or less, and particularly preferably $4.00 \times 10^{-4}$ or less. The lower limit of the dielectric dissipation factor is not particularly limited. For example, it may be $1.00 \times 10^{-4}$ or more.

The dielectric dissipation factor of the hollow particles of the present disclosure at a frequency of 10 GHz may be more than $1.00 \times 10^{-3}$. In this case, the dielectric dissipation factor of the hollow particles of the present disclosure at a frequency of 10 GHz is preferably $1.00 \times 10^{-2}$ or less, more preferably $9.00 \times 10^{-3}$ or less, and still more preferably $8.00 \times 10^{-3}$ or less.

The relative permittivity of the hollow particles of the present disclosure at a frequency of 10 GHz is preferably 1.60 or less, more preferably 1.40 or less, still more preferably 1.37 or less, and even more preferably 1.36 or less. The lower limit of the relative permittivity is not particularly limited, and it may be 1.00 or more, for example.

In the present disclosure, the relative permittivity and dielectric dissipation factor of the hollow particles are measured by use of a perturbation-type measuring device.

In the present disclosure, the thermal decomposition initiation temperature of the hollow particles is preferably 345°C or more, and more preferably 350°C or more. When the thermal decomposition initiation temperature is equal to or more than the lower limit value, the hollow particles are excellent in heat resistance. The upper limit of the thermal decomposition initiation temperature of the hollow particles is not particularly limited. For example, it may be 400°C or less.

In the present disclosure, the thermal decomposition initiation temperature of the hollow particles can be measured as a 5% weight reduction temperature, using a TG-DTA device in a nitrogen atmosphere, in the condition of a nitrogen flow rate of 230 mL/min and a temperature increase rate of 10°C/min.

As the applications of the hollow particles of the present disclosure, examples include, but are not limited to, additives for the following: materials such as a low dielectric material, a heat insulation material, a sound insulation material and a light reflective material, which are used in various kinds of fields such as the automotive field, the electronics field, the electric field, the architecture field, the aviation field and the space field, and materials such as a light diffusion material (e.g., a light diffusion film or plate); food containers; footwears such as sports shoes and sandals; components of household appliances; components of bicycles; stationery supplies; tools; filaments of 3D printers; and floating buoyant materials such as syntactic foam. Especially because the hollow particles of the present disclosure are low in dielectric dissipation factor, excellent in dielectric property and excellent in performance stability, they are preferably used as a highly-reliable material in the electric or electronics field. For example, the hollow particles of the present disclosure are preferably used as an electronic circuit board material. More specifically, by incorporating the hollow particles of the present disclosure in the insulating resin layer of an electronic circuit board, the dielectric dissipation factor of the insulating resin layer can be decreased, while suppressing a failure attributable to the hollow particles. Also, the hollow particles of the present disclosure are preferably used as an additive used in semiconductor materials such as an interlayer insulation material, a dry film resist, a solder resist, a bonding wire, a magnet wire, a semiconductor encapsulating material, an epoxy encapsulating material, a molded underfill material, an underfill material, a die bonding paste, a buffer coating material, a copper-clad laminate, and a flexible substrate. Also, the hollow particles of the present disclosure are preferably used as an additive used in semiconductor materials for use in a high frequency device module, an antenna module, an automotive radar and so on. Of them, the hollow particles of the present disclosure are particularly preferable as an additive used in semiconductor materials such as an interlayer insulation material, a solder resist, a magnet wire, a semiconductor encapsulant, an epoxy encapsulating material, an underfill material, a buffer coating material, a copper-clad laminate and a flexible substrate. Also, the hollow particles of the present disclosure are particularly preferable as an additive used in semiconductor materials for use in a high frequency device module, an antenna module, an automotive radar and so on. The hollow particles of the present disclosure are applicable to not only semiconductor materials but also various kinds of electronic materials.

Also, the hollow particles of the present disclosure are useful as an additive for insulating resin sheets that are used for the production of electronic parts such as a printed circuit board. An insulating resin sheet containing the hollow particles of the present disclosure can be produced as follows, for example: a resin composition is prepared by mixing the hollow particles of the present disclosure and a thermoplastic resin, thermosetting resin, thermoplastic elastomer, or a mixture thereof, and the resin composition is formed into a sheet by applying the composition to one or both surfaces of a sheet-shaped substrate and drying the applied composition, by extrusion molding of the composition, by transferring the composition, etc., thereby producing the insulating resin sheet. When the resin or elastomer contained in the insulating resin sheet is adhesive, the insulating resin sheet can be used as an adhesive sheet. More specifically, it can be used as a bonding sheet, for example. A bonding sheet is a material for forming insulating adhesive layers which are used to attach a conductor layer and an organic insulating layer in the production of a multi-layer printed circuit board.

The hollow particles of the present disclosure have a high void ratio, are less likely to collapse, and have high heat resistance. Accordingly, the hollow particles have heat insulation properties and shock-absorbing properties (cushioning properties) required of an under-coating material, and they also have heat resistance in line with thermal paper uses. Further, the hollow particles of the present disclosure are useful as a plastic pigment that is excellent in gloss, hiding power, etc.

A useful component such as a perfume, a medicine, an agricultural chemical and an ink component can be enclosed in the interior of the hollow particles of the present disclosure by a means such as immersion treatment or depressurized or pressurized immersion treatment. Accordingly, the hollow particles in which such a useful component is enclosed, can be used for various applications in accordance with the component contained in the interior.

Also, the hollow particles of the present disclosure are suitable as a rust retardant. Since the hollow particles of the present disclosure are also useful as an additive for decreasing electric conductivity, for example, a coating material containing the hollow particles of the present disclosure can be used as a rust-resistant coating material (such as a coating primer and a lubricating coating material) for increasing the anticorrosivity and rust resistance of steel and so on. A rust-resistant additive may be included in the hollow particles added to rust-resistant coating materials.

2. Method for producing the hollow particles

The hollow particles of the present disclosure are produced by, for example, the production method described below, which is based on the suspension polymerization method. In the method for producing the hollow particles described below, the hollow particles containing a small amount of irregular-shaped particles can be obtained by controlling the stirring condition of the suspension step, the polymerization condition, the solvent removal step or the like.

An embodiment of the method for producing the hollow particles according to the present disclosure, is a method for producing the hollow particles, the method comprising:

preparing a mixture liquid containing a polymerizable monomer, a hydrophobic solvent, a polymerization initiator, a dispersion stabilizer and an aqueous medium,

suspending the mixture liquid to prepare a suspension in which droplets of a monomer composition containing the polymerizable monomer, the hydrophobic solvent and the polymerization initiator are dispersed in the aqueous medium,

subjecting the suspension to a polymerization reaction to prepare a precursor composition in which precursor particles comprising a shell, which contains a resin, and a hollow portion surrounded by the shell and filled with the hydrophobic solvent, are dispersed in the aqueous medium,

removing the hydrophobic solvent from the precursor particles to obtain an aqueous dispersion of the hollow particles, by bubbling a gas into the precursor composition while stirring the precursor composition in a stirring tank, and

washing the hollow particles for removal of the dispersion stabilizer remaining therein.

In the production method, by suspending the mixture liquid containing the polymerizable monomer, the hydrophobic solvent, the polymerization initiator, the dispersion stabilizer and the aqueous medium, phase separation occurs between the polymerizable monomer and the hydrophobic solvent. Accordingly, the suspension in which the droplets of the monomer composition are dispersed in the aqueous medium is prepared, the droplets having a distribution structure such that the polymerizable monomer is distributed on the surface side and the hydrophobic solvent is distributed in the center. By subjecting the suspension to a polymerization reaction, a polymer starts to precipitate on the surface of the droplets of the monomer composition, and the polymerization reaction is further developed. Accordingly, the surface of the droplets is cured to form the shell, thereby obtaining the hollow particles having the hollow portion filled with the hydrophobic solvent.

In the present disclosure, the hollow particles having the hollow portion filled with the hydrophobic solvent, may be considered as the intermediate of the hollow particles in which the hollow portion is filled with gas, and they may be referred to as the "precursor particles". Also in the present disclosure, the "precursor composition" means a composition containing the precursor particles.

In the hollow particle production methods described in Patent Documents 1 and 2, the hydrophobic solvent is removed from the precursor particles after the particles are washed for removal of the dispersion stabilizer. Such a method is problematic in that the precursor particles aggregate during the washing step, resulting in poor washability. It is estimated that since the precursor particles are not sufficiently washed, the amount of the metal and unreacted polymerizable monomer remaining in the obtained hollow particles is large, thereby causing an increase in the dielectric dissipation factor of the hollow particles. The inventors of the present disclosure found that a cause of the deteriorated washability is the large amount of the hydrophobic solvent and unreacted polymerizable monomer in the aqueous dispersion of the precursor particles used for the washing step. Based on this finding, they achieved the production method described above. In the above production method, after the hydrophobic solvent is removed from the precursor particles in the slurry, the hollow particles are washed for removal of the dispersion stabilizer; therefore, the hydrophobic solvent is removed from the hollow particles before the washing step, and the amount of the residual unreacted polymerizable monomer is decreased. Accordingly, it is estimated that the hollow particles are less likely to aggregate during the washing step; the particles can be thoroughly washed; as a result, the washability is improved, and the amount of the metal and unreacted polymerizable monomer remaining after the washing is very small; and the hollow particles having a low dielectric dissipation factor are finally obtained.

The above-described production method includes the steps of preparing the mixture liquid, preparing the suspension, subjecting the suspension to a polymerization reaction, removing the hydrophobic solvent from the precursor particles, and washing the hollow particles for removal of the dispersion stabilizer. The method may further include other steps. As far as technically possible, two or more of the above steps and other additional steps may be simultaneously carried out as one step, or their order may be changed and then they may be carried out in that order. For example, the preparation and suspension of the mixture liquid may be simultaneously carried out in one step (for example, the mixture liquid may be suspended while adding the materials for the mixture liquid).

A preferred embodiment of the method for producing the hollow particles of the present disclosure may be a production method including the following steps.

(1) Mixture liquid preparation step

The mixture liquid preparation step includes preparing a mixture liquid containing a polymerizable monomer, a hydrophobic solvent, a polymerization initiator, a dispersion stabilizer and an aqueous medium.

(2) Suspension step

The suspension step includes suspending the mixture liquid to prepare a suspension in which droplets of a monomer composition containing the polymerizable monomer, the hydrophobic solvent and the polymerization initiator are dispersed in the aqueous medium.

(3) Polymerization step

The polymerization step includes subjecting the suspension to a polymerization reaction to prepare a precursor composition in which precursor particles comprising a shell, which contains a resin, and a hollow portion surrounded by the shell and filled with the hydrophobic solvent, are dispersed in the aqueous medium.

(4) Solvent removal step

The solvent removal step includes removing the hydrophobic solvent from the precursor particles to obtain an aqueous dispersion of the hollow particles, by bubbling a gas into the precursor composition while stirring the precursor composition in a stirring tank.

(5) Washing step

The washing step includes washing the hollow particles for removal of the dispersion stabilizer remaining therein.

FIG. 1 is a schematic diagram showing an example of the production method of the present disclosure. The diagrams (1) to (5) in FIG. 1 correspond to the steps (1) to (5) described above, respectively. White arrows between the diagrams indicate the order of the steps. FIG. 1 is merely a schematic diagram for description, and the production method of the present disclosure is not limited to the method shown in FIG. 1. Further, the structures, dimensions and shapes of materials used for the production method of the present disclosure are not limited to the structures, dimensions and shapes of various materials shown in these diagrams.

The diagram (1) of FIG. 1 is a schematic cross-sectional view showing an embodiment of the mixture liquid in the mixture liquid preparation step. As shown in the diagram, the mixture liquid contains an aqueous medium 1 and a low polarity material 2 dispersed in the aqueous medium 1. Here, the low polarity material 2 means a material that has low polarity and is less likely to mix with the aqueous medium 1. In the present disclosure, the low polarity material 2 contains the polymerizable monomer, the hydrophobic solvent and the polymerization initiator.

The diagram (2) of FIG. 1 is a schematic cross-sectional view showing an embodiment of the suspension in the suspension step. The suspension contains the aqueous medium 1 and droplets 3 of the monomer composition dispersed in the aqueous medium 1. The droplets 3 of the monomer composition contain the polymerizable monomer, the hydrophobic solvent and the polymerization initiator, and their distribution in the droplets is not uniform. The droplets 3 of the monomer composition have the following structure: phase separation occurs between a hydrophobic solvent 4a and a material 4b containing the polymerizable monomer and not containing the hydrophobic solvent; the hydrophobic solvent 4a is distributed in the center; the material 4b not containing the hydrophobic solvent is distributed on the surface side; and the dispersion stabilizer (not shown) is on the surface.

The diagram (3) of FIG. 1 is a schematic cross-sectional view showing an embodiment of the precursor composition obtained by the polymerization step, which contains the precursor particles which include the hydrophobic solvent in the hollow portion. Precursor particles 5 comprise a shell 6, which contains a resin, and a hollow portion, which is filled with the hydrophobic solvent 4a. The shell 6 forming the outer surface of the precursor particles 5 is formed by polymerization of the polymerizable monomer contained in the droplets 3 of the monomer composition. In the diagram (3) of FIG. 1, the precursor particles 5 are dispersed in the aqueous medium 1.

The diagram (4) of FIG. 1 is a schematic cross-sectional view showing an embodiment of the aqueous dispersion of the hollow particles obtained in the solvent removal step. In the solvent removal step, hollow particles 10A comprising a resin-containing shell 6 and a gas-filled hollow portion 7 are obtained by removing the hydrophobic solvent from the precursor particles. In the diagram (4) of FIG. 1, the hollow particles 10A are dispersed in the aqueous medium 1.

The diagram (5) of FIG. 1 is a schematic cross-sectional view showing an embodiment of the hollow particles after the washing step. In hollow particles 10B after the washing step, the residual polymerizable monomer amount and the residual metal amount are decreased compared to the hollow particles 10A before the washing step.

Hereinafter, the five steps described above and other steps will be described in order.

(1) Mixture liquid preparation step

The mixture liquid preparation step includes preparing a mixture liquid containing a polymerizable monomer, a hydrophobic solvent, a polymerization initiator, a dispersion stabilizer and an aqueous medium. The mixture liquid may further contain other materials to the extent that does not impair the effects of the present disclosure.

The materials for the mixture liquid will be described in the following order: (A) the polymerizable monomer, (B) the hydrophobic solvent, (C) the polymerization initiator, (D) the dispersion stabilizer and (E) the aqueous medium.

(A) Polymerizable monomer

In the present disclosure, the polymerizable monomer is a compound containing an addition-polymerizable functional group (in the present disclosure, it may be simply referred to as "polymerizable functional group"). In the present disclosure, as the polymerizable monomer, a compound containing an ethylenically unsaturated bond as the addition-polymerizable functional group, is generally used.

In the present disclosure, a known polymerizable monomer conventionally used for the production of hollow polymer particles can be used as the polymerizable monomer, without particular limitation. From the point of view that the hollow portion is easily formed in the interior of the particles, the polymerizable monomer preferably contains at least a crosslinkable monomer, and more preferably, it further contains a non-crosslinkable monomer. When the polymerizable monomer contains a crosslinkable monomer, in the polymerization reaction of the suspension, the crosslinking density of the polymer precipitated on the surface of the droplets increases, and the precipitates are crosslinked. Accordingly, the crosslinking density of the shell can be increased. As a result, the shell excellent in strength is easily formed; the thus-obtained hollow particles tend to be spherical; and the hollow portion that is clearly distinguished from the shell is easily formed in the interior of the particles.

In the present disclosure, a polymerizable monomer which has only one polymerizable functional group is referred to as a non-crosslinkable monomer, and a polymerizable monomer which has two or more polymerizable functional groups is referred to as a crosslinkable monomer. The crosslinkable monomer can form crosslinking in the polymer by polymerization reaction. The crosslinkable monomer becomes a crosslinkable monomer unit in the shell, and the non-crosslinkable monomer becomes a non-crosslinkable monomer unit in the shell.

Also in the present disclosure, a polymerizable monomer composed of the elements carbon and hydrogen is referred to as "hydrocarbon monomer"; a crosslinkable monomer composed of the elements carbon and hydrogen is referred to as "crosslinkable hydrocarbon monomer"; and a non-crosslinkable monomer composed of the elements carbon and hydrogen is referred to as "non-crosslinkable hydrocarbon monomer". Also in the present disclosure, a polymerizable monomer containing a (meth)acryloyl group as a polymerizable functional group is referred to as "acrylic monomer"; a crosslinkable monomer containing a (meth)acryloyl group as a polymerizable functional group is referred to as "crosslinkable acrylic monomer"; and a non-crosslinkable monomer containing a (meth)acryloyl group as a polymerizable functional group is referred to as "non-crosslinkable acrylic monomer". In the crosslinkable acrylic monomer, at least one polymerizable functional group is only required to be a (meth)acryloyl group, and all polymerizable functional groups are preferably (meth)acryloyl groups.

Also in the present disclosure, (meth)acrylate means each of acrylate and methacrylate; (meth)acryl means each of acryl and methacryl; and (meth)acryloyl means each of acryloyl and methacryloyl.

As the crosslinkable monomer, examples include, but are not limited to, the following: a crosslinkable hydrocarbon monomer such as an aromatic divinyl monomer (e.g., divinylbenzene, divinylbiphenyl and divinylnaphthalene), a diene monomer (e.g., a linear or branched diolefin such as butadiene, isoprene, 2,3-dimethylbutadiene, pentadiene and hexadiene, and an alicyclic diolefin such as dicyclopentadiene, cyclopentadiene and ethylidene tetracyclododecene) and a crosslinkable macromer (e.g., a polybutadiene, a polyisoprene, a styrene-butadiene block copolymer (SBS) and a styrene-isoprene block copolymer (SIS)); a crosslinkable acrylic monomer such as allyl (meth)acrylate, vinyl (meth)acrylate, ethylene glycol di(meth)acrylate, diethylene glycol di(meth)acrylate, pentaerythritol di(meth)acrylate, tricyclodecane dimethanol di(meth)acrylate, 3-(meth)acryloyloxy-2-hydroxypropyl (meth)acrylate, trimethylolpropane tri(meth)acrylate, ditrimethylolpropane tetra(meth)acrylate, pentaerythritol tri(meth)acrylate, pentaerythritol tetra(meth)acrylate, dipentaerythritol hexa(meth)acrylate, dipentaerythritol poly(meth)acrylate, 1,6-hexanediol di(meth)acrylate, 1,9-nonanediol di(meth)acrylate, 1,10-decanediol di(meth)acrylate, neopentyl glycol di(meth)acrylate, polyethylene glycol di(meth)acrylate, polypropylene glycol di(meth)acrylate and bisphenol A di(meth)acrylate, and ethoxylates thereof; a crosslinkable allyl monomer such as diallyl phthalate; and a crosslinkable macromer such as both-vinyl-terminated polyphenylene ether and both-methacrylic-terminated polyphenylene ether. These crosslinkable monomers may be used alone or in combination of two or more.

Especially from the viewpoint of decreasing the dielectric dissipation factor of the hollow particles, the crosslinkable monomer is preferably a crosslinkable hydrocarbon monomer, more preferably an aromatic divinyl monomer, and particularly preferably divinylbenzene.

As the non-crosslinkable monomer, examples include, but are not limited to, the following: a non-crosslinkable hydrocarbon monomer such as an aromatic monovinyl monomer (e.g., styrene, vinyl toluene, $\alpha$-methylstyrene, p-methylstyrene, ethylvinylbenzene, ethylvinylbiphenyl and ethylvinylnaphthalene), a linear or branched monoolefin (e.g., ethylene, propylene and butylene) and an alicyclic monoolefin (e.g., vinylcyclohexane, norbornene, tricyclododecene and 1,4-methano-1,4,4a,9a-tetrahydrofluorene); a non-crosslinkable acrylic monomer such as methyl (meth) acrylate, ethyl (meth)acrylate, butyl (meth)acrylate, 2-ethylhexyl (meth)acrylate, lauryl (meth)acrylate), t-butylaminoethyl (meth)acrylate, glycidyl (meth)acrylate, 2-hydroxyethyl (meth)acrylate, 2-aminoethyl (meth)acrylate, (meth)acrylic acid, (meth)acrylamide, N-methylol (meth)acrylamide, N-butoxymethyl (meth)acrylamide, methoxypolyethylene glycol (meth) acrylate, ethoxypolyethylene glycol (meth)acrylate, propoxypolyethylene glycol (meth)acrylate, butoxypolyethylene glycol (meth)acrylate, hexaoxypolyethylene glycol (meth)acrylate, octoxypolyethylene glycol polypropylene glycol (meth)acrylate, lauroxypolyethylene glycol (meth)acrylate, stearoxypolyethylene glycol (meth)acrylate, phenoxypolyethylene glycol polypropylene glycol (meth)acrylate, polyethylene glycol mono(meth)acrylate, polypropylene glycol mono(meth)acrylate, polyethylene glycol propylene glycol mono(meth)acrylate, polyethylene glycol tetramethylene glycol (meth)acrylate, propylene glycol polybutylene glycol mono (meth) acrylate, and monoethylene glycol mono(meth)acrylate; a carboxylic acid vinyl ester monomer such as vinyl acetate; a halogenated aromatic vinyl monomer such as halogenated styrene; a vinyl halide monomer such as vinyl chloride; a vinylidene halide monomer such as vinylidene chloride; a vinylpyridine monomer; and a non-crosslinkable macromer such as (meth)acrylic-terminated polystyrene and (meth)acrylic-terminated polymethyl methacrylate.

These non-crosslinkable monomers may be used alone or in combination of two or more.

Especially from the viewpoint of decreasing the dielectric dissipation factor of the hollow particles, the non-crosslinkable monomer is preferably a non-crosslinkable hydrocarbon monomer, more preferably an aromatic monovinyl monomer, and still more preferably styrene and ethylvinylbenzene.

In the present disclosure, the content of the crosslinkable monomer in 100% by mass of the polymerizable monomer is preferably 60% by mass or more, more preferably 70% by mass or more, still more preferably 80% by mass or more, and even more preferably 90% by mass or more, from the point of view that the shell strength is increased, and that the hollow particles can easily keep a high void ratio and the dielectric property of the hollow particles can be easily improved.

The polymerizable monomer may consist of the crosslinkable monomer. On the other hand, the dielectric property of the hollow particles may be improved when a combination of the crosslinkable monomer and the non-crosslinkable monomer is contained as the polymerizable monomer. The content of the crosslinkable monomer in 100% by mass of the polymerizable monomer may be 98% by mass or less, for example.

The content of the crosslinkable monomer in 100% by mass of the polymerizable monomer, corresponds to the content of the crosslinkable monomer unit in 100% by mass of all monomer units of the polymer contained in the shell. Similarly, the content of each monomer in 100% by mass of the polymerizable monomer correspond to the content of each monomer unit in 100% by mass of all the monomer units of the polymer contained in the shell.

From the viewpoint of improving the dielectric property of the hollow particles, the content of the hydrocarbon monomer in 100% by mass of the polymerizable monomer is preferably more than 50% by mass, more preferably 70% by mass or more, still more preferably 85% by mass or more, even more preferably 90% by mass or more, and particularly preferably 95% by mass or more. The polymerizable monomer may consist of the hydrocarbon monomer. As the amount of the hydrocarbon monomer in the polymerizable monomer increases, the dielectric property of the hollow particles tends to improve.

When the content of the aromatic hydrocarbon unit in 100% by mass of the polymerizable monomer is more than 20% by mass, the content of the crosslinkable monomer in 100% by mass of the polymerizable monomer may be less than 60% by mass. When the content of the aromatic hydrocarbon unit is more than 20% by mass, due to the $\pi$-$\pi$ interaction, even when the content of the crosslinkable monomer is less than 60% by mass, a decrease in the shell strength is suppressed, and the hollow particles can keep a high void ratio. The aromatic hydrocarbon monomer is more specifically the above-described aromatic divinyl monomer and the above-described aromatic monovinyl monomer.

When the content of the aromatic hydrocarbon unit is more than 20% by mass, the content of the crosslinkable monomer in 100% by mass of the polymerizable monomer is preferably 20% by mass or more, more preferably 30% by mass or more, and still more preferably 35% by mass or more, from the point of view that the shell strength increases and that the hollow particles can easily keep a high void ratio and the dielectric property can easily improve.

When the content of the crosslinkable monomer in 100% by mass of the polymerizable monomer is less than 60% by mass, the content of the aromatic hydrocarbon unit is more preferably 30% by mass or more, and still more preferably 40% by mass or more, from the point of view that the shell strength is increased, and that the hollow particles can easily keep a high void ratio and the dielectric property can be easily improved.

On the other hand, from the viewpoint of suppressing a deterioration in the dielectric property and performance stability of the hollow particles, the content of the modified polyphenylene ether, which is a macromer, in 100% by mass of the polymerizable monomer is preferably 20% by mass or less, more preferably 10% by mass or less, and still more preferably 5% by mass or less. The modified polyphenylene ether includes, by vinyl modification, (meth)acrylic modification or the like, a crosslinkable or non-crosslinkable macromer containing a polymerizable functional group in at least one terminal thereof.

From the point of view that a deterioration in the performance stability of the hollow particles is suppressed by suppressing an increase in the electric conductivity of the aqueous dispersion of the hollow particles, in 100% by mass of the polymerizable monomer, the total content of an epoxy group-containing monomer such as glycidyl (meth)acrylate and a hydroxy group-containing monomer such as 2-hydroxyethyl (meth)acrylate, is preferably 20% by mass or less, more preferably 10% by mass or less, and still more preferably 5% by mass or less. An epoxy group opens the ring to give a hydroxy group, and the hydroxy group contained in the hollow particles may trap a metal ion. Accordingly, the amount of the metal attached to the surface of the hollow particles can be decreased by decreasing the content of the epoxy group-containing monomer and the hydroxy group-containing monomer. As a result, an increase in the electric conductivity of the aqueous dispersion of the hollow particles can be suppressed, and a deterioration in the performance stability of the hollow particles can be suppressed.

The content of the polymerizable monomer in the mixture liquid is not particularly limited. From the viewpoint of the balance of the void ratio, particle diameter and mechanical strength of the hollow particles, with respect to the total mass (100% by mass) of the components (except for the aqueous medium) in the mixture liquid, the content of the polymerizable monomer is preferably from 15% by mass to 50% by mass, and more preferably from 20% by mass to 40% by mass. When the content of the polymerizable monomer in the mixture liquid is within the above range, the hydrophobic solvent can be efficiently removed in the solvent removal step and, as a result, the dispersion stabilizer remaining in the hollow particles can be efficiently removed in the washing step. Accordingly, the hollow particles with excellent dielectric property and performance stability can be obtained.

From the viewpoint of suppressing a deterioration in the dielectric property of the obtained hollow particles and a decrease in the strength thereof, the content of the polymerizable monomer is preferably 96% by mass or more, and more preferably 97% by mass or more, with respect to the total mass (100% by mass) of a solid content obtained by excluding the hydrophobic solvent from the material for the oil phase in the mixture liquid.

In the present disclosure, the solid content includes all components excluding solvent, and a liquid polymerizable monomer and the like are included in the solid content.

(B) Hydrophobic solvent

The hydrophobic solvent used in the production method of the present disclosure is a non-polymerizable, sparingly water-soluble organic solvent.

The hydrophobic solvent serves as a spacer material for forming the hollow portion in the interior of the particles. In the suspension step described later, the suspension in which the droplets of the monomer composition containing the hydrophobic solvent are dispersed in the aqueous medium, is obtained. In the suspension step, phase separation occurs in the droplets of the monomer composition. As a result, the hydrophobic solvent with low polarity is likely to collect in the interior of the droplets of the monomer composition. In the end, according to their respective polarities, the hydrophobic solvent is distributed in the interior of the droplets of the monomer composition, and the material not containing the hydrophobic solvent is distributed at the periphery of the droplets of the monomer composition.

Then, in the polymerization step described later, an aqueous dispersion containing the precursor particles including the hydrophobic solvent, is obtained. That is, since the hydrophobic solvent collects in the interior of the particles, the hollow portion filled with the hydrophobic solvent is formed in the interior of the obtained precursor particles.

The hydrophobic solvent can be appropriately selected from the group consisting of known hydrophobic solvents, without particular limitation. As the hydrophobic solvent, examples include, but are not limited to, an ester such as ethyl acetate and butyl acetate; an ether ester such as propylene glycol monomethyl ether acetate and propylene glycol monoethyl ether acetate; and a hydrocarbon solvent. Of them, a hydrocarbon solvent is preferred, and a hydrocarbon solvent containing 5 to 8 carbon atoms is more preferred.

As the hydrocarbon solvent, examples include, but are not limited to, an aromatic hydrocarbon solvent such as benzene, toluene and xylene, and aliphatic hydrocarbons including a chain hydrocarbon solvent such as pentane, hexane, heptane, octane, 2-methylbutane, 2-methylpentane and a paraffin-based solvent, and a cyclic hydrocarbon solvent such as cyclohexane, methylcyclohexane and cycloheptane.

These hydrophobic solvents may be used alone or in combination of two or more.

From the point of view that phase separation is likely to occur between the polymerizable monomer and hydrophobic solvent in the droplets of the monomer composition during the suspension step, such an organic solvent is preferably selected as the hydrophobic solvent, that the water solubility of the organic solvent is smaller than that of the crosslinkable monomer contained in the polymerizable monomer.

When the polymerizable monomer contains the hydrocarbon compound in an amount of more than 50% by mass, a hydrocarbon solvent is preferred as the hydrophobic solvent; a chain hydrocarbon solvent is more preferred as the hydrophobic solvent; a chain hydrocarbon solvent containing 5 to 8 carbon atoms is still more preferred as the hydrophobic solvent; and at least one selected from the group consisting of pentane, hexane, heptane and octane is even more preferred as the hydrophobic solvent.

The boiling point of the hydrophobic solvent is not particularly limited. From the viewpoint of ease of removal in the solvent removal step described later, the boiling point of the hydrophobic solvent is preferably 130°C or less, and more preferably 100°C or less. On the other hand, the boiling point of the hydrophobic solvent is preferably 50°C or more, and more preferably 60°C or more, from the point of view that the hydrophobic solvent can be easily included in the precursor particles.

When the hydrophobic solvent is a mixed solvent containing several kinds of hydrophobic solvents and it has several boiling points, the boiling point of the solvent having the highest boiling point among the solvents contained in the mixed solvent, is preferably equal to or less than the upper limit value, and the boiling point of the solvent having the lowest boiling point among the solvents contained in the mixed solvent, is preferably equal to or more than the lower limit value.

The relative permittivity of the hydrophobic solvent at 20°C is preferably 2.5 or less. The relative permittivity is one of the indices of the level of the polarity of a compound. In the case where the hydrophobic solvent has a sufficiently small relative permittivity of 2.5 or less, it is considered that phase separation progresses rapidly in the droplets of the monomer composition and the hollow portion can be easily formed.

Examples of hydrophobic solvents having a relative permittivity at 20°C of 2.5 or less, are as follows. The inside of the parentheses is the value of relative permittivity.

Pentane (1.8), hexane (1.9), heptane (1.9), octane (1.9), cyclohexane (2.0)

For the relative permittivity at 20°C, values written in known literatures (for example, the Chemical Society of Japan, as editor, "Kagaku Binran, Kiso Hen, Kaitei 4 Ban", pp. II-498 to II-503, published by Maruzen Publishing Co., Ltd. on September 30, 1993) and other technical information may be used as reference. Examples of the method of measuring the relative permittivity at 20°C include a relative permittivity test that is in conformity with 23 of JIS C 2101:1999 and is performed with the measuring temperature set to 20°C.

The void ratio of the hollow particles can be controlled by changing the amount of the hydrophobic solvent in the mixture liquid. In the suspension step described later, the polymerization reaction progresses while oil droplets containing the polymerizable monomer and so on include the hydrophobic solvent. Accordingly, as the content of the hydrophobic solvent increases, the void ratio of the obtained hollow particles tends to increase.

In the present disclosure, with respect to 100 parts by mass of the polymerizable monomer, the content of the hydrophobic solvent in the mixture liquid is preferably 100 parts by mass or more and 650 parts by mass or less, from the following viewpoints: the particle diameter of the hollow particles can be easily controlled; the void ratio can be easily increased while maintaining the strength of the hollow particles; and the amount of the residual hydrophobic solvent in the hollow particles can be easily decreased. The content of the hydrophobic solvent in the mixture liquid is more preferably 120 parts by mass or more and 500 parts by mass or less, and still more preferably 140 parts by mass or more and 300 parts by mass or less, with respect to 100 parts by mass of the polymerizable monomer.

(C) Polymerization initiator

In the production method of the present disclosure, the mixture liquid preferably contains an oil-soluble polymerization initiator as the polymerization initiator. The oil-soluble polymerization initiator is not particularly limited, as long as it is a lipophilic one having a solubility in water of 0.2% by mass or less. As the oil-soluble polymerization initiator, examples include, but are not limited to, an organic peroxide such as benzoyl peroxide, lauroyl peroxide, t-butyl peroxy-2-ethylhexanoate, t-butylperoxy diethylacetate and t-butylperoxy pivalate, and an azo compound such as 2,2'-azobis(2,4-dimethylvaleronitrile), azobis(isobutyronitrile) and 2,2'-azobis(4-methoxy-2,4-dimethylvaleronitrile). Of them, an organic peroxide is preferably used as the oil-soluble polymerization initiator, from the point of view that the dielectric property of the hollow particles is easily improved. In the case of using an organic peroxide as the polymerization initiator, the amount of the unreacted polymerizable monomer remaining in the shell is easily decreased. When a decomposition product of the polymerization initiator remains in the shell, the molecular motion of the shell tends to increase; however, a decomposition product of the organic peroxide is easily removed. Accordingly, in the case of using an organic peroxide as the polymerization initiator, the amount of the decomposition product of the polymerization initiator remaining in the shell can be decreased, and an increase in the molecular motion of the shell can be suppressed, accordingly.

With respect to 100 parts by mass of the polymerizable monomer in the mixture liquid, the content of the polymerization initiator is preferably from 0.1 parts by mass to 10 parts by mass, more preferably from 0.5 parts by mass to 7 parts by mass, and still more preferably from 1 part by mass to 5 parts by mass. When the content of the polymerization initiator is equal to or more than the lower limit value, a polymerization reaction can progress sufficiently. When the content of the polymerization initiator is equal to or less than the upper limit value, the polymerization initiator is less likely to remain after the end of the polymerization reaction, and an unexpected side reaction is less likely to progress.

(D) Dispersion stabilizer

The dispersion stabilizer is an agent for dispersing the droplets of the monomer composition in the aqueous medium in the suspension step. As the dispersion stabilizer, examples include, but are not limited to, an inorganic dispersion stabilizer, an organic or inorganic water-soluble polymer stabilizer and a surfactant.

In the present disclosure, an inorganic dispersion stabilizer is preferably used as the dispersion stabilizer, from the following viewpoints: the particle diameter of the droplets can be easily controlled in the suspension, and the dispersion stabilizer can be easily removed by the washing step; moreover, an excessive decrease in the shell thickness is suppressed, and a decrease in the strength of the hollow particles is suppressed.

As the inorganic dispersion stabilizer, examples include, but are not limited to, inorganic compounds including a sulfate such as barium sulfate and calcium sulfate; a carbonate such as barium carbonate, calcium carbonate and magnesium carbonate; a phosphate such as calcium phosphate; a metal oxide such as aluminum oxide and titanium oxide; a metal hydroxide such as aluminum hydroxide, magnesium hydroxide, calcium hydroxide, barium hydroxide and iron (II) hydroxide; and silicon dioxide. These inorganic dispersion stabilizers may be used alone or in combination of two or more.

As the inorganic dispersion stabilizer, a sparingly water-soluble inorganic dispersion stabilizer is preferably used. The term "sparingly water-soluble" is preferably such that the solubility in water at 25°C is less than 1 g/L.

As the sparingly water-soluble inorganic dispersion stabilizer, a metal hydroxide is preferred, and a magnesium hydroxide is more preferred.

In the present disclosure, the sparingly water-soluble inorganic dispersion stabilizer is particularly preferably used in the form of colloidal particles being dispersed in the aqueous medium, that is, in the form of a colloidal dispersion containing the sparingly water-soluble, inorganic dispersion stabilizer colloidal particles. Accordingly, the inorganic dispersion stabilizer can be easily removed by the washing step described below.

The colloidal dispersion containing the sparingly water-soluble inorganic dispersion stabilizer colloidal particles can be prepared by, for example, reacting at least one selected from the group consisting of alkali metal hydroxide salts and alkaline earth metal hydroxide salts with a water-soluble polyvalent metal salt, which is not an alkaline earth metal hydroxide salt, in the aqueous medium.

As the alkali metal hydroxide salts, examples include, but are not limited to, lithium hydroxide, sodium hydroxide and potassium hydroxide. As the alkaline earth metal hydroxide salts, examples include, but are not limited to, barium hydroxide and calcium hydroxide.

The water-soluble polyvalent metal salt is only required to be a water-soluble polyvalent metal salt other than compounds corresponding to the above-mentioned alkaline earth metal hydroxide salts. As the polyvalent metal salt, examples include, but are not limited to, magnesium metal salts such as magnesium chloride, magnesium phosphate and magnesium sulfate; calcium metal salts such as calcium chloride, calcium nitrate, calcium acetate and calcium sulfate; aluminum metal salts such as aluminum chloride and aluminum sulfate; barium salts such as barium chloride, barium nitrate and barium acetate; and zinc salts such as zinc chloride, zinc nitrate and zinc acetate. Among them, magnesium metal salts, calcium metal salts and aluminum metal salts are preferred; magnesium metal salts are more preferred; and magnesium chloride is particularly preferred.

The method for reacting the water-soluble polyvalent metal salt with the at least one selected from the group consisting of alkali metal hydroxide salts and alkaline earth metal hydroxide salts in the aqueous medium, is not particularly limited. For example, an aqueous solution of the water-soluble polyvalent metal salt may be mixed with an aqueous solution of the at least one selected from the group consisting of alkali metal hydroxide salts and alkaline earth metal hydroxide salts.

Also, colloidal silica may be used as the colloidal dispersion containing the sparingly water-soluble inorganic dispersion stabilizer colloidal particles.

As the organic water-soluble polymer stabilizer, examples include, but are not limited to, polyvinyl alcohol, a polycarboxylic acid (such as polyacrylic acid), a cellulose (such as hydroxyethyl cellulose, carboxymethyl cellulose, methyl cellulose and ethyl cellulose), polyvinylpyrrolidone, polyacrylimide, polyethylene oxide and a poly(hydroxystearic acid-g-methyl methacrylate-co-methacrylic acid) copolymer.

As the inorganic water-soluble polymer stabilizer, examples include, but are not limited to, sodium tripolyphosphate.

The surfactant is a compound containing both a hydrophilic group and a hydrophobic group per molecule. As the surfactant, examples include, but are not limited to, a conventionally-known ionic surfactant such as an anionic surfactant, a cationic surfactant and an amphoteric surfactant, and a conventionally-known non-ionic surfactant.

For the water-soluble polymer stabilizer and the surfactant, the solubility in water at 25°C is 1 g/L or more.

The content of the dispersion stabilizer is not particularly limited. With respect to the total mass (100 parts by mass) of the polymerizable monomer and the hydrophobic solvent, the content of the dispersion stabilizer is preferably from 0.5 parts by mass to 15 parts by mass, and more preferably from 1 part by mass to 10 parts by mass. When the content of the dispersion stabilizer is equal to or more than the lower limit value, the droplets of the monomer composition can be sufficiently dispersed in the suspension so that they do not join together. On the other hand, when the content of the dispersion stabilizer is equal to or less than the upper limit value, an increase in the viscosity of the suspension is prevented in the formation of the droplets, and a problem such that a droplet forming machine is clogged with the suspension, can be avoided.

With respect to 100 parts by mass of the aqueous medium, the content of the dispersion stabilizer is preferably from 0.5 parts by mass to 15 parts by mass, and more preferably from 0.5 parts by mass to 10 parts by mass.

In the hollow particles of the present disclosure, from the viewpoint of suppressing a deterioration of the dielectric property and a deterioration of the performance stability, the amount of the residual dispersion stabilizer is preferably as small as possible. The hollow particles are most preferably free of a dispersion stabilizer. The hollow particles containing neither the organic water-soluble polymer stabilizer, the inorganic water-soluble polymer stabilizer nor the surfactant are particularly preferred. By using only the inorganic dispersion stabilizer as the dispersion stabilizer, the hollow particles in which all of the organic water-soluble polymer stabilizer, the inorganic water-soluble polymer stabilizer and the surfactant are below the detection limit, can be obtained.

(E) Aqueous medium

In the present disclosure, the term "aqueous medium" means a medium selected from the group consisting of water, a hydrophilic solvent and a mixture thereof.

When a mixture of water and a hydrophilic solvent is used, from the viewpoint of forming the droplets of the monomer composition, it is important that the polarity of the entire mixture is not too low. In this case, for example, the mass ratio between water and the hydrophilic solvent (water : hydrophilic solvent) may be set to 99:1 to 50:50.

In the present disclosure, the hydrophilic solvent is not particularly limited, as long as it is one that mixes with water sufficiently and does not develop phase separation. As the hydrophilic solvent, examples include, but are not limited to, alcohols such as methanol and ethanol; tetrahydrofuran (THF); and dimethyl sulfoxide (DMSO).

The content of the aqueous medium is not particularly limited. From the viewpoint of controlling the particle diameter and void ratio of the hollow particles in the preferred ranges described below, with respect to 100 parts by mass of the polymerizable monomer contained in the mixture liquid, the content of the aqueous medium is, as the lower limit thereof, preferably 200 parts by mass or more, more preferably 400 parts by mass or more, and still more preferably 600 parts by mass or more. The content is, as the upper limit thereof, preferably 1000 parts by mass or less, and more preferably 800 parts by mass or less.

The mixture liquid may further contain other materials that are different from the above-mentioned materials (A) to (E), to the extent that does not impair the effects of the present disclosure.

The mixture liquid is obtained by mixing the above-mentioned materials and other materials as needed, appropriately stirring the mixture, etc. In the mixture liquid, an oil phase containing lipophilic materials such as (A) the polymerizable monomer, (B) hydrophobic solvent and (C) the polymerization initiator is dispersed with a size of a particle diameter of approximately several millimeters in an aqueous phase containing (D) the dispersion stabilizer, (E) the aqueous medium, etc. The dispersion state of these materials in the mixture liquid can be observed with the naked eye, depending on the types of the materials.

In the mixture liquid preparation step, the mixture liquid may be obtained by simply mixing the above-mentioned materials and other materials as needed, appropriately stirring the mixture, etc. From the point of view that the shell can be easily uniform, it is preferable to prepare the mixture liquid by separately preparing the oil phase, which contains the polymerizable monomer, the hydrophobic solvent and the polymerization initiator, and the aqueous phase, which contains the dispersion stabilizer and the aqueous medium, in advance, and then mixing the phases together. In the present disclosure, a colloidal dispersion in which a sparingly water-soluble inorganic dispersion stabilizer is dispersed in the form of colloidal particles in the aqueous medium, can be preferably used as the aqueous phase.

As just described, by separately preparing the oil phase and the aqueous phase in advance and then mixing them, hollow particles in which the composition of the shell portion is uniform, can be produced. Also, the particle diameter of the hollow particles can be easily controlled.

(2) Suspension step

The suspension step includes suspending the mixture liquid to prepare the suspension in which the droplets of the monomer composition containing the hydrophobic solvent are dispersed in the aqueous medium.

The suspension method for forming the droplets of the monomer composition is not particularly limited, and a known suspension method can be employed. A disperser is used to prepare the suspension. As the disperser, for example, a horizontal or vertical in-line disperser such as MILDER (manufactured by Pacific Machinery & Engineering Co., Ltd.), CAVITRON (manufactured by EUROTEC, Ltd.) and an in-line disperser manufactured by IKA (e.g., DISPAX-REACTOR (registered trademark) DRS) or an emulsifying disperser such as HOMOMIXER MARK II series (manufactured by PRIMIX Corporation) can be used.

In the dispersion for the preparation of the suspension, from the viewpoint of controlling the particle diameter of the hollow particles within the above-described preferred range, the tip speed of the rotor of the disperser is preferably 5 m/s or more, more preferably 10 m/s or more, and still more preferably 15 m/s or more. On the other hand, from the viewpoint of decreasing the amount of the irregular-shaped particles, it is preferably 90 m/s or less, more preferably 89 m/s or less, and still more preferably 88 m/s or less.

In the suspension prepared in the suspension step, the droplets of the monomer composition containing the lipophilic materials mentioned above and having a particle diameter of approximately from 1 $\mu$m to 10 um, are dispersed uniformly in the aqueous medium. Such droplets of the monomer composition are difficult to observe with the naked eye and can be observed with a known observation instrument such as an optical microscope.

In the suspension step, since phase separation occurs in the droplets of the monomer composition, the hydrophobic solvent with low polarity is likely to collect in the interior of the droplets. As a result, in the obtained droplets, the hydrophobic solvent is distributed in the interior thereof, and the material not containing the hydrophobic solvent is distributed at the periphery thereof.

The droplets of the monomer composition dispersed in the aqueous medium are formed by the oil-soluble monomer composition and the dispersion stabilizer surrounding the periphery of the oil-soluble monomer composition. The droplets of the monomer composition contain the oil-soluble polymerization initiator, the polymerizable monomer and the hydrophobic solvent.

The droplets of the monomer composition are minute oil droplets, and the oil-soluble polymerization initiator generates polymerization initiating radicals in the interior of the minute oil droplets. Therefore, the precursor particles having a target particle diameter can be produced without an excessive growth of the minute oil droplets.

In the suspension polymerization method using such an oil-soluble polymerization initiator, there is no opportunity for the polymerization initiator to come into contact with the polymerizable monomer dispersed in the aqueous medium. Therefore, by using the oil-soluble polymerization initiator, the subgeneration of surplus resin particles (e.g., solid particles having a relatively small particle diameter) in addition to the target resin particles having the hollow portion, can be suppressed.

(3) Polymerization step

The polymerization step includes subjecting the suspension to a polymerization reaction to prepare the precursor composition in which the precursor particles comprising the shell, which contains the resin, and the hollow portion surrounded by the shell and filled with the hydrophobic solvent, are dispersed in the aqueous medium.

The polymerization system is not particularly limited. For example, a known polymerization system such as a batch system, a semicontinuous system and a continuous system may be employed.

The polymerization temperature is not particularly limited. From the viewpoint of sufficiently promoting the polymerization reaction and decreasing the content of the unreacted polymerizable monomer, the polymerization temperature is preferably 60°C or more, more preferably 70°C or more, and still more preferably 80°C or more. From the viewpoint of suppressing the evaporation of the aqueous medium, the polymerization temperature is preferably 95°C or less.

The polymerization reaction time is not particularly limited. From the viewpoint of sufficiently promoting the polymerization reaction and decreasing the content of the unreacted polymerizable monomer, the polymerization reaction time is preferably 5 hours or more, and more preferably 10 hours or more. From the viewpoint of ease of production, the polymerization reaction time is preferably 60 hours or less, more preferably 48 hours or less, and particularly preferably 36 hours or less.

During the polymerization reaction, the suspension is generally stirred. The stirring power of the stirring is not particularly limited. From the viewpoint of promoting the polymerization reaction, the stirring power is preferably 0.01 kW/m$^3$ or more, more preferably 0.02 kW/m$^3$ or more, and still more preferably 0.03 kW/m$^3$ or more. From the viewpoint of decreasing the amount of the irregular-shaped particles, it is preferably 0.20 kW/m$^3$ or less, more preferably 0.10 kW/m$^3$ or less, and still more preferably 0.05 kW/m$^3$ or less.

(4) Solvent removal step

The solvent removal step includes removing the hydrophobic solvent from the precursor particles to obtain the aqueous dispersion of the hollow particles, by bubbling the gas into the precursor composition while stirring the precursor composition in the stirring tank. By this step, the aqueous dispersion of the hollow particles in which the hollow portion is filled with the bubbled gas, is obtained.

The gas can be bubbled into the precursor composition by, for example, directly introducing the gas into the precursor composition, that is, by directly injecting the gas into the precursor composition. Alternatively, the gas in the vapor phase can be bubbled into the precursor composition by stirring the precursor composition in the stirring tank containing a vapor phase and a liquid phase which contains the precursor composition. Especially from the viewpoint of efficient removal of the hydrophobic solvent included in the precursor particles and efficient removal of the unreacted polymerizable monomer and so on remaining in the precursor particles, the gas is preferably bubbled into the precursor composition by, while directly introducing the gas into the precursor composition, stirring the precursor composition in the stirring tank containing the vapor phase. The vapor phase in the stirring tank is preferably filled with the gas in advance, which is bubbled into the precursor composition.

The gas bubbled into the precursor composition is preferably at least one selected from the group consisting of inert gas and air, and it is more preferably inert gas. As the inert gas, examples include, but are not limited to, nitrogen, argon and helium. Of them, nitrogen is preferred.

In this step, from the viewpoint of efficient removal of the hydrophobic solvent included in the precursor particles and efficient removal of the unreacted polymerizable monomer and so on remaining in the precursor particles, the time required to bubble the gas into the precursor composition is preferably two hours or more, more preferably 5 hours or more, still more preferably 10 hours or more, and even more preferably 15 hours or more. On the other hand, from the viewpoint of production efficiency, it is preferably 72 hours or less, and more preferably 60 hours or less.

When the polymerization reaction time of the above-described polymerization step is 50 hours or more, the hydrophobic solvent included in the precursor particles and the unreacted polymerizable monomer and so on contained in the precursor particles can be sufficiently removed even when the bubbling time of the solvent removal step is less than two hours. When the polymerization reaction time of the above-described polymerization step is 50 hours or more, the bubbling time of the solvent removal step is preferably 20 minutes or more, and more preferably 30 minutes or more.

In this step, the stirring power for stirring the precursor composition is not particularly limited. From the viewpoint of efficient removal of the hydrophobic solvent included in the precursor particles and efficient removal of the unreacted polymerizable monomer and so on remaining in the precursor particles, the stirring power is preferably 0.01 kW/m$^3$ or more, more preferably 0.02 kW/m$^3$ or more, and still more preferably 0.03 kW/m$^3$ or more. On the other hand, from the viewpoint of decreasing the amount of the irregular-shaped particles and suppressing the foaming of the precursor composition, the stirring power is preferably 0.60 kW/m$^3$ or less, more preferably 0.55 kW/m$^3$ or less, still more preferably 0.50 kW/m$^3$ or less, even more preferably 0.20 kW/m$^3$ or less, and particularly preferably 0.10 kW/m$^3$ or less, and it may be 0.05 kW/m$^3$ or less.

In this step, from the viewpoint of efficient removal of the hydrophobic solvent included in the precursor particles and efficient removal of the unreacted polymerizable monomer and so on remaining in the precursor particles, the gas is preferably bubbled into the precursor composition under a pressure of 20 kPa or more and 300 kPa or less, and more preferably under a pressure of 40 kPa or more and 200 kPa or less. The pressure is preferably equal to or more than the lower limit value, since the yield of the hollow particles is increased. Also, the pressure is preferably equal to or less than the upper limit value, since the amount of the irregular-shaped particles can be decreased. Especially from the viewpoint of excellent hydrophobic solvent removal efficiency, the gas is preferably bubbled into the precursor composition under a pressure of atmospheric pressure or less, and more preferably under a reduced pressure of 60 kPa or less. On the other hand, from the viewpoint of suppressing the foaming of the precursor composition, the gas is preferably bubbled into the precursor composition under a pressure of 150 kPa or more. The yield of the hollow particles is increased by suppressing the foaming of the precursor composition during the bubbling. The pressure may be the internal pressure of the stirring tank.

Also in this step, when the gas is bubbled into the precursor composition under a pressure of more than atmospheric pressure and 2000 kPa or less, the foaming of the precursor composition is suppressed compared to the case where the gas is bubbled into the precursor composition under atmospheric pressure or less. From the viewpoint of suppressing the foaming of the precursor composition, the gas is preferably bubbled into the precursor composition under a pressure of 152 kPa or more, more preferably a pressure of 200 kPa or more, and still more preferably a pressure of 300 kPa or more. On the other hand, from the viewpoint of decreasing the amount of the irregular-shaped particles, the gas is preferably bubbled into the precursor composition under a pressure of 1500 kPa or less, and more preferably a pressure of 1200 kPa or less.

In this step, when bubbling the gas into the precursor composition, the precursor composition preferably contains a defoaming agent. Accordingly, the foaming of the precursor composition during the bubbling can be suppressed, and the yield of the hollow particles can be increased. From the viewpoint of ease of exerting the foaming suppression effect by use of the defoaming agent, the defoaming agent is preferably contained in the precursor composition when the gas is bubbled into the precursor composition under a pressure of 500 kPa or less, more preferably under a pressure of atmospheric pressure or less, and still more preferably under a reduced pressure of 60 kPa or less.

To allow the precursor composition to contain the defoaming agent when bubbling the gas into the precursor composition, the defoaming agent may be preliminarily added to the precursor composition before the bubbling, or it may be added to the precursor composition when starting or during the bubbling.

The defoaming agent is not particularly limited. As the defoaming agent, examples include, but are not limited to, a polyether-based defoaming agent, a mineral oil-based defoaming agent and an alcohol-based defoaming agent. Of them, a water-soluble defoaming agent such as a polyether-based defoaming agent and an alcohol-based defoaming agent is preferably used from the point of view that it is less likely to remain in the hollow particles. In some cases, the dielectric dissipation factor of the hollow particles is increased by the defoaming agent remaining in the hollow particles. A polyether-based defoaming agent is particularly preferably used from the point of view that it is less likely to increase the dielectric dissipation factor of the hollow particles.

The amount of the added defoaming agent is not particularly limited. From the viewpoint of sufficiently suppressing the foaming of the precursor composition, with respect to 100 parts by mass of the precursor composition (including the hydrophobic solvent and the aqueous medium), the added defoaming agent amount is preferably 0.01 parts by mass or more, and more preferably 0.1 parts by mass or more. On the other hand, from the viewpoint of decreasing the residual defoaming agent amount and suppressing an increase in the dielectric dissipation factor of the hollow particles, the added defoaming agent amount is preferably 50 parts by mass or less, more preferably 20 parts by mass or less, and still more preferably 0.5 parts by mass or less.

The flow rate of the gas introduced into the stirring tank is not particularly limited. From the viewpoint of efficient removal of the hydrophobic solvent included in the precursor particles and efficient removal of the unreacted polymerizable monomer and so on remaining in the precursor particles, the flow rate per unit time is preferably 4 L/min or more, more preferably 8 L/min or more, and still more preferably 10 L/min or more. The flow rate per unit volume is preferably 200 L/(min $\cdot$ m$^3$) or more, more preferably 8,000 L/(min $\cdot$ m$^3$) or more, and still more preferably 10,000 L/(min$\cdot$m$^3$) or more. From the viewpoint of cost reduction, the upper limit of the gas flow rate per unit time may be 10,000 L/min or less, and the upper limit of the gas flow rate per unit volume may be 500,000 L/(min$\cdot$m$^3$) or less.

In the case of using a stirring tank with a capacity of 3 L to 15000 L, the gas flow rate is preferably within the above range.

In this step, the stirring tank preferably contains the vapor phase and the liquid phase which contains the precursor composition. This is because, when the stirring tank preferably contains the vapor phase, the hydrophobic solvent included in the precursor particles and the unreacted polymerizable monomer and so on contained in the precursor particles can pass into the vapor phase, and they can be removed with high efficiency, accordingly.

With respect to the capacity of the stirring tank, the percentage of the liquid phase contained therein is preferably 30% by volume or more and less than 80% by volume, from the viewpoint of efficient removal of the hydrophobic solvent included in the precursor particles and efficient removal of the unreacted polymerizable monomer and so on remaining in the precursor particles.

The method for directly introducing the gas into the precursor composition, is preferably direct introduction of the gas into the precursor composition in the stirring tank from the side or bottom of the stirring tank, and more preferably direct introduction of the gas from the bottom of the stirring tank, for example. The bottom of the stirring tank is a part that can be observed when viewing the stirring tank in use from the bottom. The stirring tank is typically in a columnar form. The bottom face which is located on the lower side of the direction of the force of gravity, is the bottom of the columnar stirring tank, and it is the deepest part thereof.

In the case of directly introducing the gas into the precursor composition, the gas introduction portion is preferably as close as possible to the deepest part of the stirring tank, since the gas can be easily and uniformly bubbled into the precursor composition. Once the gas is uniformly bubbled into the precursor composition, the hydrophobic solvent and the unreacted polymerizable monomer and so on, which are removed from the precursor particles, can easily pass into the upper vapor phase, and they can be removed with high efficiency, accordingly.

Also, the gas is preferably introduced into the precursor composition toward the center of the region occupied by the precursor composition in the stirring tank, since the gas can be easily and uniformly bubbled in to the precursor composition. That is, in the case of introducing the gas from the bottom of the stirring tank, the gas is preferably introduced toward the direction opposite to the direction of the force of gravity.

The direction of the force of gravity in the present disclosure does not always need to be aligned with the direction of the force of gravity. For example, an axis misalignment of 30 degrees or less is allowed.

Meanwhile, the yield of the hollow particles may be increased by bubbling the gas in the vapor phase into the precursor composition just by introducing the gas into the vapor phase in the stirring tank and stirring the precursor composition in the stirring tank, instead of direct introduction of the gas into the precursor composition.

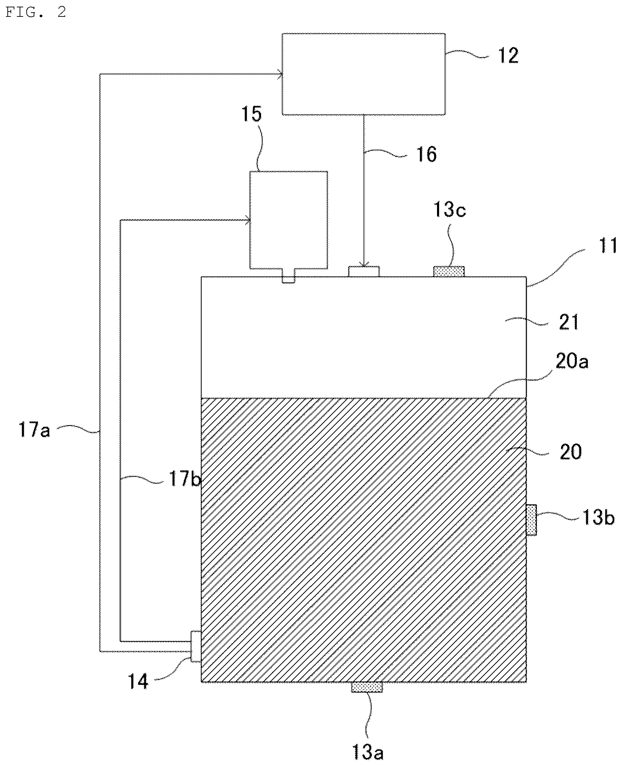

This step can be carried out by the stirring apparatus as shown in FIG. 2, for example. FIG. 2 is merely a schematic diagram for description, and the stirring apparatus used in the solvent removal step of the present disclosure is not limited to the method shown in FIG. 2. Further, the structure, dimension, shape and so on of the stirring apparatus used in the solvent removal step of the present disclosure are not limited to the structure, dimension, shape and so on shown in FIG. 2.

In the stirring apparatus shown in FIG. 2, once the precursor composition (a slurry solution) is supplied to a supply tank 12, the precursor composition is supplied from the supply tank 12 to the interior of a stirring tank 11 through a supply line 16. The method for supplying the precursor composition is not particularly limited, and the precursor composition may be supplied by use of a liquid feed pump, for example. The precursor composition is supplied to the interior of the stirring tank 11 through an inner nozzle (not shown). A precursor composition 20 (the precursor composition) in the stirring tank 11 is stirred by rotating a rotor (not shown) disposed in the interior of the stirring tank 11.

The stirring tank 11 includes gas inlets 13a, 13b and 13c. The gas can be introduced into the stirring tank 11 through the gas inlet 13a, 13b or 13c. The gas inlet 13a is disposed on the bottom of the stirring tank 11. The gas inlet 13b is disposed on the side of the stirring tank 11. When the gas is introduced from the gas inlet 13a or 13b, the gas can be directly injected and bubbled into the precursor composition 20 in the stirring tank 11. The gas inlet 13c is disposed on the top of the stirring tank 11. When the gas is introduced from the gas inlet 13c, the gas is injected into a vapor phase 21 in the interior of the stirring tank 11. By stirring the precursor composition 20 in the stirring tank 11, the gas in the vapor phase 21 is bubbled into the precursor composition 20.

In the stirring apparatus shown in FIG. 2, the precursor composition 20 can be circulated in the stirring apparatus by returning the precursor composition 20 stirred in the stirring tank 11 from an outlet 14 to the interior of the stirring tank 11 through a circulation line 17a, the supply tank 12 and the supply line 16.

The stirring apparatus shown in FIG. 2 further includes a spray mechanism 15. In the stirring apparatus shown in FIG. 2, a part of the precursor composition 20 stirred in the stirring tank 11 can be supplied from the outlet 14 to the spray mechanism 15 through a circulation line 17b and then sprayed to a liquid surface 20a of the precursor composition 20 in the stirring tank 11.

The internal pressure of the stirring tank 11 can be controlled by controlling the flow rate of the precursor composition discharged from the stirring tank 11.

In this step, during the bubbling of the gas into the precursor composition, a cycle of supplying the precursor composition from the supply tank to the stirring tank, stirring the precursor composition in the stirring tank and then discharging the precursor composition to the supply tank, is preferably repeated to circulate the precursor composition in the stirring apparatus. Accordingly, the hydrophobic solvent included in the precursor particles and the unreacted polymerizable monomer and so on contained in the precursor particles can be efficiently removed. The flow rate of the circulation is not particularly limited.

In this step, a part of the precursor composition is preferably supplied from the stirring tank to the spray mechanism and sprayed to the liquid surface of the precursor composition in the stirring tank when bubbling the gas into the precursor composition. Accordingly, the hydrophobic solvent included in the precursor particles and the unreacted polymerizable monomer and so on contained in the precursor particles can be efficiently removed, and the bubbling time can be shortened, therefore.

The precursor composition can be continuously or intermittently sprayed during the bubbling of the gas into the precursor composition. The precursor composition is preferably sprayed continuously. In the case of intermittently spraying the precursor composition, the precursor composition is preferably appropriately sprayed until, upon the foaming of the precursor composition and a rise in the liquid surface, the foam disappears. In the case of spraying the precursor composition, the amount of the sprayed precursor composition is not particularly limited.

The temperature at the time of bubbling the gas into the precursor composition is preferably a temperature equal to or more than the temperature obtained by subtracting 35°C from the boiling point of the hydrophobic solvent, more preferably a temperature equal to or more than the temperature obtained by subtracting 30°C from the boiling point of the hydrophobic solvent, and still more preferably a temperature equal to or more than the temperature obtained by subtracting 20°C from the boiling point of the hydrophobic solvent, from the viewpoint of decreasing the amount of the residual hydrophobic solvent. When the hydrophobic solvent is a mixed solvent containing several types of hydrophobic solvents and it has several boiling points, the boiling point of the hydrophobic solvent in the solvent removal step is determined as the boiling point of the solvent having the highest boiling point among the solvents contained in the mixed solvent, that is, the highest boiling point of the several boiling points.

The temperature at the time of bubbling the gas into the precursor composition is generally set to a temperature equal to or more than the polymerization temperature of the polymerization step.

The temperature at the time of bubbling the gas into the precursor composition is not particularly limited, and it may be from 50°C to 100°C.

(5) Washing step

The method for producing the hollow particles of the present disclosure includes the washing step after the solvent removal step described above. The washing step is for removal of the dispersion stabilizer remaining in the hollow particles obtained by the above-described solvent removal step. The unreacted polymerizable monomer and so on remaining in the hollow particles are also removed by the washing step.

For example, the washing step is preferably carried out by repeating a series of the following steps two or more times: adding acid or alkali to the aqueous dispersion of the hollow particles obtained by the solvent removal step to dissolve the dispersion stabilizer contained in the hollow particles into the aqueous medium, separating the hollow particles from the aqueous medium, dispersing the separated hollow particles in deionized water to be reslurried, and then separating the hollow particles. From the point of view that the residual dispersion stabilizer and the residual unreacted polymerizable monomer are further removed from the hollow particles and the dielectric dissipation factor of the hollow particles is likely to decrease, a series of the operations of dispersing the acid- or alkali-added, separated hollow particles in deionized water to be reslurried and then separating the hollow particles, is preferably repeated three times or more in the washing step. The number of times to carry out the steps is preferably 4 times or more, and more preferably 5 times or more. The upper limit is not particularly limited. From the viewpoint of ease of production, it may be 10 times or less, or it may be 8 times or less.

When the dispersion stabilizer used is an acid-soluble inorganic dispersion stabilizer, acid is preferably added. When the dispersion stabilizer used is an alkali-soluble inorganic dispersion stabilizer, alkali is preferably added.

When the dispersion stabilizer used is the acid-soluble inorganic dispersion stabilizer, the pH of the precursor composition is preferably adjusted to 6.5 or less, and more preferably 6 or less, by adding acid to the aqueous dispersion of the hollow particles. As the added acid, an inorganic acid such as sulfuric acid, hydrochloric acid and nitric acid or an organic acid such as formic acid and acetic acid may be used. Of them, sulfuric acid is particularly preferred, due to its high dispersion stabilizer removal efficiency and small burden on production equipment.

The method for separating the hollow particles from the aqueous medium is not particularly limited. As the method, examples include, but are not limited to, a centrifugation method, a filtration method, and still-standing separation. Among them, a filtration method is preferred from the viewpoint of simplicity of the operation and high dispersion stabilizer removal efficiency. Upon the separation of the hollow particles from the aqueous medium, the hollow particles obtained by the filtration method or the like are preferably dehydrated by a known method.

As the filtration method, for example, any method such as natural filtration (normal pressure filtration), reduced pressure filtration, pressure filtration and centrifugal filtration can be used. Of them, pressure filtration is preferred from the viewpoint of efficient removal of the dispersion stabilizer, unreacted polymerizable monomer and so on remaining in the hollow particles.

In the production method of the present disclosure, an operation to separate the hollow particles from the aqueous medium is performed several times in the washing step. Pressure filtration is preferably carried out in at least one of the performed operations, and it is more preferably carried out in all of the performed operations.

In this step, the washing of the hollow particles for removal of the dispersion stabilizer remaining therein, is preferably carried out at 10°C or more and 90°C or less, more preferably at 30°C or more and 90°C or less, still more preferably at 40°C or more and 90°C or less, and even more preferably at 60°C or more and 90°C or less. The washing temperature is the temperature of the aqueous dispersion of the hollow particles to be washed. That is, the washing step is preferably carried out while keeping the temperature of the aqueous dispersion of the hollow particles within the above range.

When the washing temperature is within the above range, the dispersion stabilizer, unreacted polymerizable monomer and so on remaining in the hollow particles can be efficiently removed. Accordingly, the dielectric property and performance stability of the hollow particles can be improved.

(6) Drying step

The drying step includes drying the washed hollow particles for removal of residual water.

The hollow particles obtained by the washing step is generally in a cake form. In this step, accordingly, a dehydrated cake of the hollow particles is generally dried.

In this step, the water content of the hollow particles before drying is generally from 40% to 80%. In the present disclosure, the water content can be calculated by the following formula (i).

$$\text{Water content (\%)} = \{(w1 - w2) / w1\} \times 100 \quad \text{Formula (i)}$$

In the formula (i), w1 represents the mass of a measurement sample, and w2 represents the mass of the measurement sample after the sample is dried at 200°C for 12 hours and then cooled down to 25°C.

The method for drying the washed hollow particles for removal of residual water is not particularly limited, and a known method can be employed. As the method, examples include, but are not limited to, a reduced-pressure drying method, a heat drying method, a flash drying method and a combination thereof.

In the case of employing a heat drying method, the temperature of the heat drying needs to be equal to or less than the maximum temperature at which the shell structure does not collapse. Accordingly, the heating temperature may be from 50°C to 200°C, may be from 70°C to 200°C, or may be from 100°C to 200°C, depending on the composition of the shell.

In the drying step, the hollow particles may be preliminary dried. The preliminary drying may be performed after the washing step by drying the washed hollow particles by use of a drying apparatus such as a dryer and a drying appliance such as a hand dryer.

The drying atmosphere is not particularly limited and may be appropriately selected depending on the intended application of the hollow particles. The examples of the drying atmosphere include, but are not limited to, air, oxygen, nitrogen and argon. Further, by filling the interior of the hollow particles with gas once and then performing reduced pressure drying, hollow particles in which the interior is evacuated are also temporarily obtained.

As an efficient method for drying the water remaining in the hollow particles, the drying is preferably carried out under a reduced pressure and under an inert gas flow. The term "reduced pressure" is preferably a pressure of 2 kPa or more and 35 kPa or less, and more preferably a pressure of 4 kPa or more and 15 kPa or less. The inert gas is not particularly limited, and examples thereof include, but are not limited to, nitrogen, argon and helium. Of them, nitrogen is preferably used. The flow rate of the inert gas is not particularly limited. From the viewpoint of improving the drying efficiency, the inert gas flow rate is preferably 30 L/min or more, more preferably 200 L/min or more, and still more preferably 300 L/min or more. The upper limit of the inert gas flow rate is not particularly limited. From the viewpoint of production cost, it is preferably 500 L/min or less. Since the drying under the reduced pressure and under the inert gas flow is excellent in drying efficiency, it can be carried out at a relatively low temperature, such as 130°C or less. As just described, by drying the hollow particles at such a relatively low temperature, the production cost can be reduced. On the other hand, from the viewpoint of improving the drying efficiency, the temperature of the drying under the reduced pressure and under the inert gas flow is preferably 20°C or more, and more preferably 40°C or more.

(7) Others

In addition to the steps (1) to (6) mentioned above, a particle interior substitution step may be added, for example. The particle interior substitution step includes substituting the gas or liquid in the interior of the hollow particles with another gas or liquid. By such substitution, the environment of the interior of the hollow particles can be changed; molecules can be selectively confined in the interior of the hollow particles; or the chemical structure of the interior of the hollow particles can be modified in accordance with the intended application.

3. Resin composition

The resin composition of the present disclosure contains at least the hollow particles of the present disclosure described above and a matrix resin. The resin composition is typically in the form of liquid. The resin composition of the present disclosure may be used as a forming material for the resin structure described below.

As the resin composition in the form of liquid, examples include, but are not limited to, a liquid resin composition containing a liquid matrix resin before being subjected to curing reaction, and a liquid resin composition obtained by dissolving or dispersing components in a solvent. The liquid matrix resin before being subjected to curing reaction and the matrix resin dissolved or dispersed in a solvent, may be a thermosetting resin, a room temperature curable resin or a thermoplastic resin. Also, the liquid resin composition may be a resin composition liquefied by melting the matrix resin thereinto.

Because of containing the hollow particles of the present disclosure, the resin composition of the present disclosure and the resin structure obtained by use of the resin composition have a decreased dielectric dissipation factor. In addition, since the hollow particles of the present disclosure are excellent in dielectric property and performance stability, the resin composition containing the hollow particles of the present disclosure and the resin structure obtained by use of the resin composition have improved dielectric property, while a deterioration in the reliability is suppressed.

As the matrix resin, examples include, but are not limited to, a curable resin such as a thermosetting resin, a photocurable resin and a room temperature curable resin, and a thermoplastic resin. Of them, a thermosetting resin, a room temperature curable resin or a thermoplastic resin is preferably used.

The matrix resin may be an unreacted monomer, prepolymer or macromonomer; it may be a polymer; or it may be a precursor of a cured resin, such as a polyamic acid. The matrix resin contained in the resin composition of the present disclosure functions as a binder when cured by, for example, heating or light irradiation, or when cured by use of a curing agent, a polymerization initiator, a catalyst or the like.

As the thermosetting resin, a known thermosetting resin may be used, and it is not particularly limited. As the thermosetting resin, examples include, but are not limited to, a phenolic resin, a melamine resin, a urea resin, an unsaturated polyester resin, an epoxy resin, a polyurethane resin, a silicon resin, an alkyd resin, a benzoxazine resin, an allyl resin, an aniline resin, a modified polyphenylene ether resin, a thermosetting polyimide resin, a maleimide resin, a bismaleimide triazine resin, a liquid crystalline polyester resin, a vinyl ester resin, a cyanate ester resin, and precursors of these resins before curing.

As the room temperature curable resin, examples include, but are not limited to, an adhesive that is curable at room temperature by addition of a catalyst, such as an epoxy adhesive, a silicone adhesive and an acrylic adhesive.

As the thermoplastic resin, examples include, but are not limited to, a polyolefin resin (such as polypropylene and polyethylene), a polyamide resin (such as PA6, PA66 and PA12), a polycarbonate resin, a polyphenylene sulfide resin, a polyether ether ketone resin, a polystyrene resin, a polyphenylene oxide resin, a liquid crystal polymer (LCP), a polyimide, a polyamideimide, a polyetherimide, a polyvinyl chloride, a poly(meth)acrylate, a polyvinylidene fluoride, an acrylonitrile-butadiene-styrene copolymer (ABS), an acrylonitrile-styrene copolymer (AS), a polyphenylene ether, a polyester, a polytetrafluoroethylene and a thermoplastic elastomer. In general, a thermoplastic elastomer has properties such that it shows rubber elasticity at ordinary temperature (25°C) and it can be plasticized and molded at high temperature. As the thermoplastic elastomer, examples include, but are not limited to, a urethane-based elastomer, a styrene-based elastomer, an olefin-based elastomer, an amide-based elastomer and an ester-based elastomer.

In applications that needs a decrease in dielectric dissipation factor, a thermosetting or thermoplastic resin is preferably used as the matrix resin. Of them, a thermosetting resin such as an epoxy resin, a thermosetting polyimide resin, a modified polyphenylene ether resin, a silicon resin, a benzoxazine resin and a melamine resin is preferably used.

As the epoxy resin (an epoxy compound), examples include, but are not limited to, a bixylenol type epoxy resin, a bisphenol A type epoxy resin, a bisphenol F type epoxy resin, a bisphenol S type epoxy resin, a bisphenol AF type epoxy resin, a dicyclopentadiene type epoxy resin, a trisphenol type epoxy resin, a naphthol novolac type epoxy resin, a phenol novolac type epoxy resin, a tert-butyl-catechol type epoxy resin, a naphthalene type epoxy resin, a naphthol type epoxy resin, an anthracene type epoxy resin, a glycidyl amine type epoxy resin, a glycidyl ester type epoxy resin, a cresol novolac type epoxy resin, a phenol aralkyl type epoxy resin, a biphenyl type epoxy resin, a linear aliphatic epoxy resin, an epoxy resin having a butadiene structure, an alicyclic epoxy resin, a heterocyclic epoxy resin, a spiro ring-containing epoxy resin, a cyclohexane type epoxy resin, a cyclohexanedimethanol type epoxy resin, a naphthylene ether type epoxy resin, a trimethylol type epoxy resin, a tetraphenylethane type epoxy resin, an isocyanurate type epoxy resin, a phenolphthalimidine type epoxy resin and a phenolphthalein type epoxy resin.

These matrix resins can be used alone or in combination of two or more.

From the viewpoint of ease of obtaining the resin composition and resin structure with excellent dielectric property and reliability, the matrix resin particularly preferably contains the epoxy resin (the epoxy compound) or the modified polyphenylene ether resin.

In the matrix resin containing the epoxy resin (the epoxy compound), the content of the epoxy resin (the epoxy compound) in 100% by mass of the matrix resin, is preferably 70% by mass or more, more preferably 80% by mass or more, and still more preferably 90% by mass or more. The matrix resin may consist of the epoxy resin (the epoxy compound).

In the matrix resin containing the modified polyphenylene ether resin, the content of the modified polyphenylene ether resin in 100% by mass of the matrix resin, is preferably 70% by mass or more, more preferably 80% by mass or more, and still more preferably 90% by mass or more. The matrix resin may consist of the modified polyphenylene ether resin.

The epoxy resin (the epoxy compound) is preferably a bisphenol A type epoxy resin, from the viewpoint of having a low dielectric dissipation factor, a low relative permittivity and excellent dielectric property, and having excellent reliability. A cresol novolac type epoxy resin is also preferred from the viewpoint of having excellent dielectric property and reliability. An alicyclic epoxy resin is preferred from the viewpoint of having excellent dielectric property and particularly from the viewpoint of having a low relative permittivity. As the epoxy resin (the epoxy compound), a bisphenol A type epoxy resin is preferred from the viewpoint of having excellent dielectric property and reliability.

In the resin composition of the present disclosure, the content of the matrix resin is not particularly limited. In general, it is preferably from 40% by mass to 95% by mass, more preferably from 50% by mass to 95% by mass, and still more preferably from 70% by mass to 95% by mass, or it may be from 85% by mass to 95% by mass in 100% by mass of the total solid content of the resin composition. When the content of the matrix resin is equal to or more than the lower limit value, the formability of the resin composition can improve, and the mechanical strength of the resin composition when formed into a structure can improve. When the content of the resin is equal to or less than the upper limit value, the hollow particles can be sufficiently contained; therefore, excellent effects are exerted by the hollow particles, such as the effect of decreasing the dielectric dissipation factor, permittivity and weight of the resin composition, and the effect of imparting heat insulation to the resin composition.

[Hollow particles]

The hollow particles contained in the resin composition of the present disclosure are the above-described hollow particles of the present disclosure.

In the resin composition of the present disclosure, the content of the hollow particles is not particularly limited. In 100% by mass of the total solid content of the resin composition, the content of the hollow particles is preferably 0.1% by mass or more, more preferably 1% by mass or more, still more preferably 5% by mass or more, and even more preferably 10% by mass or more as the lower limit. On the other hand, the content of the hollow particles is preferably 50% by mass or less, more preferably 30% by mass or less, still more preferably 20% by mass or less, and even more preferably 15% by mass or less as the upper limit. When the content of the hollow particles is equal to or more than the lower limit value, excellent effects are exerted by the hollow particles, such as the effect of decreasing the dielectric dissipation factor, permittivity and weight of the resin composition. When the content of the hollow particles is equal to or less than the upper limit value, the matrix resin can be sufficiently contained in the resin composition; therefore, a deterioration in the properties of the resin composition when formed into a structure can be suppressed, and the mechanical properties can be improved.

[Solvent]

The resin composition of the present disclosure may further contain a solvent for dissolving or dispersing the components. A known solvent can be used as the solvent, and it is appropriately selected depending on the type of the resin.

[Other additives]

As needed, the resin composition of the present disclosure may further contain additives to the extent that does not impair the effects of the present disclosure, such as a curing agent, a curing accelerator, a polymerization initiator, a UV absorber, a colorant, a thermal stabilizer, a filler and a flame retardant.

As the filler, examples include, but are not limited to, an inorganic filler such as silica, talc, glass beads, asbestos, gypsum, diatomite, smectite, bentonite, montmorillonite, sericite, activated clay, alumina, zinc oxide, iron oxide, magnesium oxide, tin oxide, titanium oxide, calcium carbonate, magnesium carbonate, magnesium hydroxide, aluminum hydroxide, aluminum nitride, silicon nitride, barium sulfate and calcium silicate, and an organic filler such as polyester fine particles, polyurethane fine particles, vinyl polymer fine particles and acrylic polymer fine particles. These fillers can be used alone or in combination of two or more. As the filler, the inorganic filler is preferably used, and silica is particularly preferably used. When the filler is contained in the resin composition of the present disclosure, the processability of the resin composition improves, and properties such as heat resistance are imparted to the resin composition. Since the thermal expansion coefficient of silica is low, the resin composition with excellent processability is easily obtained by containing silica as the filler in the resin composition.

The content of the filler is not particularly limited. From the viewpoint of the toughness of the resin composition, in the total solid content (100% by mass) of the resin composition, the filler content is preferably from 1% by mass to 80% by mass, and more preferably from 5% by mass to 70% by mass.

4. Resin structure

The resin structure of the present disclosure contains the hollow particles and matrix resin of the present disclosure described above. In the resin structure, the matrix resin is a solidified product. The resin structure of the present disclosure has properties such as a low dielectric dissipation factor, a low permittivity, lightweight and heat insulation, since it contains the hollow particles. In addition, since the hollow particles of the present disclosure are excellent in dielectric property and performance stability, the resin structure containing the hollow particles of the present disclosure is a structure in which the dielectric property is improved, while a deterioration in the reliability is suppressed. For example, a prepreg, an insulating layer included in a metal foil-clad laminate, and an insulating layer included in a printed circuit board are each the resin structure of the present disclosure. However, the resin structure of the present disclosure is not limited to them.

The resin structure of the present disclosure may be a structure obtained by solidifying the above-described resin composition of the present disclosure into a desired form, or it may be a structure obtained by melt-kneading the hollow particles of the present disclosure and a thermoplastic resin and molding the resulting mixture.

The solidified product of the matrix resin is a resin solidified through or not through a chemical reaction, such as a resin cured by a curing reaction, a resin solidified by drying, and a resin solidified by cooling a thermoplastic resin. The resin structure obtained by use of the resin composition in liquid form may contain, as the matrix resin, a cured resin product which is cured by use of a curing agent, a polymerization initiator, a catalyst or the like, as needed. In this case, the matrix resin may contain a curing agent or the like. The resin structure obtained by melt-kneading the hollow particles of the present disclosure and the thermoplastic resin and molding the resulting mixture, contains a solidified product as the matrix resin, which is the thermoplastic resin solidified by cooling.

The resin structure obtained by use of the above-described resin composition of the present disclosure can be obtained by, for example, curing the above-described curable resin. That is, the resin structure of the present disclosure may be a cured product of the above-described resin composition of the present disclosure. The resin structure obtained by curing the above-described curable resin by use of the above-described resin composition of the present disclosure, can be obtained by a method comprising preparing a resin composition containing the hollow particles of the present disclosure, a matrix resin and a curing agent and curing the resin composition.

The method for curing the curable resin is not particularly limited. As the method, examples include, but are not limited to, heating and light irradiation such as ultraviolet and electron beam. In the case of a curable resin that is curable at room temperature by addition of a catalyst or the like, the curable resin may be cured by adding a catalyst or the like to the resin and mixing them at room temperature.

The curing agent (crosslinking agent) or catalyst for curing the matrix resin can be appropriately selected from the group consisting of known agents and catalysts, depending on the type of the matrix resin, and it is not particularly limited. As the curing agent for curing the epoxy resin, examples include, but are not limited to, an amine, an acid anhydride, an imidazole, a thiol, a phenol, a naphthol, a benzoxazine, a cyanate ester and a carbodiimide. These curing agents may be used alone or in combination of two or more.

The content of the curing agent is appropriately adjusted depending on the matrix resin type, and it is not particularly limited. For example, with respect to 100 parts by mass of the resin (the base material), the content of the curing agent may be from 5 parts by mass to 120 parts by mass.

The resin composition in liquid form may be cured by, for example, applying the resin composition to a support, drying the applied resin composition as needed, and then curing the dried resin composition in a curing condition.

As the material of the support, examples include, but are not limited to, a resin such as polyethylene terephthalate and polyethylene naphthalate, and a metal such as copper, aluminum, nickel, chromium, gold and silver. The surface of the support may be coated with a release agent. The resin composition in liquid form can be applied by a known method. As the method, examples include, but are not limited to, dip coating, roll coating, curtain coating, die coating, slit coating and gravure coating.

In the case of curing the resin composition in liquid form, it may be cured as follows: a sheet-shaped fibrous substrate is impregnated with the resin composition, dried as needed, and then cured in a curing condition.

When the resin composition contains the solvent, the resin composition is preferably dried after the application or impregnation. From the viewpoint of removal of the solvent while the resin composition is in an uncured or semi-cured state, the drying temperature is preferably a temperature at which the resin composition is not cured, and it is generally 20°C or more and 200°C or less, and preferably 30°C or more and 150°C or less. The drying time is generally 30 seconds or more and 1 hour or less, and preferably 1 minute or more and 30 minutes or less.

The resin composition curing temperature is appropriately adjusted depending on the type of the matrix resin, and it is not particularly limited. In the case of the thermosetting resin, the curing temperature is generally 30°C or more and 400°C or less, preferably 70°C or more and 300°C or less, and more preferably 100°C or more and 200°C or less. The heating method is not particularly limited. For example, an electric oven may be used.

The curing time is generally 5 minutes or more and 5 hours or less, and preferably 30 minutes or more and 3 hours or less.

In the resin structure of the present disclosure, which is obtained by melt-kneading the hollow particles of the present disclosure and the thermoplastic resin and molding the resulting mixture, the thermoplastic resin is not particularly limited, and a conventionally-known thermoplastic resin can be used as the thermoplastic resin. As the thermoplastic resin, examples include, but are not limited to, those exemplified above as the thermoplastic resin that is applicable to the resin composition of the present disclosure.

The melt-kneading temperature is not particularly limited, as long as it is a temperature at which the thermoplastic resin used can be melted. For example, it may be 150°C or more. From the viewpoint of suppressing the collapse of the hollow particles, it is preferably 300°C or less.

The melt-kneading can be carried out by a known method, and it is not particularly limited. For example, it can be carried out by use of a kneader such as a uniaxial or biaxial kneader.

The molding method is not particularly limited, and a known molding method such as extrusion molding, injection molding and press molding can be employed.

In the resin structure of the present disclosure, the content of the matrix resin contained therein is not particularly limited. From the viewpoint of suppressing a deterioration in the properties of the resin structure and increasing the mechanical strength thereof, the content of the matrix resin is preferably 30% by volume or more, and more preferably 40% by volume or more. From the viewpoint of sufficiently containing the hollow particles, it is preferably 90% by volume or less, and more preferably 80% by volume or less.

The content of the hollow particles contained in the resin structure of the present disclosure is not particularly limited. The content of the hollow particles is preferably 10% by volume or more, and more preferably 20% by volume or more as the lower limit. On the other hand, it is preferably 80% by volume or less, more preferably 70% by volume or less, and still more preferably 60% by volume or less as the upper limit. When the content of the hollow particles is equal to or more than the lower limit value, excellent effects are exerted by the hollow particles, such as the effect of decreasing the dielectric dissipation factor, permittivity and weight of the resin structure and the effect of heat insulation. When the content of the hollow particles is equal to or less than the upper limit value, the matrix resin can be sufficiently contained in the resin structure; therefore, a deterioration in the properties of the resin structure can be suppressed, and the mechanical strength can be increased.

As needed, the resin structure of the present disclosure may further contain additives. As the additives, those exemplified above as the additives that are applicable to the above-described resin composition of the present disclosure, may be used.

The resin structure of the present disclosure may contain organic or inorganic reinforcing fibers such as carbon fibers, glass fibers, aramid fibers, polyethylene fibers, cellulose nanofibers and liquid crystal polymer (LCP) fibers. The reinforcing fibers used in the resin structure of the present disclosure may be those used as the substrate of a prepreg, or they may be those contained as a filler.

The form of the resin structure is not particularly limited, and it may be any kind of formable form such as a sheet form, a film form and a plate form. When the resin structure contains fibers, the fibers in the resin structure may be in the form of non-woven fabric, or the resin structure of the present disclosure may be a structure obtained by adding the hollow particles of the present disclosure to a fiber reinforced plastic.

The dielectric dissipation factor of the resin structure of the present disclosure at a frequency of 10 GHz is preferably less than $1.20 \times 10^{-2}$, more preferably less than $9.70 \times 10^{-3}$, still more preferably $5.00 \times 10^{-3}$ or less, even more preferably $4.50 \times 10^{-3}$ or less, and particularly preferably $4.30 \times 10^{-3}$ or less. The lower limit of the dielectric dissipation factor is not particularly limited, and it may be $1.00 \times 10^{-3}$ or more, for example.

The relative permittivity of the resin structure of the present disclosure at a frequency of 10 GHz is preferably 2.50 or less, more preferably 2.30 or less, and still more preferably 2.20 or less. The lower limit of the relative permittivity is not particularly limited, and it may be 1.00 or more, for example.

In the present disclosure, the relative permittivity and dielectric dissipation factor of the resin structure are measured by use of a perturbation-type measuring device.

As the applications of the resin composition and resin structure of the present disclosure, examples include, but are not limited to, those in which the hollow particles of the present disclosure are used. Since the resin composition and resin structure of the present disclosure have excellent dielectric property and performance stability, they are preferably used in the electronics or electric field, and particularly preferably used as an electronic circuit board material.

Examples

Hereinbelow, the present disclosure is described more specifically using examples and comparative examples. However, the present disclosure is not limited to these examples. Also, "part (s) " and "%" are on a mass basis unless otherwise specified.

[Example 1]

1. Preparation of hollow particles

(1) Mixture liquid preparation step

First, the following materials were mixed to produce an oil phase.

    Divinylbenzene (DVB) 37.5 parts
    Ethylvinylbenzene (EVB) 1.6 parts
    t-Butylperoxy diethylacetate 0.89 parts
    Hydrophobic solvent (heptane) 60.8 parts

Next, in a stirring tank, an aqueous solution in which 11.0 parts of sodium hydroxide (an alkali metal hydroxide) was dissolved in 55 parts of deionized water, was gradually added under stirring to an aqueous solution in which 15.7 parts of magnesium chloride (a water-soluble polyvalent metal salt) was dissolved in 225 parts of deionized water, thereby preparing a magnesium hydroxide (sparingly water-soluble metal hydroxide) colloidal dispersion (magnesium hydroxide 8 parts). The dispersion was used as an aqueous phase.

The obtained aqueous phase and oil phase were mixed, thereby preparing a mixture liquid.

(2) Suspension step

The mixture liquid obtained in the mixture liquid preparation step was suspended with an emulsifying disperser (product name: HOMOMIXER, manufactured by PRIMIX Corporation) for one minute in the condition that the tip speed of the rotor was 88 m/s, thereby preparing a suspension in which droplets of a monomer composition including the hydrophobic solvent were dispersed in water.

(3) Polymerization step

In a nitrogen atmosphere, the temperature of the suspension obtained in the suspension step was increased to 80°C. The stirring power of the stirring blades was set to 0.04 kW/m$^3$, and the suspension was stirred for 24 hours, thereby performing a polymerization reaction. Accordingly, a precursor composition was obtained, which was a slurry solution in which precursor particles including the hydrophobic solvent were dispersed in water.

(4) Solvent removal step

The solvent removal step was carried out by the following procedure, using the stirring apparatus as shown in FIG. 2. As the stirring tank, a stirring tank with a capacity of 3.6 L was used. The interior of the stirring tank when supplying the precursor composition was a nitrogen atmosphere.
First, 2.6 L of the precursor composition obtained in the polymerization step was supplied from the supply tank to the stirring tank. The stirring power of the stirring blades disposed in the interior of the stirring tank was set to 0.04 kW/m$^3$, and the temperature of the precursor composition was increased to 95°C, while stirring the precursor composition in the stirring tank. The pressure in the interior of the stirring tank was reduced to 40 kPa. Nitrogen was bubbled into the precursor composition for 15 hours by stirring the precursor composition in the stirring tank, while nitrogen was directly injected into the precursor composition at a flow rate of 10 L/min (the flow rate per unit volume was 10,000 L/(min·m$^3$) since the vapor phase was 1 L) from the gas inlet on the bottom of the stirring tank (the gas inlet 13a in FIG. 2) toward the direction opposite to the direction of the force of gravity. During the bubbling, the cycle of stirring the fed precursor composition in the stirring tank, discharging the precursor composition to the supply tank, and then supplying again the precursor composition from the supply tank to the stirring tank, was repeated to circulate the precursor composition in the stirring apparatus. Also, during the bubbling, a part of the fed precursor composition was supplied from the stirring tank to the spray mechanism and continuously sprayed to the liquid surface of the precursor composition in the stirring tank. Accordingly, the aqueous dispersion of the hollow particles in which the hollow portion was filled with nitrogen, was obtained.

(5) Washing step

The aqueous dispersion of the hollow particles obtained in the solvent removal step was mixed with dilute sulfuric acid in an environment at 25°C and stirred for 10 minutes, thereby obtaining a pH-controlled slurry in which the pH was controlled to 5.5 or less. Keeping the temperature at 25°C, the pH-controlled slurry was subjected to pressure filtration and dehydrated, thereby obtaining a dehydrated cake of the hollow particles. A series of the following operations was repeated 6 times: washing the obtained dehydrated cake with 400 parts of deionized water, subjecting the washed cake to pressure filtration, and dehydrating the cake.
In Tables 1 to 4, the number of times a series of the above-mentioned operations was repeated, is expressed as "Number of washing times".

(6) Drying step

After the washing step, the dehydrated cake (water content 67%, thickness 2 cm) was preliminary dried using a dryer at a temperature of 40°C. Then, the cake was heated for 12 hours using a vacuum dryer under a vacuum condition at 200°C and 4 kPa, thereby removing the residual water from the particles. Accordingly, the hollow particles of Example 1 were obtained.

[Example 2]

The hollow particles of Example 2 were produced in the same manner as Example 1, except that in "(4) Solvent removal step", the bubbling time was changed to 20 hours, and the precursor composition was not sprayed from the spray mechanism.

[Example 3]

The hollow particles of Example 3 were produced in the same manner as Example 1, except that in "(4) Solvent removal step", nitrogen was bubbled into the precursor composition for 20 hours by using, as the gas inlet, a gas inlet on the top of the stirring tank (the gas inlet 13c in FIG. 2) and by stirring the precursor composition in the stirring tank while introducing nitrogen into the vapor phase in the stirring tank; moreover, the precursor composition was not sprayed from the spray mechanism.

[Example 4]

The hollow particles of Example 4 were produced in the same manner as Example 1, except that in "(4) Solvent removal step", the interior of the stirring tank was kept at atmospheric pressure; the bubbling time was changed to 20 hours; and the precursor composition was not sprayed from the spray mechanism.

[Example 5]

The hollow particles of Example 5 were produced in the same manner as Example 1, except that in "(4) Solvent removal step", the precursor composition was not circulated and was kept in the stirring tank; the precursor composition was not sprayed from the spray mechanism; and the bubbling time was changed to 20 hours.

[Example 6]

The hollow particles of Example 6 were produced in the same manner as Example 1, except that in "(4) Solvent removal step", the bubbling time was changed to 10 hours, and the precursor composition was not sprayed from the spray mechanism.

[Example 7]

The hollow particles of Example 7 were produced in the same manner as Example 1, except that in "(4) Solvent removal step", the interior of the stirring tank was pressurized to 200 kPa; the bubbling time was changed to 20 hours; and the precursor composition was not sprayed from the spray mechanism.

[Example 8]

The hollow particles of Example 8 were produced in the same manner as Example 1, except for the following: in " (3) Polymerization step", the polymerization time was changed to 60 hours, and in "(4) Solvent removal step", the bubbling time was changed to 30 minutes, and the precursor composition was not sprayed from the spray mechanism.

[Example 9]

The hollow particles of Example 9 were produced in the same manner as Example 1, except that in "(1) Mixture liquid preparation step", the amount of divinylbenzene (DVB) added to the oil phase and the amount of ethylvinylbenzene (EVB) added thereto were changed according to Table 1.

[Example 10]

The hollow particles of Example 10 were produced in the same manner as Example 1, except that in "(4) Solvent removal step", the stirring power of the stirring blades was changed to 0.57 kW/m$^3$.

[Example 11]

The hollow particles of Example 11 were produced in the same manner as Example 1, except that in "(5) Washing step", the number of times to repeat a series of the operations of washing the obtained dehydrated cake with 400 parts of deionized water, subjecting the washed cake to pressure filtration, and dehydrating the cake, was changed from 6 times to 3 times.

[Comparative Example 1]

The hollow particles of Comparative Example 1 were produced in the same manner as Example 1, except that in "(1) Mixture liquid preparation step", the amount of divinylbenzene (DVB) added to the oil phase and the amount of ethylvinylbenzene (EVB) added thereto were changed according to Table 2.

[Comparative Example 2]

The hollow particles of Comparative Example 2 were produced in the same manner as Example 1, except that in "(4) Solvent removal step", the bubbling time was changed to 30 minutes.

[Comparative Example 3]

The hollow particles of Comparative Example 3 were produced in the same manner as Example 1, except that in " (3) Polymerization step", the stirring power of the stirring blades was changed to 0.30 kW/m$^3$, and in "(4) Solvent removal step", the stirring power of the stirring blades was also changed to 0.30 kW/m$^3$.

[Comparative Example 4]

The hollow particles of Comparative Example 4 were produced in the same manner as Example 1, except that in "(5) Washing step", the number of times to repeat a series of the operations of washing the obtained dehydrated cake with 400 parts of deionized water, subjecting the washed cake to pressure filtration, and dehydrating the cake, was changed to only one time.

[Comparative Example 5]

The hollow particles of Comparative Example 5 were produced in the same manner as Example 1, except that in "(4) Solvent removal step", the bubbling time was changed to 30 minutes, and in "(5) Washing step", the number of times to repeat a series of the operations of washing the obtained dehydrated cake with 400 parts of deionized water, subjecting the washed cake to pressure filtration, and dehydrating the cake, was changed to 10 times.

[Example 12]

The hollow particles of Example 12 were produced in the same manner as Example 1, except for the following: in "(4) Solvent removal step", with respect to 100 parts of the precursor composition in the stirring tank, 0.19 parts of a polyether-based defoaming agent (product name: SN DEFOAMER PC, manufactured by San Nopco Limited) was added; in "(5) Washing step", the washing temperature was changed from 25°C to 90°C; and in "(6) Drying step", instead of heating the cake in the vacuum dryer under the vacuum condition at 200°C and 4 kPa, the cake was heated for 12 hours under a vacuum condition at 120°C and 4 kPa and under a nitrogen flow (flow rate 400 L/min).

[Example 13]

The hollow particles of Example 13 were produced in the same manner as Example 12, except that instead of 0.19 parts of the polyether-based defoaming agent, 0.38 parts of a mineral oil-based defoaming agent (product name: SN DEFOAMER 479, manufactured by San Nopco Limited) was used.

[Example 14]

The hollow particles of Example 14 were produced in the same manner as Example 12, except that instead of 0.19 parts of the polyether-based defoaming agent, 0.03 parts of an alcohol-based defoaming agent (product name: DAPPO H-312, manufactured by San Nopco Limited) was used.

[Example 15]

The hollow particles of Example 15 were produced in the same manner as Example 1, except for the following: in "(4) Solvent removal step", with respect to 100 parts of the precursor composition in the stirring tank, 0.19 parts of a polyether-based defoaming agent (product name: SN DEFOAMER PC, manufactured by San Nopco Limited) was added, and the interior of the stirring tank was pressurized to 500 kPa; in "(5) Washing step", the washing temperature was changed from 25°C to 90°C; and in "(6) Drying step", instead of heating the cake in the vacuum dryer under the vacuum condition at 200°C and 4 kPa, the cake was heated for 12 hours under a vacuum condition at 120°C and 4 kPa and under a nitrogen flow (flow rate 400 L/min).

[Example 16]

The hollow particles of Example 16 were produced in the same manner as Example 15, except that the pressure of the interior of the stirring tank was changed from 500 kPa to 900 kPa.

[Example 17]

The hollow particles of Example 17 were produced in the same manner as Example 15, except that the polyether-based defoaming agent was not added, and the pressure of the interior of the stirring tank was changed from 500 kPa to 900 kPa.

[Example 18]

The hollow particles of Example 18 were produced in the same manner as Example 12, except that the washing temperature of the washing step was changed from 90°C to 50°C.

[Example 19]

The hollow particles of Example 19 were produced in the same manner as Example 12, except that the nitrogen gas flow rate of the drying step was changed from 400 L/min to 200 L/min.

[Example 20]

The hollow particles of Example 20 were produced in the same manner as Example 1, except for the following: in "(1) Mixture liquid preparation step", instead of 37.5 parts of DVB and 1.6 parts of EVB, 32.7 parts of DVB, 1.4 parts of EVB and 5 parts of a modified polyphenylene ether oligomer (product name: OPE-2St 1200, manufactured by Mitsubishi Gas Chemical Company, Inc.) were used as the polymerizable monomer; in "(4) Solvent removal step", with respect to 100 parts of the precursor composition in the stirring tank, 0.19 parts of a polyether-based defoaming agent (product name: SN DEFOAMER PC, manufactured by San Nopco Limited) was added; in "(5) Washing step", the washing temperature was changed from 25°C to 90°C; and in "(6) Drying step", instead of heating the cake in the vacuum dryer under the vacuum condition at 200°C and 4 kPa, the cake was heated for 12 hours under a vacuum condition at 120°C and 4 kPa and under a nitrogen flow (flow rate 400 L/min).

[Example 21]

The hollow particles of Example 21 were produced in the same manner as Example 20, except that instead of 5 parts of the modified polyphenylene ether oligomer, 5 parts of glycidyl methacrylate was used.

[Example 22]

The hollow particles of Example 22 were produced in the same manner as Example 1, except for the following: in "(1) Mixture liquid preparation step", instead of 37.5 parts of DVB and 1.6 parts of EVB, 16.9 parts of ethylene glycol dimethacrylate, 12.7 parts of styrene and 12.7 parts of methyl methacrylate were used as the polymerizable monomer, and instead of 60.8 parts of heptane, 57.6 parts of hexane was used as the hydrophobic solvent; in "(4) Solvent removal step", with respect to 100 parts of the precursor composition in the stirring tank, 0.19 parts of a polyether-based defoaming agent (product name: SN DEFOAMER PC, manufactured by San Nopco Limited) was added; in "(5) Washing step", the washing temperature was changed from 25°C to 90°C; and in "(6) Drying step", instead of heating the cake in the vacuum dryer under the vacuum condition at 200°C and 4 kPa, the cake was heated for 12 hours under a vacuum condition at 120°C and 4 kPa and under a nitrogen flow (flow rate 400 L/min) .

[Comparative Example 6]

The hollow particles of Comparative Example 6 were produced in the same manner as Example 22, except that the polyether-based defoaming agent was not added, and in the washing step, the number of times to repeat a series of the operations of washing the obtained dehydrated cake with 400 parts of deionized water, subjecting the washed cake to pressure filtration, and dehydrating the cake, was changed from 6 times to one time.

[Evaluation]

The hollow particles obtained in the examples and the comparative examples were measured and evaluated as follows. The results are shown in Tables 1 to 4.

1. SEM observation of hollow particles

Out of the hollow particles obtained in each of the Examples and the Comparative Examples, 100 particles were observed by SEM to check the absence or presence of pores having a diameter of 100 nm or more on the particle surface. When the number of hollow particles with pores having a diameter of 100 nm or more was less than 5, particle breakage was evaluated as "absent". When the number of hollow particles with pores having a diameter of 100 nm or more was 5 or more, particle breakage was evaluated as "present".

2. Percentage of irregular-shaped particles

A mixed solution was obtained by adding 0.10 g to 0.12 g of the hollow particles to a linear alkylbenzene sulfonate aqueous solution (concentration 0.3%) and subjected to a dispersion treatment for 5 minutes by an ultrasonic cleaner, thereby preparing a measurement sample. Using a flow particle image analyzer (product name: IF-3200, manufactured by JASCO International Co., Ltd.), the particles contained in the measurement sample were measured for circularity in the following measurement conditions. The percentage by mass of the particles having a circularity of 0.85 or less was calculated and defined as the percentage of the irregular-shaped particles.

The number of the particles contained in the measurement sample increased as the particle diameter decreased. In all of the Examples and the Comparative examples, the number of the contained particles was within a range of from 1000 to 3000.

(Measurement conditions)

Thickness of the spacer of a flow cell: 50 $\mu$m
Telecentric zoom lens magnification: 4.5 x
Total magnification: 9.0 x
Measured amount: 0.5 mL
Image resolution: 0.185 $\mu$m/pixel
Detection algorithm: Ghost detection
Threshold: 15%

3. Particle diameter and particle size distribution

The particle size distribution of the hollow particles on volumetric basis was obtained by use of a particle size distribution measuring device by the Coulter counter method (product name: MULTISIZER 4e, manufactured by Beckman Coulter, Inc.) Then, the particle diameter at 50% cumulative volume (D50) and the particle diameter at 95% cumulative volume (D95) were obtained, and the ratio of D95 to D50 (D95/D50) was calculated.

The measurement conditions were as follows.

Aperture diameter: 50 $\mu$m
Dispersion medium: ISOTON II (product name)
Concentration: 10%
Number of the measured hollow particles: 100,000 particles

More specifically, 0.2 g of the sample hollow particles were put in a beaker. As a dispersant, a surfactant aqueous solution (product name: DRIWEL, manufactured by Fujifilm Corporation) was added thereto. In addition, 2 mL of the dispersion medium was added to wet the hollow particles. Then, 10 mL of the dispersion medium was added thereto. The mixture was dispersed for one minute with an ultrasonic disperser. Then, the measurement with the above-described particle size measuring device was carried out.

4. Void ratio

4-1. Measurement of the apparent density of the hollow particles

First, approximately 30 $cm^3$ of the hollow particles were introduced into a measuring flask with a volume of 100 $cm^3$, and the mass of the introduced hollow particles was precisely weighed. Next, the measuring flask in which the hollow particles were introduced, was precisely filled with isopropanol up to the marked line while care was taken so that air bubbles did not get in. The mass of the isopropanol added to the measuring flask was precisely weighed, and the apparent density $D_1$ (g/$cm^3$) of the hollow particles was calculated by the following formula (I).

Apparent density $D_1$ = [Mass of the hollow particles] / (100 - [Mass of the isopropanol] / [Specific gravity of the isopropanol at the measuring temperature])      Formula (I)

4-2. Measurement of the true density of the hollow particles

The hollow particles were pulverized in advance; approximately 10 g of the pulverized hollow particles were introduced into a measuring flask with a volume of 100 $cm^3$; and the mass of the introduced pulverized particles were precisely weighed.

Then, similarly to the measurement of the apparent density mentioned above, isopropanol was added to the measuring flask; the mass of the isopropanol was precisely weighed; and the true density $D_0$ (g/$cm^3$) of the hollow particles was calculated by the following formula (II).

True density $D_0$ = [Mass of the pulverized hollow particles] / (100 - [Mass of the isopropanol] / [Specific gravity of the isopropanol at the measuring temperature])      Formula (II)

4-3. Calculation of void ratio

The void ratio of the hollow particles was calculated by the following formula (III) using the apparent density $D_1$ and the true density $D_0$.

Void ratio (%) = 100 - (Apparent density $D_1$ / True density $D_0$) $\times$ 100      Formula (III)

5. pH and electric conductivity of aqueous dispersion of hollow particles

A non-ionic surfactant (product name: SN DEFOAMER 180, manufactured by: San Nopco Limited, a polyether-based surfactant) was dissolved at a concentration of 0.1% by mass in deionized water to obtain an aqueous solution (electric conductivity: 1 $\mu$S/cm or less). To 100 mL of the aqueous solution, hollow particles with a volume of 0.35 $cm^3$ were added. At room temperature (25°C), the aqueous solution was stirred for three hours at 300 rpm, thereby obtaining an aqueous dispersion of the hollow particles. The pH and electric conductivity of the obtained aqueous dispersion of the hollow particles were measured. By visual confirmation, the obtained aqueous dispersion of the hollow particles was found to be in such a state, that powder was not present in the upper part and was entirely dispersed in the water. As the hollow particles with a volume of 0.35 $cm^3$, hollow particles having the weight (g) obtained by the following formula (1) were weighed out, collected and used.

Weight (g) of the hollow particles with a volume of 0.35 $cm^3$ = Apparent density $D_1$ (g/$cm^3$) of the hollow particles $\times$ 0.35 ($cm^3$)      Formula (1)

6. Residual monomer content

The content of the unreacted polymerizable monomer in the hollow particles obtained in the Examples and the Comparative Examples, was measured by the following method.

First, 3 g of the solid content of the hollow particles was precisely weighed in milligrams. Next, 27 g of ethyl acetate was added thereto, and they were stirred for 15 minutes. Then, 13 g of methanol was added thereto, and they were stirred for 10 minutes. A solution thus obtained was left to stand to deposit an insoluble component, and the supernatant of the solution was collected as a measurement sample. Next, the measured sample was injected into a gas chromatograph, and the content of the unreacted polymerizable monomer in the measurement sample was quantified by gas chromatography (GC) in the following conditions. The content of the unreacted polymerizable monomer contained in the hollow particles was calculated and regarded as the residual monomer content.

(Analysis conditions)

Apparatus: GC-2010 (manufactured by Shimadzu Corporation)
Column: DB-5 (manufactured by Agilent Technologies Japan, Ltd.)
Membrane thickness 0.25 $\mu$m, Inner diameter 0.25 mm, Length 30 m
Detector: FID
Carrier gas: Nitrogen (linear velocity: 28.8 cm/sec)
Temperature of the injection port: 200°C
Temperature of the detector: 250°C
Temperature of the oven: Raised from 40°C to 230°C at a rate of 10°C/minute, and held at 230°C for 2 minutes
Amount of sampling: 2 $\mu$L

7. Post THF extraction residue percentage

First, 0.8 g to 1.0 g of the hollow particles were weighed, and the result was defined as M1. The weighed hollow particles were put in a filter paper thimble (No. 84 manufactured by ADVANTEC), and the filter paper thimble was placed in a Soxhlet extractor. Next, 100 ml of tetrahydrofuran (THF) was used as a solvent, and it was refluxed for 6 hours to obtain an extract. From the extract, THF was removed by evaporation to obtain a nonvolatile component. The nonvolatile component was dried in vacuum at 50°C for one hour to obtain a residue. The residue was weighed, and the result was defined as M2. The post THF extraction residue percentage of the hollow particles was obtained by the following formula (2).

Post THF extraction residue percentage (%) = (M2 / M1) $\times$ 100          Formula (2)

8. Residual metal amount

Wet digestion of the weighed hollow particles (10 g) was carried out by use of a microwave (MULTIWAVE 3000 manufactured by PerkinElmer Inc.) ICP optical emission spectroscopy of the thus-obtained degradation product was carried out by use of an ICP optical emission spectrometer (OPTIMA 2100 DV manufactured by PerkinElmer Inc.) to measure the total mass of the metal. The metal species was specified by elemental analysis by X-ray fluorescence spectrometry (XRF). The ratio of the total mass of the metal in the degradation product with respect to the mass of the hollow particles, was calculated and regarded as the residual metal amount in the hollow particles.

9. Relative permittivity (Dk) and dielectric dissipation factor (Df)

Using a perturbation-type measuring device (manufactured by: AET Inc., model: ADMS01Nc), the relative permittivity and dielectric dissipation factor of the hollow particles were measured at a frequency of 10 GHz, a temperature of 30°C and a humidity of 50%.

10. Performance stability

10-1. Preparation of resin composition containing hollow particles

First, 90 parts of a brominated epoxy resin (product name: YDB-500EK75, manufactured by: Tohto Kasei Co., Ltd., epoxy equivalent: 500, solid content: 75% by mass) and 10 parts of a cresol novolac type epoxy resin (product name: YDCN220EK75, manufactured by: Tohto Kasei Co., Ltd., epoxy equivalent: 210, solid content: 75% by mass) were dissolved in a mixed solvent (room temperature) of 20 parts of dimethylformamide (DMF) and 6 parts of methyl ethyl ketone (MEK). In addition, 2 parts of dicyandiamide (DICY) (manufactured by Nippon Carbide Industries, Co., Inc.) and 0.1 parts of 2-ethyl-4-methylimidazole (product name: CUREZOL (registered trademark) 2E4MZ, manufactured by: Shikoku Chemicals Corporation) were added thereto, and they were mixed by stirring, thereby preparing a resin varnish.
Next, the resin varnish was cooled to room temperature, and 95 parts of the cooled resin varnish and 5 parts of the hollow particles were mixed by stirring with a dispersion mixer at 3000 rpm for 30 minutes, thereby obtaining the resin composition containing the hollow particles.

10-2. Production of hollow particle-containing prepreg

A glass cloth (product name: WEA116E, manufactured by: Nitto Boseki Co., Ltd.) was impregnated with the obtained resin composition containing the hollow particles. Then, the cloth was dried by heating at a temperature of from 150°C to 170°C for 3 minutes to 10 minutes, thereby obtaining a hollow particle-containing prepreg.

10-3. Production of hollow particle-containing, double-sided copper clad laminate

A copper foil having a thickness of 35 $\mu$m was disposed on both sides of the obtained hollow particle-containing prepreg. They were heated and pressed in the curing conditions of 180°C, 2 hours and 2.94 MPa (30 kg/cm$^2$) of pressure, thereby obtaining a double-sided copper clad laminate having a thickness of 0.13 mm, which included a cured layer containing the hollow particles and the copper foil disposed on both surfaces of the cured layer.

10-4. Reliability test

On the obtained, double-sided copper clad laminate, a HAST test was carried out by use of a high accelerated stress test chamber (manufactured by ESPEC Corp.) at a temperature of 110°C and a humidity of 85% RH for 100 hours. After the test, a voltage of 50 V was applied to the double-sided copper clad laminate for a predetermined time; the resistance of the laminate was measured; and the presence or absence of an abnormality was checked and evaluated in accordance with the following evaluation criteria I. In the case where a change occurred in the resistance, it was regarded as "abnormal". The change in the resistance is considered to be due to ion migration.

(Evaluation criteria I for performance stability)

AA: No abnormality occurred even after the voltage was applied for 400 hours.
A: No abnormality occurred even after the voltage was applied for 300 hours; however, an abnormality occurred before the voltage applying time reached 400 hours.
B: No abnormality occurred even after the voltage was applied for 200 hours; however, an abnormality occurred before the voltage applying time reached 300 hours.
C: An abnormality occurred before the voltage applying time reached 200 hours.
When the evaluation result of the evaluation criteria I for performance stability was AA, the performance stability of the hollow particles was further evaluated in accordance with the following evaluation criteria II.

(Evaluation criteria II for performance stability)

AAA: No abnormality occurred even after the voltage was applied for 500 hours.
AA: No abnormality occurred even after the voltage was applied for 400 hours; however, an abnormality occurred before the voltage applying time reached 500 hours.

[Table 1]

Table 1

| | | Example 1 | Example 2 | Example 3 | Example 4 |
|---|---|---|---|---|---|
| Polymerizable monomer | DVB (parts) | 37.5 | 37.5 | 37.5 | 37.5 |
| | EVB (parts) | 1.6 | 1.6 | 1.6 | 1.6 |
| | Crosslinkable monomer unit (%) | 96.0 | 96.0 | 96.0 | 96.0 |
| Polymerization step | Stirring power (kW/m$^3$) | 0.04 | 0.04 | 0.04 | 0.04 |
| | Polymerization reaction time (h) | 24 | 24 | 24 | 24 |

(continued)

| | | | Example 1 | Example 2 | Example 3 | Example 4 |
|---|---|---|---|---|---|---|
| Solvent re-moval step | | $N_2$ inlet | Bottom | Bottom | Vapor phase | Bottom |
| | | Stirring power (kW/m$^3$) | 0.04 | 0.04 | 0.04 | 0.04 |
| | | Pressure (kPa) | 40 | 40 | 40 | 101.3 |
| | | $N_2$ injection time (h) | 15 | 20 | 20 | 20 |
| | | Slurry circulation | Circulated | Circulated | Circulated | Circulated |
| | | Slurry spraying | Continuously sprayed | Not sprayed | Not sprayed | Not sprayed |
| | | Slurry spraying time(h) | 15 | 0 | 0 | 0 |
| | | Defoaming agent type | None | None | None | None |
| | | Defoaming agent amount (parts) | 0 | 0 | 0 | 0 |
| Washing step | | Washing time | 6 | 6 | 6 | 6 |
| | | Washing temperature (°C) | 25 | 25 | 25 | 25 |
| Drying step | | Inert gas type | None | None | None | None |
| | | Inert gas flow rate (L/min) | 0 | 0 | 0 | 0 |
| | | Pressure (kPa) | 4 | 4 | 4 | 4 |
| | | Drying temperature (°C) | 200 | 200 | 200 | 200 |
| | | Drying time (h) | 12 | 12 | 12 | 12 |
| Hollow particles | | Particle breakage | Absent | Absent | Absent | Absent |
| | | Irregular-shaped particles (%) | 2.5 | 3.4 | 2.8 | 3.0 |
| | | D50 (μm) | 2.6 | 2.9 | 2.9 | 2.8 |
| | | D95/D50 | 1.4 | 1.5 | 1.4 | 1.5 |
| | | Void ratio (%) | 70 | 70 | 70 | 70 |
| | | Aqueous dispersion electric conductivity (μS/cm) | 3.7 | 8.4 | 9.6 | 9.8 |
| | | Aqueous dispersion pH | 6.7 | 6.8 | 6.8 | 6.8 |
| | | Residual monomer amount (ppm) | 30 | 60 | 70 | 70 |
| | | Post THF extraction residue percentage (%) | 95 | 95 | 95 | 95 |
| | | Residual metal amount (ppm) | 12 | 27 | 31 | 32 |
| | | Dielectric dissipation factor @ 10 GHz | 3.24E-04 | 4.24E-04 | 7.24E-04 | 7.36E-04 |
| | | Relative permittivity @ 10 GHz | 1.35 | 1.36 | 1.37 | 1.36 |
| | | Performance stability I | AA | AA | A | A |
| | | Performance stability II | AA | AA | A | A |

Table 1-continued (1)

| | | Example 5 | Example 6 | Example 7 | Example 8 |
|---|---|---|---|---|---|
| Polymerizable monomer | DVB (parts) | 37.5 | 37.5 | 37.5 | 37.5 |
| | EVB (parts) | 1.6 | 1.6 | 1.6 | 1.6 |
| | Crosslinkable monomer unit (%) | 96.0 | 96.0 | 96.0 | 96.0 |
| Polymerization step | Stirring power (kW/m$^3$) | 0.04 | 0.04 | 0.04 | 0.04 |
| | Polymerization reaction time (h) | 24 | 24 | 24 | 60 |
| Solvent re-moval step | N$_2$ inlet | Bottom | Bottom | Bottom | Bottom |
| | Stirring power (kW/m$^3$) | 0.04 | 0.04 | 0.04 | 0.04 |
| | Pressure (kPa) | 40 | 40 | 200 | 40 |
| | N$_2$ injection time (h) | 20 | 10 | 20 | 0.5 |
| | Slurry circulation | Not circulated | Circulated | Circulated | Circulated |
| | Slurry spraying | Not sprayed | Not sprayed | Not sprayed | Not sprayed |
| | Slurry spraying time(h) | 0 | 0 | 0 | 0 |
| | Defoaming agent type | None | None | None | None |
| | Defoaming agent amount (parts) | 0 | 0 | 0 | 0 |
| Washing step | Washing time | 6 | 6 | 6 | 6 |
| | Washing temperature (°C) | 25 | 25 | 25 | 25 |
| Drying step | Inert gas type | None | None | None | None |
| | Inert gas flow rate (L/min) | 0 | 0 | 0 | 0 |
| | Pressure (kPa) | 4 | 4 | 4 | 4 |
| | Drying temperature (°C) | 200 | 200 | 200 | 200 |
| | Drying time (h) | 12 | 12 | 12 | 12 |
| Hollow particles | Particle breakage | Absent | Absent | Absent | Absent |
| | Irregular-shaped particles (%) | 2.6 | 3.3 | 2.7 | 3.2 |
| | D50 ($\mu$m) | 2.7 | 2.9 | 2.5 | 2.7 |
| | D95/D50 | 1.6 | 1.4 | 1.3 | 1.6 |
| | Void ratio (%) | 70 | 70 | 70 | 70 |
| | Aqueous dispersion electric con-ductivity ($\mu$S/cm) | 9.4 | 23.0 | 17.0 | 15.3 |
| | Aqueous dispersion pH | 6.8 | 7.1 | 7.0 | 6.9 |
| | Residual monomer amount (ppm) | 80 | 90 | 80 | 90 |
| | Post THF extraction residue percentage (%) | 95 | 95 | 95 | 95 |
| | Residual metal amount (ppm) | 30 | 74 | 55 | 49 |
| | Dielectric dissipation factor @ 10 GHz | 6.32E-04 | 8.21E-04 | 6.64E-04 | 9.54E-04 |
| | Relative permittivity @ 10 GHz | 1.34 | 1.35 | 1.36 | 1.36 |
| | Performance stability I | A | B | B | B |
| | Performance stability II | A | B | B | B |

Table 1-continued (2)

| | | Example 9 | Example 10 | Example 11 |
|---|---|---|---|---|
| Polymerizable monomer | DVB (parts) | 57.2 | 37.5 | 37.5 |
| | EVB (parts) | 2.4 | 1.6 | 1.6 |
| | Crosslinkable monomer unit (%) | 96.0 | 96.0 | 96.0 |
| Polymerization step | Stirring power (kW/m$^3$) | 0.04 | 0.04 | 0.04 |
| | Polymerization reaction time (h) | 24 | 24 | 24 |
| Solvent removal step | N$_2$ inlet | Bottom | Bottom | Bottom |
| | Stirring power (kW/m$^3$) | 0.04 | 0.57 | 0.04 |
| | Pressure (kPa) | 40 | 40 | 40 |
| | N$_2$ injection time (h) | 15 | 15 | 15 |
| | Slurry circulation | Circulated | Circulated | Circulated |
| | Slurry spraying | Continuously sprayed | Continuously sprayed | Continuously sprayed |
| | Slurry spraying time(h) | 15 | 15 | 15 |
| | Defoaming agent type | None | None | None |
| | Defoaming agent amount (parts) | 0 | 0 | 0 |
| Washing step | Washing time | 6 | 6 | 3 |
| | Washing temperature (°C) | 25 | 25 | 25 |
| Drying step | Inert gas type | None | None | None |
| | Inert gas flow rate (L/min) | 0 | 0 | 0 |
| | Pressure (kPa) | 4 | 4 | 4 |
| | Drying temperature (°C) | 200 | 200 | 200 |
| | Drying time (h) | 12 | 12 | 12 |
| Hollow particles | Particle breakage | Absent | Absent | Absent |
| | Irregular-shaped particles (%) | 3.3 | 6.7 | 2.8 |
| | D50 ($\mu$m) | 2.7 | 2.8 | 2.7 |
| | D95/D50 | 1.5 | 1.6 | 1.4 |
| | Void ratio (%) | 50 | 70 | 70 |
| | Aqueous dispersion electric conductivity ($\mu$S/cm) | 15.1 | 5.4 | 9.9 |
| | Aqueous dispersion pH | 6.9 | 6.7 | 6.7 |
| | Residual monomer amount (ppm) | 30 | 40 | 30 |
| | Post THF extraction residue percentage (%) | 95 | 95 | 95 |
| | Residual metal amount (ppm) | 49 | 17 | 42 |
| | Dielectric dissipation factor @ 10 GHz | 7.24E-04 | 7.42E-04 | 7.81E-04 |
| | Relative permittivity @ 10 GHz | 1.59 | 1.37 | 1.37 |
| | Performance stability I | B | AA | A |
| | Performance stability II | B | AA | A |

[Table 2]

Table 2

| | | Comparative Example 1 | Comparative Example 2 | Comparative Example 3 | Comparative Example 4 | Comparative Example 5 |
|---|---|---|---|---|---|---|
| Polymerizable monomer | DVB (parts) | 66.6 | 37.5 | 37.5 | 37.5 | 37.5 |
| | EVB (parts) | 2.8 | 1.6 | 1.6 | 1.6 | 1.6 |
| | Crosslinkable monomer unit (%) | 96.0 | 96.0 | 96.0 | 96.0 | 96.0 |
| Polymerization step | Stirring power $(kW/m^3)$ | 0.04 | 0.04 | 0.30 | 0.04 | 0.04 |
| | Polymerization reaction time (h) | 24 | 24 | 24 | 24 | 24 |
| Solvent removal step | $N_2$ inlet | Bottom | Bottom | Bottom | Bottom | Bottom |
| | Stirring power $(kW/m^3)$ | 0.04 | 0.04 | 0.30 | 0.04 | 0.04 |
| | Pressure (kPa) | 40 | 40 | 40 | 40 | 40 |
| | $N_2$ injection time (h) | 15 | 0.5 | 15 | 15 | 0.5 |
| | Slurry circulation | Circulated | Circulated | Circulated | Circulated | Circulated |
| | Slurry spraying | Continuously sprayed | Continuously sprayed | Continuously sprayed | Continuously sprayed | Continuously sprayed |
| | Slurry spraying time(h) | 15 | 0.5 | 15 | 15 | 0.5 |
| | Defoaming agent type | None | None | None | None | None |
| | Defoaming agent amount (parts) | 0 | 0 | 0 | 0 | 0 |
| Washing step | Washing time | 6 | 6 | 6 | 1 | 10 |
| | Washing temperature (°C) | 25 | 25 | 25 | 25 | 25 |
| Drying step | Inert gas type | None | None | None | None | None |
| | Inert gas flow rate (L/min) | 0 | 0 | 0 | 0 | 0 |
| | Pressure (kPa) | 4 | 4 | 4 | 4 | 4 |
| | Drying temperature (°C) | 200 | 200 | 200 | 200 | 200 |
| | Drying time (h) | 12 | 12 | 12 | 12 | 12 |

(continued)

| | | Comparative Example 1 | Comparative Example 2 | Comparative Example 3 | Comparative Example 4 | Comparative Example 5 |
|---|---|---|---|---|---|---|
| Hollow particles | Particle break-age | Absent | Absent | Present | Absent | Absent |
| | Irregular-shaped particles (%) | 3.4 | 3.2 | 15.4 | 3.0 | 3.1 |
| | D50 ($\mu$m) | 3.2 | 2.9 | 2.9 | 2.7 | 2.9 |
| | D95/D50 | 1.7 | 1.5 | 2.0 | 1.4 | 1.4 |
| | Void ratio (%) | 40 | 70 | 60 | 70 | 70 |
| | Aqueous dispersion electric conductivity ($\mu$S/cm) | 10.0 | 336.0 | 4.2 | 454.0 | 27.2 |
| | Aqueous dispersion pH | 6.8 | 8.1 | 6.7 | 8.5 | 7.2 |
| | Residual monomer amount (ppm) | 30 | 200 | 30 | 50 | 180 |
| | Post THF extraction residue percentage (%) | 95 | 95 | 95 | 95 | 95 |
| | Residual metal amount (ppm) | 32 | 1079 | 14 | 1458 | 87 |
| | Dielectric dissipation factor @ 10 GHz | 6.56E-03 | 4.88E-03 | 2.34E-03 | 2.10E-03 | 3.85E-03 |
| | Relative permittivity @ 10 GHz | 1.76 | 1.46 | 1.44 | 1.53 | 1.55 |
| | Performance stability I | A | C | AA | C | B |
| | Performance stability II | A | C | AA | C | B |

[Table 3]

Table 3

| | | Example 12 | Example 13 | Example 14 | Example 15 |
|---|---|---|---|---|---|
| Polymerizable monomer | DVB (parts) | 37.5 | 37.5 | 37.5 | 37.5 |
| | EVB (parts) | 1.6 | 1.6 | 1.6 | 1.6 |
| | Crosslinkable monomer unit (%) | 96.0 | 96.0 | 96.0 | 96.0 |
| Polymerization step | Stirring power (kW/m$^3$) | 0.04 | 0.04 | 0.04 | 0.04 |
| | Polymerization reaction time (h) | 24 | 24 | 24 | 24 |

(continued)

|  |  | Example 12 | Example 13 | Example 14 | Example 15 |
|---|---|---|---|---|---|
| Solvent removal step | N$_2$ inlet | Bottom | Bottom | Bottom | Bottom |
|  | Stirring power (kW/m$^3$) | 0.04 | 0.04 | 0.04 | 0.04 |
|  | Pressure (kPa) | 40 | 40 | 40 | 500 |
|  | N$_2$ injection time (h) | 15 | 15 | 15 | 15 |
|  | Slurry circulation | Circulated | Circulated | Circulated | Circulated |
|  | Slurry spraying | Continuously sprayed | Continuously sprayed | Continuously sprayed | Continuously sprayed |
|  | Slurry spraying time(h) | 15 | 15 | 15 | 15 |
|  | Defoaming agent type | Polyether-based defoaming agent | Mineral oil-based defoaming agent | Alcohol-based defoaming agent | Polyether-based defoaming agent |
|  | Defoaming agent amount (parts) | 0.19 | 0.38 | 0.03 | 0.19 |
| Washing step | Washing time | 6 | 6 | 6 | 6 |
|  | Washing temperature (°C) | 90 | 90 | 90 | 90 |
| Drying step | Inert gas type | N$_2$ | N$_2$ | N$_2$ | N$_2$ |
|  | Inert gas flow rate (L/min) | 400 | 400 | 400 | 400 |
|  | Pressure (kPa) | 4 | 4 | 4 | 4 |
|  | Drying temperature (°C) | 120 | 120 | 120 | 120 |
|  | Drying time (h) | 12 | 12 | 12 | 12 |

(continued)

| | | Example 12 | Example 13 | Example 14 | Example 15 |
|---|---|---|---|---|---|
| Hollow particles | Particle breakage | Absent | Absent | Absent | Absent |
| | Irregular-shaped particles (%) | 2.5 | 2.6 | 2.9 | 2.7 |
| | D50 ($\mu$m) | 2.4 | 2.5 | 2.6 | 2.8 |
| | D95/D50 | 1.4 | 1.5 | 1.4 | 1.5 |
| | Void ratio (%) | 70 | 70 | 70 | 70 |
| | Aqueous dispersion electric conductivity ($\mu$S/cm) | 3.2 | 3.6 | 4.0 | 3.4 |
| | Aqueous dispersion pH | 6.5 | 6.8 | 6.9 | 6.7 |
| | Residual monomer amount (ppm) | 10 | 20 | 30 | 25 |
| | Post THF extraction residue percentage (%) | 95 | 95 | 95 | 95 |
| | Residual metal amount (ppm) | 10 | 12 | 13 | 11 |
| | Dielectric dissipation factor @ 10 GHz | 2.87E-04 | 3.54E-04 | 4.65E-04 | 3.13E-04 |
| | Relative permittivity @ 10 GHz | 1.35 | 1.36 | 1.37 | 1.36 |
| | Performance stability I, II | AAA | AA | AA | AA |

Table 3-continued (1)

| | | Example 16 | Example 17 | Example 18 | Example 19 |
|---|---|---|---|---|---|
| Polymerizable monomer | DVB (parts) | 37.5 | 37.5 | 37.5 | 37.5 |
| | EVB (parts) | 1.6 | 1.6 | 1.6 | 1.6 |
| | Crosslinkable monomer unit (%) | 96.0 | 96.0 | 96.0 | 96.0 |
| Polymerization step | Stirring power (kW/m$^3$) | 0.04 | 0.04 | 0.04 | 0.04 |
| | Polymerization reaction time (h) | 24 | 24 | 24 | 24 |

(continued)

| | | Example 16 | Example 17 | Example 18 | Example 19 |
|---|---|---|---|---|---|
| Solvent removal step | $N_2$ inlet | Bottom | Bottom | Bottom | Bottom |
| | Stirring power (kW/m$^3$) | 0.04 | 0.04 | 0.04 | 0.04 |
| | Pressure (kPa) | 900 | 900 | 40 | 40 |
| | $N_2$ injection time (h) | 15 | 15 | 15 | 15 |
| | Slurry circulation | Circulated | Circulated | Circulated | Circulated |
| | Slurry spraying | Continuously sprayed | Continuously sprayed | Continuously sprayed | Continuously sprayed |
| | Slurry spraying time(h) | 15 | 15 | 15 | 15 |
| | Defoaming agent type | Polyether-based defoaming agent | None | Polyether-based defoaming agent | Polyether-based defoaming agent |
| | Defoaming agent amount (parts) | 0.19 | 0 | 0.19 | 0.19 |
| Washing step | Washing time | 6 | 6 | 6 | 6 |
| | Washing temperature (°C) | 90 | 90 | 50 | 90 |
| Drying step | Inert gas type | $N_2$ | $N_2$ | $N_2$ | $N_2$ |
| | Inert gas flow rate (L/min) | 400 | 400 | 400 | 200 |
| | Pressure (kPa) | 4 | 4 | 4 | 4 |
| | Drying temperature (°C) | 120 | 120 | 120 | 120 |
| | Drying time (h) | 12 | 12 | 12 | 12 |

(continued)

| | | Example 16 | Example 17 | Example 18 | Example 19 |
|---|---|---|---|---|---|
| Hollow particles | Particle breakage | Absent | Absent | Absent | Absent |
| | Irregular-shaped particles (%) | 3.1 | 2.6 | 2.7 | 2.9 |
| | D50 ($\mu$m) | 2.6 | 2.5 | 2.5 | 2.5 |
| | D95/D50 | 1.6 | 1.4 | 1.4 | 1.4 |
| | Void ratio (%) | 70 | 70 | 70 | 70 |
| | Aqueous dispersion electric conductivity ($\mu$S/cm) | 3.3 | 3.3 | 3.5 | 3.3 |
| | Aqueous dispersion pH | 6.7 | 6.5 | 6.5 | 6.6 |
| | Residual monomer amount (ppm) | 20 | 20 | 15 | 45 |
| | Post THF extraction residue percentage (%) | 95 | 95 | 95 | 95 |
| | Residual metal amount (ppm) | 11 | 11 | 11 | 11 |
| | Dielectric dissipation factor @ 10 GHz | 3.10E-04 | 3.05E-04 | 3.11E-04 | 3.04E-04 |
| | Relative permittivity @ 10 GHz | 1.36 | 1.35 | 1.35 | 1.36 |
| | Performance stability I, II | AA | AA | AA | A |

[Table 4]

Table 4

| | | Example 20 | Example 21 | Example 22 | Comparative Example 6 |
|---|---|---|---|---|---|
| Polymerizable monomer | DVB (parts) | 32.7 | 32.7 | | |
| | EVB (parts) | 1.4 | 1.4 | | |
| | Modified polyphenylene ether oligomer (parts) | 5 | | | |
| | Glycidyl methacrylate (parts) | | 5 | | |
| | Ethylene glycol dimethacrylate (parts) | | | 16.9 | 16.9 |
| | Styrene (parts) | | | 12.7 | 12.7 |
| | Methyl methacrylate (parts) | | | 12.7 | 12.7 |
| | Crosslinkable monomer unit (%) | 96.4 | 83.6 | 40.0 | 40.0 |

(continued)

| | | Example 20 | Example 21 | Example 22 | Comparative Example 6 |
|---|---|---|---|---|---|
| Hydrophobic solvent | Heptane (parts) | 60.8 | 60.8 | | |
| | Hexane (parts) | | | 57.6 | 57.6 |
| Polymerization step | Stirring power (kW/m$^3$) | 0.04 | 0.04 | 0.04 | 0.04 |
| | Polymerization reaction time (h) | 24 | 24 | 24 | 24 |
| Solvent removal step | $N_2$ inlet | Bottom | Bottom | Bottom | Bottom |
| | Stirring power (kW/m$^3$) | 0.04 | 0.04 | 0.04 | 0.04 |
| | Pressure (kPa) | 40 | 40 | 40 | 40 |
| | $N_2$ injection time (h) | 15 | 15 | 15 | 0.5 |
| | Slurry circulation | Circulated | Circulated | Circulated | Circulated |
| | Slurry spraying | Continuously sprayed | Continuously sprayed | Continuously sprayed | Continuously sprayed |
| | Slurry spraying time(h) | 15 | 15 | 15 | 0.5 |
| | Defoaming agent type | Polyether-based defoaming agent | Polyether-based defoaming agent | Polyether-based defoaming agent | None |
| | Defoaming agent amount (parts) | 0.19 | 0.19 | 0.19 | 0 |
| Washing step | Washing time | 6 | 6 | 6 | 1 |
| | Washing temperature (°C) | 90 | 90 | 90 | 25 |
| Drying step | Inert gas type | $N_2$ | $N_2$ | $N_2$ | None |
| | Inert gas flow rate (L/min) | 400 | 400 | 400 | 0 |
| | Pressure (kPa) | 4 | 4 | 4 | 4 |
| | Drying temperature (°C) | 120 | 120 | 120 | 200 |
| | Drying time (h) | 12 | 12 | 12 | 12 |

(continued)

| | | Example 20 | Example 21 | Example 22 | Comparative Example 6 |
|---|---|---|---|---|---|
| Hollow particles | Particle breakage | Absent | Absent | Absent | Absent |
| | Irregular-shaped particles (%) | 3.2 | 3.5 | 4.7 | 4.8 |
| | D50 ($\mu$m) | 3.2 | 2.8 | 4.6 | 5.2 |
| | D95/D50 | 1.6 | 1.5 | 1.2 | 1.3 |
| | Void ratio (%) | 70 | 68 | 71 | 70 |
| | Aqueous dispersion electric conductivity ($\mu$S/cm) | 5.7 | 17.3 | 12.5 | 534.0 |
| | Aqueous dispersion pH | 6.6 | 6.7 | 6.4 | 6.7 |
| | Residual monomer amount (ppm) | 35 | 35 | 40 | 65 |
| | Post THF extraction residue percentage (%) | 95 | 95 | 90 | 90 |
| | Residual metal amount (ppm) | 18 | 56 | 40 | 1715 |
| | Dielectric dissipation factor @ 10 GHz | 1.08E-03 | 7.66E-04 | 6.77E-03 | 1.07E-02 |
| | Relative permittivity @ 10 GHz | 1.43 | 1.36 | 1.38 | 1.39 |
| | Performance stability I, II | A | B | A | C |

In Tables 1 to 4, for simplification, the dielectric dissipation factor values are expressed by using the exponent notation defined in JIS X 0210. For example, the term "$3.24 \times 10^{-4}$" is expressed as "3.24E-04".

From the SEM observation results and the void ratio values, it was confirmed that the hollow particles obtained in the Examples and the Comparative Examples were spherical particles having only one hollow portion. Of the hollow particles obtained in each of the Examples, the number of the percentage of the particles having only one hollow portion was 90% or more.

[Consideration]

The hollow particles of Comparative Example 1 had a void ratio of less than 50%. Accordingly, the dielectric dissipation factor and relative permittivity of the hollow particles were high, and the dielectric property was poor.

In the hollow particles of Comparative Example 2, the content of the unreacted polymerizable monomer was more than 100 ppm. The aqueous dispersion of the hollow particles of Comparative Example 2, in which the hollow particles in a volumetric amount of 0.35 cm$^3$ are dispersed in 100 mL of deionized water, had an electric conductivity of more than 30 $\mu$S/cm. Accordingly, the dielectric dissipation factor of the hollow particles was high; an abnormality was likely to occur in the reliability test of the hollow particle-containing double-sided copper clad laminate; and the performance stability was poor. It was thought that in Comparative Example 2, since the hydrophobic solvent and the unreacted polymerizable monomer was not be sufficiently removed from the precursor particles in the solvent removal step, the washability in the washing step deteriorated, and the dispersion stabilizer (magnesium hydroxide) remaining in the hollow particles was not be sufficiently removed.

For the hollow particles of Comparative Example 3, the percentage of the particles having a circularity of 0.85 or less was more than 10% by mass. Accordingly, the dielectric dissipation factor of the hollow particles was high.

For, the hollow particles of Comparative Example 4, the electric conductivity was more than 30 $\mu$S/cm. Accordingly, the dielectric dissipation factor of the hollow particles of Comparative Example 4 was high; an abnormality was likely to occur in the reliability test of the hollow particle-containing double-sided copper clad laminate; and the performance stability was poor. It was thought that in Comparative Example 4, since the number of washing times was decreased in the washing step, the dispersion stabilizer (magnesium hydroxide) remaining in the hollow particles was not be sufficiently removed.

In the hollow particles of Comparative Example 5, the content of the unreacted polymerizable monomer was more than 100 ppm. Accordingly, the dielectric dissipation factor of the hollow particles was high. It was thought that in Comparative Example 5, the unreacted polymerizable monomer was not be sufficiently removed from the precursor particles in the solvent removal step.

Meanwhile, for the hollow particles of the Examples, the percentage of the particles having a circularity of 0.85 or less was 10% by mass or less; the void ratio was 50% or more; the content of the unreacted polymerizable monomer was 100 ppm or less; and the aqueous dispersion of the hollow particles, in which the hollow particles in a volumetric amount of 0.35 cm$^3$ were dispersed in 100 mL of deionized water, had an electric conductivity of 30 $\mu$S/cm or less. Accordingly, the dielectric dissipation factor of the hollow particles of the Examples was low. It was thought that in the Examples, since the hydrophobic solvent and the unreacted polymerizable monomer was sufficiently removed from the precursor particles in the solvent removal step, the washability in the washing step was excellent, and the dispersion stabilizer (magnesium hydroxide) remaining in the hollow particles and the unreacted polymerizable monomer was efficiently removed in the washing step. A comparison between Comparative Examples 2, 4 and 5 showed the following: compared to the case where the unreacted polymerizable monomer was more than 100 ppm and the electric conductivity was more than 30 $\mu$S/cm (Comparative Example 2), the dielectric dissipation factor decreased in both the case where the unreacted polymerizable monomer was decreased to 100 ppm or less (Comparative Example 4) and the case where the electric conductivity was decreased to 30 $\mu$S/cm or less (Comparative Example 5). In contrast, in the Examples, since the unreacted polymerizable monomer and the electric conductivity were decreased to 100 ppm or less and 30 $\mu$S/cm or less, respectively, the dielectric dissipation factor remarkably decreased by the synergy.

The hollow particles of the Examples were less likely to cause an abnormality in the reliability test of the hollow particle-containing double-sided copper clad laminate, and the performance stability was excellent.

Especially, in the hollow particles of Examples 1 to 5, 7, 9, 10 and 11, the content of the unreacted polymerizable monomer was 80 ppm or less; the electric conductivity of the aqueous dispersion of the hollow particles was 20 $\mu$S/cm or less; and the dielectric dissipation factor was lower. It was thought that in these Examples, since the hydrophobic solvent and the unreacted polymerizable monomer were much more removed from the precursor particles in the solvent removal step, the washability in the washing step was improved, and the dispersion stabilizer (magnesium hydroxide) remaining in the hollow particles and the unreacted polymerizable monomer were much more removed.

Also in Examples 1 to 5, 10 and 11, the content of the unreacted polymerizable monomer was 80 ppm; the electric conductivity of the aqueous dispersion of the hollow particles was 10 $\mu$S/cm or less; an abnormality was much less likely to occur in the reliability test of the hollow particle-containing double-sided copper clad laminate; and the performance stability was more excellent. It was thought that in these Examples, since the solvent removal step was carried out under a pressure of atmospheric pressure or less and since the bubbling time was long, the hydrophobic solvent and the unreacted polymerizable monomer were much more removed from the precursor particles in the solvent removal step; the washability in the washing step was more improved, accordingly; and the dispersion stabilizer (magnesium hydroxide) remaining in the hollow particles and the unreacted polymerizable monomer were much more removed.

In Example 11, even when the number of washing times was decreased in the washing step, the content of the unreacted polymerizable monomer and the electric conductivity of the aqueous dispersion of the hollow particles was decreased. Accordingly, it was revealed that the washability in the washing step was excellent.

Also, in the hollow particles of Examples 1 and 2, the content of the unreacted polymerizable monomer was 60 ppm or less; the electric conductivity of the aqueous dispersion of the hollow particles was 9 $\mu$S/cm or less; the percentage of the particles having a circularity of 0.85 or less was 5% by mass or less; the dielectric dissipation factor was lower; and the performance stability was excellent. It was thought that in these Examples, since the solvent removal step was carried out under reduced pressure and since the gas was introduced from the bottom of the stirring tank and bubbled into the precursor composition while circulating the precursor composition in the stirring apparatus, the hydrophobic solvent and the unreacted polymerizable monomer were much more removed from the precursor particles in the solvent removal step; the washability in the washing step was more improved, accordingly; and the dispersion stabilizer (magnesium hydroxide) remaining in the hollow particles and the unreacted polymerizable monomer were much more removed. Also, a comparison of Examples 1 and 2 to Example 10 showed the following: in Examples 1 and 2, since the stirring power was decreased during the solvent removal, the percentage of the particles having a circularity of 0.85 or less decreased and, as a result, the dielectric property improved.

As a result of comparing Example 1 to Example 2, the content of the unreacted polymerizable monomer in the hollow particles of Example 1 was smaller; the electric conductivity of the hollow particles thereof was lower; and the dielectric property thereof was more excellent. It was thought that since, in Example 1, the precursor composition was sprayed to the liquid surface of the precursor composition during the bubbling of the gas in the solvent removal step, the hydrophobic solvent and the unreacted polymerizable monomer were much more removed from the precursor particles than Example 2; the washability in the washing step was more improved, accordingly; and the dispersion stabilizer (magnesium hydroxide) remaining in the hollow particles and the unreacted polymerizable monomer were much more removed.

In Examples 12 to 19, by incorporating the defoaming agent in the precursor composition when bubbling the gas in the solvent removal step or by carrying out the solvent removal step under reduced pressure, the foaming of the precursor composition was suppressed, and the yield of the hollow particles was increased. In addition, by carrying out the washing step at high temperature, the washing efficiency was increased, and the dispersion stabilizer (magnesium hydroxide) remaining in the hollow particles and the unreacted polymerizable monomer were much more removed. In addition, by carrying out the drying step under a reduced pressure and under an inert gas flow, the drying efficiency was increased, and the drying step was carried out at a relatively low temperature of 120°C. In the hollow particles obtained in Examples 12 to 19, the content of the unreacted polymerizable monomer was 45 ppm or less; the electric conductivity of the aqueous dispersion of the hollow particles was 4.0 $\mu$S/cm or less; the content of the metal was 13 ppm or less; the dielectric dissipation factor was low; and the performance stability was excellent.

Especially, the hollow particles obtained in Examples 12 and 15 to 19, in each of which the polyether-based defoaming agent was used as the defoaming agent in the solvent removal step or the solvent removal step was carried out under pressure without the use of the defoaming agent, had a lower dielectric dissipation factor and more excellent performance stability. Meanwhile, the hollow particles obtained in Examples 13 and 14 had a relatively high dielectric dissipation factor among Examples 12 to 19. This was thought to be due to the influence of the residual mineral oil-based or alcohol-based defoaming agent. In the hollow particles obtained in Examples 12 and 15 to 18, the content of the unreacted polymerizable monomer was 25 ppm or less; the electric conductivity of the aqueous dispersion of the hollow particles was 3.5 $\mu$S/cm or less; the content of the metal was 15 ppm or less; and they were hollow particles having both particularly excellent dielectric property and performance stability.

In Examples 20 to 22, as with Example 12, the foaming of the precursor composition was suppressed by incorporating the polyether-based defoaming agent in the precursor composition when bubbling the gas in the solvent removal step; the washing efficiency was increased by carrying out the washing step at high temperature; and the drying efficiency was increased by carrying out the drying step under a reduced pressure and under an inert gas flow.

In Examples 20 and 21, by using the modified polyphenylene ether oligomer or the glycidyl methacrylate as the polymerizable monomer, the dielectric property and performance stability of the hollow particles were poor compared to the hollow particles obtained in Example 12. However, in the hollow particles obtained in Examples 20 and 21, the percentage of the particles having a circularity of 0.85 or less was 10% by mass or less; the void ratio of the hollow particles was 50% or more; the content of the unreacted polymerizable monomer was 100 ppm or less; and the electric conductivity of the aqueous dispersion of the hollow particles was 30 $\mu$S/cm or less. Accordingly, they were hollow particles which the dielectric dissipation factor was decreased and the performance stability was excellent, compared to hollow particles which were obtained by use of the same polymerizable monomer and which did not satisfy at least any of these characteristics.

In Example 22, by changing the type of the polymerizable monomer from Example 12, the dielectric property and performance stability of the hollow particles were poor compared to the hollow particles obtained in Example 12. However, in the hollow particles obtained in Example 22, the percentage of the particles having a circularity of 0.85 or less was 10% by mass or less; the void ratio of the hollow particles was 50% or more; the content of the unreacted polymerizable monomer was 100 ppm or less; and the electric conductivity of the aqueous dispersion of the hollow particles was 30 $\mu$S/cm or less. Accordingly, they were hollow particles which the dielectric dissipation factor was decreased and the performance stability was excellent, compared to hollow particles which were obtained by use of the same polymerizable monomer and which did not satisfy at least any of these characteristics. The hollow particles of Comparative Example 6 were those obtained by use of the same polymerizable monomer as Example 22, and the electric conductivity of the aqueous dispersion of the hollow particles was more than 30 $\mu$S/cm. Compared to the hollow particles of Comparative Example 6, the hollow particles of Example 22 were those having a much lower dielectric dissipation factor and improved performance stability.

[Example 23]

(1) Preparation of resin composition

First, 4 parts of 2-ethyl-4-methylimidazole (product name: CUREZOL 2E4MZ, manufactured by: Shikoku Chemicals Corporation), 17 parts of the hollow particles obtained in Example 1, and 50 parts of an inorganic filler (silica manufactured by Admatechs Company Limited) were added to 100 parts of a bisphenol A type liquid epoxy resin (product name: jER (registered trademark) 828, manufactured by: Mitsubishi Chemical Corporation, epoxy equivalent: 184 to 194). They were uniformly dispersed by a planetary centrifugal mixer (product name: MAZERUSTAR, manufactured by: Kurabo Industries Ltd.), thereby preparing the resin composition of Example 23.

(2) Production of resin film

An aluminum foil was attached to a glass plate without shrinkage. On the attached aluminum foil, the resin composition obtained in the above (1) was applied by use of bar coater No. 75 to form a coating film. Under a nitrogen atmosphere, the coating film was cured by heating at 150°C for three hours, thereby forming a cured resin layer on the aluminum foil. The thus-obtained laminate of the cured resin layer and the aluminum foil was immersed overnight in a 1 N hydrochloric acid aqueous solution to remove the aluminum foil, thereby obtaining the cured resin layer only. The obtained cured resin layer was washed with deionized water and dried, thereby obtaining a resin film. The content of the hollow particles in the obtained resin film was 40% by volume with respect to 100% by volume of the resin film.

(3) Production of prepreg

A glass cloth (product name: WEA116E, manufactured by: Nitto Boseki Co., Ltd.) was impregnated with the resin composition obtained in the above (1). Then, the cloth was dried by heating at a temperature of from 150°C to 170°C for 3 minutes to 10 minutes, thereby obtaining a hollow particle-containing prepreg.

(4) Production of double-sided copper clad laminate

A copper foil having a thickness of 35 $\mu$m was disposed on both sides of the prepreg obtained in the above (3). They were heated and pressed in the curing conditions of 180°C, 2 hours and 2.94 MPa (30 kg/cm$^2$) of pressure, thereby obtaining a double-sided copper clad laminate having a thickness of 0.13 mm, which included a cured layer containing the hollow particles and the copper foil disposed on both surfaces of the cured layer.

[Example 24]

The resin composition, resin film, prepreg and double-sided copper clad laminate of Example 24 were produced in the same manner as Example 23, except that the hollow particles obtained in Example 12 were used instead of the hollow particles obtained in Example 1.
The content of the hollow particles in the obtained resin film was 40% by volume with respect to 100% by volume of the resin film.

[Example 25]

The resin composition, resin film, prepreg and double-sided copper clad laminate of Example 25 were produced in the same manner as Example 23, except that the hollow particles obtained in Example 20 were used instead of the hollow particles obtained in Example 1.
The content of the hollow particles in the obtained resin film was 40% by volume with respect to 100% by volume of the resin film.

[Example 26]

The resin composition, resin film, prepreg and double-sided copper clad laminate of Example 26 were produced in the same manner as Example 23, except that the hollow particles obtained in Example 21 were used instead of the hollow particles obtained in Example 1.
The content of the hollow particles in the obtained resin film was 40% by volume with respect to 100% by volume of the resin film.

[Example 27]

The resin composition, resin film, prepreg and double-sided copper clad laminate of Example 27 were produced in the same manner as Example 23, except that the hollow particles obtained in Example 22 were used instead of the hollow particles obtained in Example 1.
The content of the hollow particles in the obtained resin film was 37% by volume with respect to 100% by volume of the resin film.

[Comparative Example 7]

The resin composition, resin film, prepreg and double-sided copper clad laminate of Comparative Example 7 were produced in the same manner as Example 23, except that the hollow particles obtained in Example 1 were not added.

[Example 28]

(1) Preparation of resin composition

First, 90 parts of a brominated epoxy resin solution (product name: YDB-500EK75, manufactured by: Tohto Kasei Co., Ltd., epoxy equivalent: 500, solid content: 75% by mass) and 10 parts of a cresol novolac type epoxy resin solution (product name: YDCN220EK75, manufactured by: Tohto Kasei Co., Ltd., epoxy equivalent: 210, solid content: 75% by mass) were dissolved in a mixed solvent (room temperature) of 20 parts of dimethylformamide (DMF) and 6 parts of methyl ethyl ketone (MEK). In addition, 2 parts of dicyandiamide (DICY) (manufactured by Nippon Carbide Industries, Co., Inc.) and 0.1 parts of 2-ethyl-4-methylimidazole (product name: CUREZOL 2E4MZ, manufactured by: Shikoku Chemicals Corporation) were added thereto, and they were mixed by stirring, thereby preparing a resin varnish.

Next, the resin varnish was cooled to room temperature, and 95 parts of the cooled resin varnish and 5 parts of the hollow particles were mixed by stirring with a dispersion mixer at 3000 rpm for 30 minutes, thereby obtaining the resin composition of Example 28. The brominated epoxy resin amount and the cresol novolac type epoxy resin amount with respect to 5 parts of the hollow particles were as shown in Table 5.

(2) Production of resin film

An aluminum foil was attached to a glass plate without shrinkage. On the attached aluminum foil, the resin composition obtained in the above (1) was applied by use of bar coater No. 75 to form a coating film. Under a nitrogen atmosphere, the coating film was cured by heating at 80°C for one hour, 120°C for 30 minutes, 160°C for 30 minutes, and then 200°C for one hour, thereby forming a cured resin layer on the aluminum foil. The thus-obtained laminate of the cured resin layer and the aluminum foil was immersed overnight in a 1 N hydrochloric acid aqueous solution to remove the aluminum foil, thereby obtaining the cured resin layer only. The obtained cured resin layer was washed with deionized water and dried, thereby obtaining a resin film. The content of the hollow particles in the obtained resin film was 30% by volume with respect to 100% by volume of the resin film.

(3) Production of prepreg

A hollow particle-containing prepreg was obtained in the same manner as Example 23, by use of the resin composition obtained in the above (1).

(4) Production of double-sided copper clad laminate

A double-sided copper clad laminate was obtained in the same manner as Example 23, by use of the prepreg obtained in the above (3).

[Example 29]

The resin composition, resin film, prepreg and double-sided copper clad laminate of Example 29 were produced in the same manner as Example 28, except that the hollow particles obtained in Example 12 were used instead of the hollow particles obtained in Example 1.

The content of the hollow particles in the obtained resin film was 30% by volume with respect to 100% by volume of the resin film.

[Example 30]

The resin composition, resin film, prepreg and double-sided copper clad laminate of Example 30 were produced in the same manner as Example 28, except that the hollow particles obtained in Example 12 were used instead of the hollow particles obtained in Example 1, and 67.5 parts of an alicyclic epoxy resin 1 (product name: CELLOXIDE 2021P, manufactured by: Daicel Corporation) was used instead of 90 parts of the brominated epoxy resin solution.

The alicyclic epoxy resin 1 amount and the cresol novolac type epoxy resin amount with respect to 5 parts of the hollow particles, were as shown in Table 5.

The content of the hollow particles in the obtained resin film was 20% by volume with respect to 100% by volume of the resin film.

[Example 31]

The resin composition, resin film, prepreg and double-sided copper clad laminate of Example 31 were produced in the same manner as Example 28, except that the hollow particles obtained in Example 12 were used instead of the hollow particles obtained in Example 1, and 67.5 parts of an alicyclic epoxy resin 2 (product name: CYCLOMER M100, manufactured by: Daicel Corporation) was used instead of 90 parts of the brominated epoxy resin solution.

The alicyclic epoxy resin 2 amount and the cresol novolac type epoxy resin amount with respect to 5 parts of the hollow particles, were as shown in Table 5.

The content of the hollow particles in the obtained resin film was 20% by volume with respect to 100% by volume of the resin film.

[Example 32]

(1) Preparation of resin composition

First, 20 parts of a solution of modified polyphenylene ether in toluene, which was modified by a functional group including a vinyl group (product name: OPE-1200, manufactured by: Mitsubishi Gas Chemical Company, Inc., iodine value: 43 g/100 g, number average molecular weight: 1200, solid content: 65% by mass) was weighed in a cup. Next, 11 parts of the hollow particles obtained in Example 1, 13 parts of an inorganic filler (silica manufactured by Admatechs Company Limited) and 0.15 parts of dicumyl peroxide (product name: PERCUMYL D, manufactured by: NOF Corporation) were added thereto and uniformly dispersed by a planetary centrifugal mixer (product name: MAZERUSTAR, manufactured by: Kurabo Industries Ltd.), thereby preparing the resin composition of Example 32.

(2) Production of resin film

An aluminum foil was attached to a glass plate without shrinkage. On the attached aluminum foil, the resin composition obtained in the above (1) was applied by use of bar coater No. 75 to form a coating film. Under a nitrogen atmosphere, the coating film was cured by heating at 80°C for one hour, 120°C for 30 minutes, 160°C for 30 minutes, and then 200°C for one hour, thereby forming a cured resin layer on the aluminum foil. The thus-obtained laminate of the cured resin layer and the aluminum foil was immersed overnight in a 1 N hydrochloric acid aqueous solution to remove the aluminum foil, thereby obtaining the cured resin layer only. The obtained cured resin layer was washed with deionized water and dried, thereby obtaining a resin film. The content of the hollow particles in the obtained resin film was 75% by volume with respect to 100% by volume of the resin film.

(3) Production of prepreg

A hollow particle-containing prepreg was obtained in the same manner as Example 23, by use of the resin composition obtained in the above (1).

(4) Production of double-sided copper clad laminate

A double-sided copper clad laminate was obtained in the same manner as Example 23, by use of the prepreg obtained in the above (3).

[Relative permittivity (Dk) and dielectric dissipation factor (Df) of resin film]

Using a perturbation-type measuring device (manufactured by: AET Inc., model: ADMS01Nc), the relative permittivity and dielectric dissipation factor of the resin film were measured at a frequency of 10 GHz and room temperature(25°C), and they were evaluated in accordance with the following evaluation criteria. The evaluation results are shown in Table 5.

(Evaluation criteria for the relative permittivity (Dk) of Examples 23 to 31 and Comparative Example 7)

A: Less than 2.35
B: 2.35 Or more and less than 2.38
C: 2.38 Or more and less than 2.41
D: 2.41 Or more

(Evaluation criteria for the dielectric dissipation factor (Df) of Examples 23 to 31 and Comparative Example 7)

A: Less than $9.70 \times 10^{-3}$
B: $9.70 \times 10^{-3}$ Or more and less than $1.20 \times 10^{-2}$
C: $1.20 \times 10^{-2}$ Or more and less than $1.70 \times 10^{-2}$
D: $1.70 \times 10^{-2}$ Or more

(Evaluation criteria for the relative permittivity (Dk) of

Example 32)

A: Less than 2.18
B: 2.18 Or more and less than 2.23
C: 2.23 Or more and less than 2.28
D: 2.28 Or more

(Evaluation criteria for the dielectric dissipation factor (Df) of Example 32)

A: Less than $1.50 \times 10^{-3}$
B: $1.50 \times 10^{-3}$ Or more and less than $2.00 \times 10^{-3}$
C: $2.00 \times 10^{-3}$ Or more and less than $2.45 \times 10^{-3}$
D: $2.45 \times 10^{-3}$ Or more

[Reliability test on double-sided copper clad laminate]

On the obtained, double-sided copper clad laminate, a reliability test was carried out in the same manner as the above-mentioned "10-4. Reliability test". The presence or absence of an abnormality was checked, and the reliability was evaluated in accordance with the following evaluation criteria. The evaluation result is shown in Table 5.

(Evaluation criteria for reliability)

AAA: No abnormality occurred even after the voltage was applied for 500 hours.
AA: No abnormality occurred even after the voltage was applied for 400 hours; however, an abnormality occurred before the voltage applying time reached 500 hours.
A: No abnormality occurred even after the voltage was applied for 300 hours; however, an abnormality occurred before the voltage applying time reached 400 hours.
B: No abnormality occurred even after the voltage was applied for 200 hours; however, an abnormality occurred before the voltage applying time reached 300 hours.
C: An abnormality occurred before the voltage applying time reached 200 hours.

[Table 5]

Table 5

| | | | Example 23 | Example 24 | Example 25 | Example 26 | Example 27 | Comparative Example 7 |
|---|---|---|---|---|---|---|---|---|
| Resin composition | Hollow particles | Type | Example 1 | Example 12 | Example 20 | Example 21 | Example 22 | None |
| | | Amount (parts) | 17 | 17 | 17 | 17 | 17 | 0 |
| | | Relative permittivity @ 10 GHz | 1.35 | 1.35 | 1.43 | 1.36 | 1.38 | |
| | | Dielectric dissipation factor @ 10 GHz | 3.24E-04 | 2.87E-04 | 1.08E-03 | 7.66E-04 | 6.77E-03 | |
| | Matrix resin | Bisphenol A type epoxy resin (parts) | 100.0 | 100.0 | 100.0 | 100.0 | 100.0 | 100.0 |
| | | Modified polyphenylene ether (parts) | | | | | | |
| | | Brominated epoxy resin (parts) | | | | | | |
| | | Cresol novolac type epoxy resin (parts) | | | | | | |
| | | Alicyclic epoxy resin 1 (parts) | | | | | | |
| | | Alicyclic epoxy resin 2 (parts) | | | | | | |
| | Inorganic filler | Type | Silica | Silica | Silica | Silica | Silica | Silica |
| | | Amount (parts) | 50.0 | 50.0 | 50.0 | 50.0 | 50.0 | 50.0 |
| Evaluation | | Reliability test | AA | AAA | A | B | B | AAA |
| | | Relative permittivity @ 10 GHz | A | A | B | A | A | D |
| | | Dielectric dissipation factor @ 10 GHz | A | A | B | B | B | C |

Table 5-continued (1)

| | | | Example 28 | Example 29 | Example 30 | Example 31 | Example 32 |
|---|---|---|---|---|---|---|---|
| Resin composition | Hollow particles | Type | Example 1 | Example 12 | Example 12 | Example 12 | Example 12 |
| | | Amount (parts) | 5 | 5 | 5 | 5 | 11 |
| | | Relative permittivity @ 10 GHz | 1.35 | 1.35 | 1.35 | 1.35 | 1.35 |
| | | Dielectric dissipation factor @ 10 GHz | 3.24E-04 | 2.87E-04 | 2.87E-04 | 2.87E-04 | 2.87E-04 |
| | Matrix resin | Bisphenol A type epoxy resin (parts) | | | | | |
| | | Modified polyphenylene ether (parts) | | | | | 7.0 |
| | | Brominated epoxy resin (parts) | 50.1 | 50.1 | | | |
| | | Cresol novolac type epoxy resin (parts) | 5.6 | 5.6 | 6.7 | 6.7 | |
| | | Alicyclic epoxy resin 1 (parts) | | | 60.7 | | |
| | | Alicyclic epoxy resin 2 (parts) | | | | 60.7 | |
| | Inorganic filler | Type | None | None | None | None | Silica |
| | | Amount (parts) | 0.0 | 0.0 | 0.0 | 0.0 | 13.0 |
| Evaluation | | Reliability test | AA | AAA | A | A | A |
| | | Relative permittivity @ 10 GHz | D | D | A | A | A |
| | | Dielectric dissipation factor @ 10 GHz | B | B | B | B | A |

[Consideration]

Since the resin composition and resin structure obtained in Examples 23 to 27 contained the hollow particles of the present disclosure, compared to the resin composition and resin structure of Comparative Example 7 having the same composition (except for not containing the hollow particles), the resin composition and resin structure of Examples 23 to 27 were those which the relative permittivity and the dielectric dissipation factor were decreased and a decrease in the reliability was suppressed.

Since the resin composition and resin structure obtained in Examples 28 to 32 also contained the hollow particles of the present disclosure, compared to the resin composition and resin structure having the same composition (except for not containing the hollow particles), the resin composition and resin structure of Examples 28 to 32 were those which the relative permittivity and the dielectric dissipation factor were decreased and a decrease in the reliability was suppressed.

Reference Signs List

1. Aqueous medium
**2.** Low polarity material
**3.** Monomer composition droplet
4a. Hydrophobic solvent
4b. Material not containing hydrophobic solvent
5. Precursor particle
6. Shell
7. Hollow portion
10A. Hollow particles after solvent removal step
10B. Hollow particles after washing step
11. Stirring tank
12. Supply tank
13a, 13b, 13c. Gas inlet
14. Outlet
15. Spray mechanism
16. Supply line to stirring tank
17a, 17b. Circulation line
20. Precursor composition
21. Vapor phase

**Claims**

1. Hollow particles comprising a shell, which contains a resin, and a hollow portion surrounded by the shell,

   wherein a percentage of particles having a circularity of 0.85 or less is 10% by mass or less;
   wherein a void ratio is 50% or more;
   wherein a content of an unreacted polymerizable monomer is 100 ppm or less; and
   wherein an electric conductivity of an aqueous dispersion of the hollow particles, in which the hollow particles in a volumetric amount of 0.35 cm$^3$ are dispersed in 100 mL of deionized water, is 30 $\mu$S/cm or less.

2. The hollow particles according to Claim 1, wherein the shell contains a polymer as the resin, and in 100% by mass of all monomer units of the polymer, a content of a crosslinkable monomer unit is 60% by mass or more.

3. The hollow particles according to Claim 1, wherein the shell contains a polymer as the resin, and in 100% by mass of all monomer units of the polymer, a content of a crosslinkable monomer unit is less than 60% by mass, and a content of an aromatic hydrocarbon monomer unit is more than 20% by mass.

4. The hollow particles according to any one of Claims 1 to 3, wherein, when the hollow particles having a mass M1 are refluxed for 6 hours in a Soxhlet extractor using tetrahydrofuran as a solvent to obtain an extract and when a residue obtained by removal of the tetrahydrofuran from the extract has a mass M2, a post THF extraction residue percentage which is obtained as a percentage of M2 relative to M1, is 80% or more.

5. The hollow particles according to any one of Claims 1 to 3, wherein a content of a metal is 100 ppm or less.

6. The hollow particles according to Claim 1 or 2, wherein a dielectric dissipation factor at a frequency of 10 GHz is 1.00 $\times$ 10$^{-3}$ or less.

7. The hollow particles according to Claim 1 or 3, wherein a dielectric dissipation factor at a frequency of 10 GHz is more than 1.00 $\times$ 10$^{-3}$ and 1.00 $\times$ 10$^{-2}$ or less.

8. The hollow particles according to any one of Claims 1 to 3, wherein a relative permittivity at a frequency of 10 GHz is 1.00 or more and 1.60 or less.

9. A method for producing the hollow particles defined by Claim 1,
   the method comprising:

   preparing a mixture liquid containing a polymerizable monomer, a hydrophobic solvent, a polymerization initiator, a dispersion stabilizer and an aqueous medium,

suspending the mixture liquid to prepare a suspension in which droplets of a monomer composition containing the polymerizable monomer, the hydrophobic solvent and the polymerization initiator are dispersed in the aqueous medium,

subjecting the suspension to a polymerization reaction to prepare a precursor composition in which precursor particles comprising a shell, which contains a resin, and a hollow portion surrounded by the shell and filled with the hydrophobic solvent, are dispersed in the aqueous medium,

removing the hydrophobic solvent from the precursor particles to obtain an aqueous dispersion of the hollow particles, by bubbling a gas into the precursor composition while stirring the precursor composition in a stirring tank, and

washing the hollow particles for removal of the dispersion stabilizer remaining therein.

10. The method for producing the hollow particles according to Claim 9, wherein the washing is carried out at 10°C or more and 90°C or less.

11. The method for producing the hollow particles according to Claim 9 or 10,

wherein the method further comprises drying the washed hollow particles for removal of residual water after the washing, and

wherein the drying is carried out under a reduced pressure and under an inert gas flow.

12. The method for producing the hollow particles according to Claim 9 or 10, wherein the gas is bubbled into the precursor composition for two hours or more.

13. The method for producing the hollow particles according to Claim 9 or 10, wherein a stirring power for stirring the precursor composition is 0.01 kW/m$^3$ or more and 0.60 kW/m$^3$ or less.

14. The method for producing the hollow particles according to Claim 9 or 10, wherein the gas is bubbled into the precursor composition under a pressure of 20 kPa or more and 300 kPa or less.

15. The method for producing the hollow particles according to Claim 9 or 10, wherein the gas is bubbled into the precursor composition under a pressure of 20 kPa or more and atmospheric pressure or less.

16. The method for producing the hollow particles according to Claim 9 or 10, wherein the gas is bubbled into the precursor composition under a pressure of more than atmospheric pressure and 2000 kPa or less.

17. The method for producing the hollow particles according to Claim 9 or 10, wherein, when bubbling the gas into the precursor composition, the precursor composition contains a defoaming agent.

18. The method for producing the hollow particles according to Claim 9 or 10, wherein, when bubbling the gas into the precursor composition, the gas is introduced from a bottom of the stirring tank containing the precursor composition.

19. The method for producing the hollow particles according to Claim 9 or 10, wherein, during the bubbling of the gas into the precursor composition, a cycle of supplying the precursor composition from a supply tank to the stirring tank, stirring the precursor composition in the stirring tank and then discharging the precursor composition to the supply tank, is repeated to circulate the precursor composition in a stirring apparatus.

20. The method for producing the hollow particles according to Claim 9 or 10, wherein the stirring tank containing the precursor composition contains a liquid phase, which contains the precursor composition, and a vapor phase, and a part of the precursor composition is supplied from the stirring tank to a spray mechanism and sprayed to a liquid surface of the precursor composition in the stirring tank when bubbling the gas into the precursor composition.

21. A resin composition comprising a matrix resin and the hollow particles defined by any one of Claims 1 to 8.

22. The resin composition according to Claim 21, wherein, in a total solid content (100% by mass) of the resin composition, a content of the hollow particles is 0.1% by mass or more and 30% by mass or less.

23. The resin composition according to Claim 21, wherein the matrix resin contains an epoxy compound.

24. A resin structure comprising a matrix resin and the hollow particles defined by any one of Claims 1 to 8.

25. A resin structure which is a cured product of the resin composition defined by Claim 21.

FIG. 1

FIG. 2

## INTERNATIONAL SEARCH REPORT

| International application No. |
|---|
| **PCT/JP2023/038459** |

**A. CLASSIFICATION OF SUBJECT MATTER**

*C08F 2/18*(2006.01)i; *C08F 6/24*(2006.01)i
FI: C08F2/18; C08F6/24

According to International Patent Classification (IPC) or to both national classification and IPC

**B. FIELDS SEARCHED**

Minimum documentation searched (classification system followed by classification symbols)

C08F2/18; C08F6/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/107674 A1 (ZEON CORP.) 27 May 2022 (2022-05-27)<br>claims, examples | 1-25 |
| A | WO 2022/071276 A1 (ZEON CORP.) 07 April 2022 (2022-04-07)<br>claims, examples | 1-25 |
| A | WO 2022/092076 A1 (ZEON CORP.) 05 May 2022 (2022-05-05)<br>claims, examples | 1-25 |
| A | JP 2000-315845 A (JSR CORP.) 14 November 2000 (2000-11-14)<br>claims, examples | 1-25 |
| P, A | WO 2023/106307 A1 (ZEON CORP.) 15 June 2023 (2023-06-15)<br>claims, examples | 1-25 |
| P, A | WO 2023/106326 A1 (ZEON CORP.) 15 June 2023 (2023-06-15)<br>claims, examples | 1-25 |
| P, A | WO 2023/074651 A1 (ZEON CORP.) 04 May 2023 (2023-05-04)<br>claims, examples | 1-25 |

☐ Further documents are listed in the continuation of Box C.   ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 January 2024** | **16 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/038459**

| Patent document cited in search report | | | Publication date (day/month/year) | Patent family member(s) | | | Publication date (day/month/year) |
|---|---|---|---|---|---|---|---|
| WO | 2022/107674 | A1 | 27 May 2022 | CN | 116406398 | A | |
| WO | 2022/071276 | A1 | 07 April 2022 | CN | 116209682 | A | |
| WO | 2022/092076 | A1 | 05 May 2022 | CN | 116390958 | A | |
| JP | 2000-315845 | A | 14 November 2000 | (Family: none) | | | |
| WO | 2023/106307 | A1 | 15 June 2023 | (Family: none) | | | |
| WO | 2023/106326 | A1 | 15 June 2023 | (Family: none) | | | |
| WO | 2023/074651 | A1 | 04 May 2023 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022071276 A

- WO 2021112117 A

**Non-patent literature cited in the description**

- Kagaku Binran, Kiso Hen, Kaitei 4 Ban. Maruzen Publishing Co., Ltd., 30 September 1993